(19) **Europäisches Patentamt**
**European Patent Office**
**Office européen des brevets**

(11) **EP 2 165 487 B1**

(12) **EUROPEAN PATENT SPECIFICATION**

(45) Date of publication and mention
of the grant of the patent:
**04.04.2012 Bulletin 2012/14**

(51) Int Cl.:
***H04L 12/56*** (2006.01)  ***H04B 3/54*** (2006.01)
***H04L 12/403*** (2006.01)  ***H04L 29/06*** (2006.01)

(21) Application number: **08756707.9**

(22) Date of filing: **04.06.2008**

(86) International application number:
**PCT/US2008/065831**

(87) International publication number:
**WO 2008/151261 (11.12.2008 Gazette 2008/50)**

(54) **MANAGING COMMUNICATIONS OVER A SHARED MEDIUM**

VERWALTUNG DER KOMMUNIKATION ÜBER EIN GEMEINSAM BENUTZTES MEDIUM

GESTION DE COMMUNICATIONS SUR UN SUPPORT PARTAGÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **04.06.2007 US 941949 P**
**07.01.2008 US 970297**
**07.01.2008 US 970323**
**07.01.2008 US 970339**
**07.01.2008 US 970271**
**09.01.2008 US 971446**
**23.04.2008 US 108334**

(43) Date of publication of application:
**24.03.2010 Bulletin 2010/12**

(73) Proprietor: **Qualcomm Atheros, Inc.
San Jose, CA 95110 (US)**

(72) Inventors:
• **YONGE III, Lawrence W.
Ocala, Florida 34480 (US)**
• **KATAR, Srinivas
Gainesville, Florida 32608 (US)**
• **KRISHNAM, Manjunath
Gainesville, Florida 32608 (US)**

(74) Representative: **Wegner, Hans et al
Bardehle Pagenberg
Prinzregentenplatz 7
81675 München (DE)**

(56) References cited:
**EP-A- 1 748 597**    **US-A1- 2003 048 183**
**US-A1- 2003 137 993**

**Description**

**TECHNICAL FIELD**

The invention relates to managing communications over a shared medium.

**BACKGROUND**

A network of communication stations can share a communication medium (e.g., wires connecting multiple stations or spectrum for transmitting radio signals among stations) using any of a variety of access techniques. Some access techniques (e.g., carrier sense multiple access (CSMA) techniques) include a contention period in which stations contend for use of the medium for transmitting a signal by sensing when the medium is idle. In CSMA techniques, "collisions" sometimes occur when signals from two or more stations overlap. Some CSMA techniques attempt to detect collisions and abort transmission to reduce the negative impact of collisions (e.g., CSMA/CD techniques). Other CSMA techniques include mechanisms to avoid or reduce the probability of collisions (e.g., CSMA/CA techniques). For example, different transmissions may be assigned one of multiple priorities. Access is granted using a Priority Resolution Period in which stations signal the priority at which they intend to transmit, and only the highest priority transmissions are allowed to continue in the contention process. A random backoff mechanism spreads the time over which stations attempt to transmit, thereby reducing the probability of collision.

A network of communication stations can use any of a variety of clock recovery techniques to correct for clock error before decoding a packet or data stream. Various techniques for clock recovery are based on detecting portions of transmitted signals (e.g., a preamble that can also be used to detect the start of a data packet). For example, Digital Video Broadcasting (DVB) standards for digital television include techniques for clock recovery based on a continuous stream including pilot carriers that can be used to synchronize a local phase-locked loop used for decoding the stream. However, such techniques may not be appropriate in networks in which multiple stations may be transmitting data.

A network of communication stations can share a communication medium (e.g., wires connecting multiple stations or spectrum for transmitting radio signals among stations) using any of a variety of access techniques. Some access techniques (e.g., carrier sense multiple access (CSMA) techniques) include a contention period in which stations contend for use of the medium for transmitting a signal by sensing when the medium is idle. In CSMA techniques, "collisions" sometimes occur when signals from two or more stations overlap. Some channel access techniques can also provide a contention free period in which a specific station or stream is provided exclusive control of the medium. Channel access techniques are used to provide varying levels of Quality of Service (QoS). For example, contention based channel access may be used to provide best-effort service while contention free channel access may be used to provide guaranteed QoS (bandwidth, latency, jitter and packet loss probability). Stations can have traffic flows that are intended for different destination and with varying levels of QoS requirements. Providing separate channel access for each traffic flow is inefficient due to the overhead required for each channel access. However, providing a single channel access for all traffic flows intended for the same destination results in degradation of Quality of Service.

Communication networks enable stations belonging to the same network to exchange information. The physical layer of the communication systems exchange signals that encode information to be exchanged between stations. Due to the attenuation and noise on the communication medium, the range of the physical layer signals is limited. In a scenario where one or more stations cannot directly communicate with each other using the physical layer signals, routing and repeating at the higher layer (like a MAC layer or an IP layer) is used to extend the range of the network. Routing protocols enable the selection stations that are the best candidates for retransmitting (repeating) the information. Distance vector based routing and Link State based routing are two well known routing protocols, but other routing protocols or modifications of known protocols can provide superior performance in some networking scenarios.

A network of communication stations can share a communication medium (e.g., wires connecting multiple stations or spectrum for transmitting radio signals among stations) using any of a variety of access techniques. Some access techniques (e.g., carrier sense multiple access (CSMA) techniques) include a contention period in which stations contend for use of the medium for transmitting a signal by sensing when the medium is idle. In CSMA techniques, "collisions" sometimes occur when signals from two or more stations overlap. Some CSMA techniques attempt to detect collisions and abort transmission to reduce the negative impact of collisions (e.g., CSMA/CD techniques). Other CSMA techniques include mechanisms to avoid or reduce the probability of collisions (e.g., CSMA/CA techniques). Other channel access techniques such as Time Division Multiple Access (TDMA), Polling, Token passing, Token ring etc., can also be used for sharing the medium. In certain environments, due to signal attenuation/distortion and noise, each station in the network may not be able to communicate directly all other stations in the network. In such cases, one or more stations in the network that can hear a signal from a transmitting station can retransmit the signal so that it can be received at stations incapable of hearing the original transmission. Multicast and broadcast transmissions may also need to be repeated to ensure that all members of the group receive the message. However, retransmission of multicast and broadcast transmissions may result in inefficiencies and duplicate copies of the message being received at the station.

Several communication systems use a shared medium for exchange of information. Examples of such communication systems include HomePlug AV based powerline communication systems, IEEE 802.11 based wireless communications systems and DOCSIS based cable modem system. Due to the shared nature of the medium, signals transmitted in these systems can also be received by unauthorized device. To protect privacy and to prevent rogue devices from accessing the network, these systems incorporate security. Secure systems use authorization process to determine if the device can be admitted into the network. Remote authentication dial in user service (RADIUS) is an example of common authorization system. Authorized devices are provided with the encryptions keys that are used to encryption information transmitted over the medium, thus protecting privacy of the information. Advanced Encryption Standard (AES) is another encryption mechanism used by various communication systems.

A network of communication stations can share a communication medium (e.g., wires connecting multiple stations or spectrum for transmitting radio signals among stations) using any of a variety of access techniques. Security for a shared communication medium network can be difficult since there is no protection from others connecting unauthorized devices to the network. For example, when a new station is deployed, the new station should be able to easily join the network, while unauthorized stations should be inhibited from joining the network. While an encryption key can provide some security, the distribution of the encryption key can be difficult because communication of the keys can provide opportunity to compromise the encryption key.

A network of communication stations can share a communication medium (e.g., wires connecting multiple stations or spectrum for transmitting radio signals among stations) using any of a variety of access techniques. Security for a shared communication medium network can be difficult since there is no protection from others connecting unauthorized devices to the network. For example, when a new customer premise equipment (CPE) device subscribes, the new CPE device should be able to easily join the network, while unauthorized CPEs should be inhibited from joining the network. While an encryption key can provide some security, the distribution of the encryption key can be difficult because communication of the keys can provide opportunity to compromise the encryption key.

A network of communication stations can share a communication medium (e.g., wires connecting multiple stations or spectrum for transmitting radio signals among stations) using any of a variety of access techniques. Some access techniques (e.g., carrier sense multiple access (CSMA) techniques) include a contention period in which stations contend for use of the medium for transmitting a signal by sensing when the medium is idle. In CSMA techniques, "collisions" sometimes occur when signals from two or more stations overlap. Some channel access techniques can also provide a time division multiple access (TDMA) period in which a specific station or stream is provided exclusive control of the medium. Typical TDMA and CSMA channel access techniques are used to share medium between stations of the same type. However, in environments where stations or networks of different types are present, additional means of efficiently segregating traffic from various networks becomes necessary.

In environments where stations or networks of different types are present, a common means of efficiently detecting the presence of various networks and appropriately segregating traffic between them becomes necessary.

A network of communication stations can share a communication medium (e.g., wires connecting multiple stations or spectrum for transmitting radio signals among stations) using any of a variety of access techniques. A shared communication can be difficult to provide security and controlled access. Even when communications are encrypted using an encryption key, the encryption key associated with the encryption can eventually be compromised through brute force cracking of the encryption key.

A network of communication stations can share a communication medium (e.g., wires connecting multiple stations or spectrum for transmitting radio signals among stations) using any of a variety of access techniques. Security for a shared communication medium network can be difficult since there is no protection from other devices that are connected to the shared medium. For example, two stations that are connected to shared medium cannot current communicate with each other in a secure manner without the danger of being subjected to snooping by other devices connected to the shared medium.

U.S. Patent Publication 20030048183 (A1) describes an electronic system, especially a security system, that includes a number of different units that access a network according to a multiple access protocol, which is designed to minimize collisions between frames while reducing bandwidth requirements. The units may monitor different spatial regions according to several different criteria. Respective units that monitor according to correspondingly different criteria in a given spatial region may be assembled into one group and units that monitor different spatial regions but according to the same criterion may be assembled into another group. Each of the units of the one group are provided access to the network in one concurrent time slot, while the units of the other group are provided access to the network in a different concurrent time slot.

U.S. Patent Publication 20030137993 (A1) describes a method for passing management frames between a network coordinator and a plurality of devices during a plurality of repeating superframes. The superframes are divided into repeating groups of consecutive superframes that form a superframe cycle. Each superframe has a set number of management time slots in it, which number can change. This creates a number of unique management time slots in each superframe cycle based on the number of superframes per cycle and the number of management time slots per superframe. The devices are assigned to a number of contention groups equal to the total number of management time slots in a superframe cycle. Each contention group is assigned a unique management time slot, and each device can only send management requests to the coordinator during the unique management time slot assigned to its contention group. Contention groups may have zero or one device in them.

EP Patent Publication 1748597 (A1) describes a method for managing hidden stations in a centrally controlled network, e.g., enabling a central coordinator to manage hidden stations via a proxy central coordinator.

## SUMMARY

The invention is defined as a method according to claim 1 and as a system according to claim 15.

In an aspect, in general, a method for communicating among stations in a network includes, from each of multiple stations in the network, transmitting information indicating which other stations from which that station is able to reliably receive transmissions. The method includes determining a schedule for communicating among the stations based on the information from the stations and transmitting the schedule over the network. The schedule includes a plurality of time slots during which respective sets of stations are assigned to communicate using a contention-based protocol.

Aspects can include one or more of the following features.

Each station in a given set is able to reliably receive transmissions from all the other stations in the given set.

The contention-based protocol does not use Request to Send / Clear To Send (RTS/CTS) transmissions among the stations in a given set.

At least some of the sets include one or more stations that are not able to reliably receive transmissions from at least some other stations in the same set.

The contention-based protocol used by at least some of the sets that include one or more stations that are not able to reliably receive transmissions from at least some other stations in the same set use Request to Send / Clear To Send (RTS/CTS) transmissions among the stations in a given set.

At least some of the stations are not able to reliably receive transmissions from at least some of the other stations in the network.

Each station in a given set is able to reliably receive transmissions from all the other stations in the given set.

Each station in a first set of stations assigned to communicate in a given time slot is not able to reliably receive transmissions from any of the stations in a second set of stations assigned to communicate in the given time slot.

The contention-based protocol does not use Request to Send / Clear To Send (RTS/CTS) transmissions among the stations in a given set.

At least some of the sets include one or more stations that are not able to reliably receive transmissions from at least some other stations in the same set.

The contention-based protocol used by at least some of the sets that include one or more stations that are not able to reliably receive transmissions from at least some other stations in the same set use Request to Send / Clear To Send (RTS/CTS) transmissions among the stations in a given set.

The information indicating which other stations from which a station is able to reliably receive transmissions is transmitted to a first station.

The first station determines the schedule.

The first station assigns stations to sets based on the information.

The method further comprises providing the stations in different sets one or more parameters associated with the contention-based protocol independently.

The one or more parameters include at least one of a contention window size and a defer counter.

The one or more parameters provided to a given set include at least one parameter that is selected based on the number of stations in the given set.

The one or more parameters provided to a given set include a random backoff parameter.

The contention-based protocol comprises a carrier sense multiple access (CSMA) protocol.

The CSMA protocol comprises a carrier sense multiple access with collision avoidance (CSMA/CA) protocol.

Among the many advantages of the invention (some of which may be achieved only in some of its various aspects and implementations) are the following.

The approaches described can improve network efficiency. For example, inefficiencies due to hidden nodes can be reduced by reducing or eliminating hidden nodes, and by trading off the number of contention groups and the reduction in hidden nodes. Contention groups can be assigned to time slots such that network communication resources can be reused efficiently. Beacon transmissions can be used to simplify assignment of contention groups and facilitate distributed protocols for forming the groups.

In some networks it is useful to have tight synchronization of clocks at various nodes (or "stations") in the network. One application of tightly synchronized clocks is to enable cost saving at the physical layer. In some cases, physical layer signaling requires the clock of a receiver to be within a certain offset (e.g., 1 part per million) of the clock of a transmitter for proper operation. The cost of circuitry (e.g., clock crystals) of highly accurate clocks to provide such a low offset may be expensive. As an alternative to highly accurate clocks, clocks with lower precision can be used along with a clock synchronization mechanism that enables stations to compensate for a given clock offset. The synchronization techniques can be used to synchronize the physical layer (PHY) signaling between stations to eliminate inter-carrier interference without the need for highly accurate clocks. Synchronization can also enable tight control of jitter within the network. For example, an audio streaming application may require that multiple speakers play music in a synchronized manner. Since typical networks create jitter, a clock synchronization mechanism that synchronizes the clocks at all of the speakers and indicates the time at which each audio packet is to be played at each speaker can be used.

Stations in a network, a broadband powerline network for example, can select optimum paths for communication with a headend.

Network efficiency can be increased through the reduction of redundant network traffic.

Other aspects and advantages will be apparent from the detailed description, drawings, appendices and claims.

## DESCRIPTION OF DRAWINGS

FIG. 1 is a schematic diagram of a communication network.
FIG. 2 is a block diagram of a communication system for communicating over the network.
FIGS. 3A and 3B are timing diagrams of a TDMA scheduling period.
FIGS. 4A - 4C and FIG. 6 are schematic diagrams of stations assigned to contention groups and time slot groups.
FIG. 5 is a diagram of stations grouped into beacon levels.
FIG. 7 is a timing diagram of a TDMA period.
FIG. 8 is a diagram of stations grouped into beacon levels.
FIG. 9 is a schematic diagram illustrating synchronization.
FIG. 10 is a block diagram of a powerline communication network.
FIG. 11 is a block diagram of example data plane aggregation within a network.
FIG. 12 is a block diagram of another example data plane aggregation within a network.
FIG. 13 is flow diagram of an example process for aggregating communications based on route and service type.
FIG. 14 is a flow diagram of another example process for aggregating communications based on route and service type.
FIG. 15 is a flowchart of an example method for establishing a route to a headend in a communication network.
FIG. 16 is a block diagram of an example network.
FIG. 17 is a block diagram of the example network of FIG. 3-3 with modified routing.
FIG. 18 is a schematic diagram of a broadband over powerline in-home communication network.
FIG. 19A is a block diagram of a network implementing selective broadcast.
FIG. 19B shows the network of FIG 2Aa implementing selective broadcast for a message from an alternative station.
FIG. 19C is a block diagram of a network implementing selective multicast.
FIG. 20A illustrates an MSDU to be transmitted using 2-level MAC encapsulation.
FIG. 20B illustrates the segmenting of a Sub-Frame queue.
FIG. 21 illustrates an MSDU to be transmitted using 1-level MAC encapsulation.
FIG. 22 is a block diagram of a network implementing selective broadcast and using MAC encapsulation.
FIG. 23 is a block diagram of a powerline communication network.
FIG. 24 is a block diagram illustrating a process for authorizing a new customer premise equipment device into a network.
FIG. 25 is a block diagram illustrating the communication flow associated with authorizing a new customer premise equipment device into a network.
FIG. 26 is a flow diagram depicting an example flow for authorization of a device into a centrally managed network.
FIG. 27 is a flowchart illustrating an example authorizing a device into a network.
FIG. 28 is a block diagram of a powerline communication network.
FIG. 29 is a block diagram illustrating a process for authorizing a new network termination unit into a network.
FIG. 30 is a block diagram illustrating a process for authorizing a new repeater into a network.
FIG. 31 is a block diagram illustrating the communication flow associated with authorizing a new station into a network.
FIG. 32 is a flow diagram depicting an example flow for authorization of a station into a centrally managed network.
FIGS. 33 and 34 are flowcharts illustrating example methods for authorizing a station into a network.
FIG. 35 is a block diagram of a powerline communication network.

FIG. 36 is a block diagram illustrating a process for authorizing customer premise equipment device into a sub-network.

FIG. 37 is a block diagram illustrating the communication flow associated with authorizing a customer premise equipment device into a sub-network.

FIG. 38 is a flow diagram depicting an example flow for authorization of a customer premise equipment device into a sub-network.

FIGS. 39 and 40 are flowcharts illustrating example methods for authorizing a customer premise equipment device into a sub-network.

FIG. 41 is a block diagram of a communication system for communicating over the network.

FIG. 42 is a timing diagram of a beacon period.

FIG. 43 is a timing diagram illustrating synchronization of devices using a beacon period start time offset.

FIG. 44 is a block diagram illustrating an example communications network.

FIGS. 45, 46, and 47 are timing diagrams illustrating example allocations of bandwidth on shared communication media.

FIG. 48 is a flow chart illustrating an exemplary process for synchronizing communications among stations in a network.

FIG. 49 is a block diagram of a communication system for communicating over the network.

FIG. 50 is a timing diagram of a beacon period.

FIG. 51 is a timing diagram illustrating synchronization of devices using a beacon period start time offset.

FIG. 52 is a timing diagram illustrating coexistence of in-home networks with an access network.

FIG. 53 is a network diagram showing an example assignment of allocation units.

FIG. 54 is a timing diagram showing an example frequency division.

FIG. 55 is a flowchart illustrating an example process for providing foreign network coexistence.

FIG. 56 is a block diagram of a powerline communication network.

FIGS. 57 and 58 are block diagrams illustrating a process for rotating network encryption keys in a network.

FIG. 59 is a block diagram illustrating the communication flow associated with rotating keys in a network.

FIG. 60 is a flow diagram depicting an example flow for rotation of network keys.

FIGS. 61 and 62 are flowcharts illustrating example methods for rotating keys to provide authentication of key rotation communications.

FIG. 63 is a block diagram of a powerline communication network.

FIG. 64 is a block diagram illustrating a process for authorizing a new network termination unit into a network.

FIG. 65 is a block diagram illustrating a process for authorizing a new repeater into a network.

FIG. 66 is a block diagram illustrating the communication flow associated with authorizing a new station into a network.

FIG. 67 is a flow diagram depicting an example flow for authorization of a station into a centrally managed network.

FIG. 68 is a flowchart illustrating an example method for authorizing a station into a network.

## DETAILED DESCRIPTION

There are a great many possible implementations of the invention, too many to describe herein. Some possible implementations that are presently preferred are described below. It cannot be emphasized too strongly, however, that these are descriptions of implementations of the invention, and not descriptions of the invention, which is not limited to the detailed implementations described in this section but is described in broader terms in the claims.

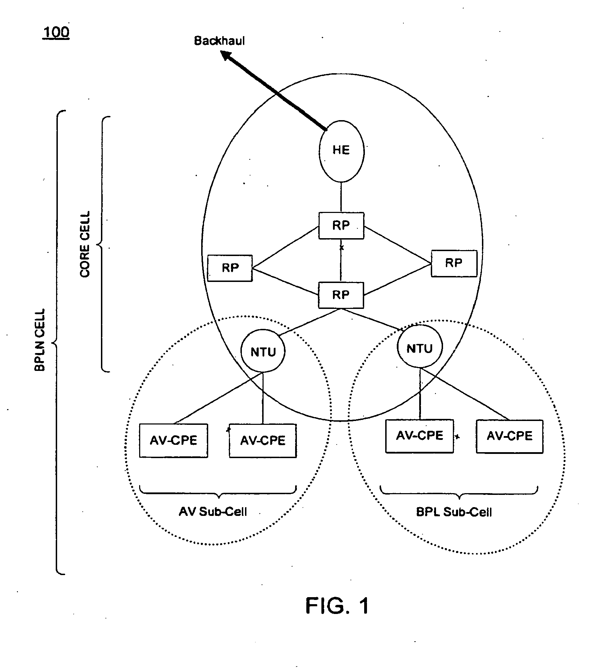

FIG. 1 shows an exemplary network configuration for an access network 100 such as a Broadband Power Line Network (BPLN) that provides access to a backhaul network. A BPLN can be managed by a service provider entity having access to the underlying physical power line medium. A BPLN is a general purpose network that can be used for several types of applications including, smart grid management, broadband internet access, voice and video delivery services, etc. In various implementations, a BPLN can be deployed on low voltage, medium voltage and high voltage power lines. Additionally, a BPLN can span an entire neighborhood or it may be deployed within a single multi-dwelling unit. For example, it can be used to provide network service to tenants in a single apartment building. While power lines are one medium for deploying the BPLN, similar techniques can be deployed on other wire lines, such as, for example, coaxial cables, twisted pair or a combination thereof.

A BPLN can include one or more Cells. A cell is a group of broadband power line (BPL) devices in a BPLN that have similar characteristics such as association management, security, Quality of Service (QoS) and channel access settings, for example. Cells in a BPLN are logically isolated from each other, and communication to and from the backhaul occurs within the cell. Each cell in a BPLN includes a Core-Cell and may also include one or more Sub-Cells. There can be more than one cell on a given physical power line medium.

A Core-Cell includes a group of devices in a BPLN that can share certain functionality such as a common security protocol. An exemplary Core-Cell includes a Head End (HE), Repeaters (R), and Network Termination Units (NTUs), but may exclude Customer Premise Equipment (CPE). The Head End (HE) is a device that bridges a cell to the backhaul network. At a given time, a cell will have one active Head End and the Head End manages the cell including the Core-Cell and any associated Sub-Cells. A Repeater (RP) is a device that selectively retransmits MSDUs to extend the effective range and bandwidth of the BPLN Cell. Repeaters can also perform routing and QoS functions. The NTU is a device that connects a BPLN cell to the end users' network or devices. The NTU may in some cases bridge to other network technologies such as WiFi. A single NTU can serve more than one customer. Each Sub-Cell is associated with an active NTU. In some implementations, an HE, an NTU and/or an RP can be co-located at a single station. Thus, a single device may be designed to perform multiple functions. For example, a single device can simultaneously be programmed to perform the tasks associated with an RP and an NTU.

Various types of CPE devices (e.g., a computer) can be used as endpoint nodes in the network and such devices can communicate with other nodes in the network through the NTU, any number of repeaters, (e.g., including no repeaters), and the Head End. Each node in the network communicates as a communication "station" using a PHY layer protocol that is used by the nodes to send transmissions to any other stations that are close enough to successfully receive the transmissions. Stations that cannot directly communicate with each other use one or more repeater stations to communicate with each other. The stations have the potential to interfere with each other, but techniques can be used to coordinate in a centralized and/or distributed manner.

Any of a variety of communication system architectures can be used to implement the portion of the network interface module that converts data to and from a signal waveform that is transmitted over the communication medium. An application running on a station provides and receives data to and from the network interface module in segments. A "MAC Service Data Unit" (MSDU) is a segment of information received by the MAC layer. The MAC layer can process the received MSDUs and prepares them to generate "MAC protocol data units" (MPDUs). An MPDU is a segment of information including a header (e.g., with management and overhead information) and payload fields that the MAC layer has asked the PHY layer to transport. An MPDU can have any of a variety of formats based on the type of data being transmitted. A "PHY Protocol Data Unit (PPDU)" refers to the modulated signal waveform representing an MPDU that is transmitted over the power line by the physical layer.

Apart from generating MPDUs from MSDUs, the MAC layer can provide several functions including channel access control, providing the required QoS for the MSDUs, retransmission of corrupt information, routing and repeating. Channel access control enables stations to share the powerline medium. Several types of channel access control mechanisms like carrier sense multiple access with collision avoidance (CSMA/CA), centralized Time Division Multiple Access (TDMA), distributed TDMA, token based channel access, etc., can be used by the MAC. Similarly, a variety of retransmission mechanism can also be used. The Physical layer (PHY) can also use a variety of techniques to enable reliable and efficient transmission over the transmission medium (power line, coax, twisted pair etc). Various modulation techniques like Orthogonal Frequency Division Multiplexing (OFDM), Wavelet modulations can be used. Forward error correction (FEC) code like Viterbi codes, Reed-Solomon codes, concatenated code, turbo codes, low density parity check code, etc., can be employed by the PHY to overcome errors.

One implementation of the PHY layers is to use OFDM modulation. In OFDM modulation, data are transmitted in the form of OFDM "symbols." Each symbol has a predetermined time duration or symbol time $T_s$. Each symbol is generated from a superposition of N sinusoidal carrier waveforms that are orthogonal to each other and form the OFDM carriers. Each carrier has a peak frequency $f_i$ and a phase $\Phi_i$ measured from the beginning of the symbol. For each of these mutually orthogonal carriers, a whole number of periods of the sinusoidal waveform is contained within the symbol time $T_s$. Equivalently, each carrier frequency is an integral multiple of a frequency interval $\Delta f = 1/T_s$. The phases $\Phi_i$ and amplitudes $A_i$ of the carrier waveforms can be independently selected (according to an appropriate modulation scheme) without affecting the orthogonality of the resulting modulated waveforms. The carriers occupy a frequency range between frequencies $f_1$ and $f_N$ referred to as the OFDM bandwidth.

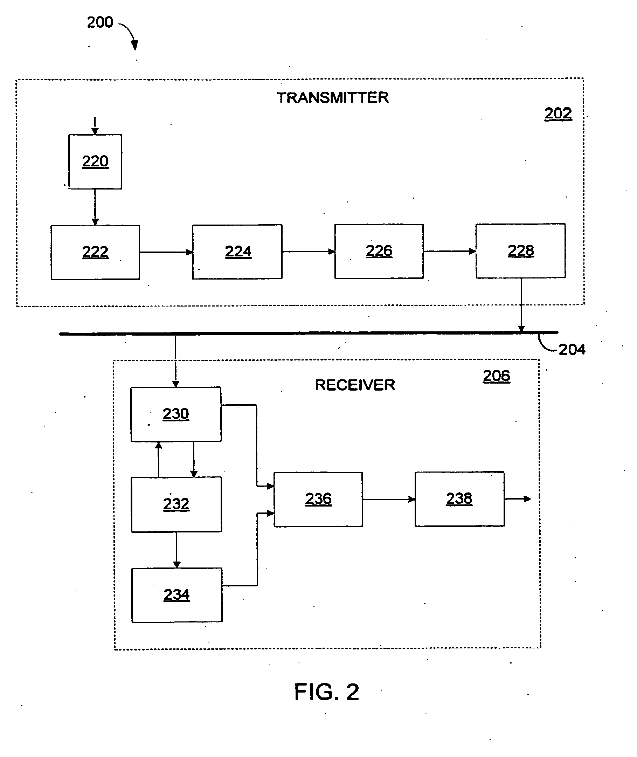

Referring to FIG. 2, a communication system 200 includes a transmitter 202 for transmitting a signal (e.g., a sequence of OFDM symbols) over a communication medium 204 to a receiver 206. The transmitter 202 and receiver 206 can both be incorporated into a network interface module at each station. The communication medium 204 can represent a path from one device to another over the power line network.

At the transmitter 202, modules implementing the PHY layer receive an MPDU from the MAC layer. The MPDU is sent to an encoder module 220 to perform processing such as scrambling, error correction coding and interleaving.

The encoded data is fed into a mapping module 222 that takes groups of data bits (e.g., 1, 2, 3, 4, 6, 8, or 10 bits), depending on the constellation used for the current symbol (e.g., a BPSK, QPSK, 8-QAM, 16-QAM constellation), and maps the data value represented by those bits onto the corresponding amplitudes of in-phase (I) and quadrature-phase (Q) components of a carrier waveform of the current symbol. This results in each data value being associated with a corresponding complex number $C_i = A_i \exp(j\Phi_i)$ whose real part corresponds to the I component and whose imaginary part corresponds to the Q component of a carrier with peak frequency $f_i$. Alternatively, any appropriate modulation scheme that associates data values to modulated carrier waveforms can be used.

The mapping module 222 also determines which of the carrier frequencies $f_1,..., f_N$ within the OFDM bandwidth are used by the system 200 to transmit information. For example, some carriers that are experiencing fades can be avoided, and no information is transmitted on those carriers. Instead, the mapping module 222 uses coherent BPSK modulated with a binary value from the Pseudo Noise (PN) sequence for that carrier. For some carriers (e.g., a carrier i = 10) that correspond to restricted bands (e.g., an amateur radio band) on a medium 204 that may radiate power no energy is transmitted on those carriers (e.g., $A_{10} = 0$). The mapping module 222 also determines the type of modulation to be used on each of the carriers (or "tones") according to a "tone map." The tone map can be a default tone map, or a customized tone map determined by the receiving station, as described in more detail below.

An inverse discrete Fourier transform (IDFT) module 224 performs the modulation of the resulting set of N complex numbers (some of which may be zero for unused carriers) determined by the mapping module 222 onto N orthogonal carrier waveforms having peak frequencies $f_1,..., f_N$. The modulated carriers are combined by IDFT module 224 to form a discrete time symbol waveform S(n) (for a sampling rate $f_R$), which can be written as

$$S(n) \;=\; \sum_{i=1}^{N} A_i \exp[j(2\pi in/N + \Phi_i)] \qquad\qquad \text{Eq.(1)}$$

where the time index n goes from 1 to $N$, Ai is the amplitude and $\Phi_i$ is the phase of the carrier with peak frequency $f_i = (i/N)\, f_R$, and $j = \sqrt{-1}$. In some implementations, the discrete Fourier transform corresponds to a fast Fourier transform (FFT) in which N is a power of 2.

A post-processing module 226 combines a sequence of consecutive (potentially overlapping) symbols into a "symbol set" that can be transmitted as a continuous block over the communication medium 204. The post-processing module 226 prepends a preamble to the symbol set that can be used for automatic gain control (AGC) and symbol timing synchronization. To mitigate intersymbol and intercarrier interference (e.g., due to imperfections in the system 200 and/or the communication medium 204) the post-processing module 226 can extend each symbol with a cyclic prefix that is a copy of the last part of the symbol. The post-processing module 226 can also perform other functions such as applying a pulse shaping window to subsets of symbols within the symbol set (e.g., using a raised cosine window or other type of pulse shaping window) and overlapping the symbol subsets.

An Analog Front End (AFE) module 228 couples an analog signal containing a continuous-time (e.g., low-pass filtered) version of the symbol set to the communication medium 204. The effect of the transmission of the continuous-time version of the waveform S(t) over the communication medium 204 can be represented by convolution with a function $g(\tau;t)$ representing an impulse response of transmission over the communication medium. The communication medium 204 may add noise $n(t)$, which may be random noise and/or narrowband noise emitted by a jammer.

At the receiver 206, modules implementing the PHY layer receive a signal from the communication medium 204 and generate an MPDU for the MAC layer. An AFE module 230 operates in conjunction with an Automatic Gain Control (AGC) module 232 and a time synchronization module 234 to provide sampled signal data and timing information to a discrete Fourier transform (DFT) module 236.

After removing the cyclic prefix, the receiver 206 feeds the sampled discrete-time symbols into DFT module 236 to extract the sequence of $N$ complex numbers representing the encoded data values (by performing an $N$-point DFT). Demodulator/Decoder module 238 maps the complex numbers onto the corresponding bit sequences and performs the appropriate decoding of the bits (including de-interleaving and descrambling).

Any of the modules of the communication system 200 including modules in the transmitter 202 or receiver 206 can be implemented in hardware, software, or a combination of hardware and software.

Some aspects relate to contention groups for hidden nodes.

Various stations in a network may generate regular beacon transmissions for various purposes. A beacon transmission (or simply a "beacon") includes management information that can be used for a variety of purposes. The stations may communicate with each other in time periods between beacon transmissions, provided the power line channel characteristics between any two communicating stations permit it.

In some networks one of the functions of a beacon transmission is to carry medium allocation (or scheduling) information. The scheduling information allocates some of the time between beacon transmissions as a contention period during which stations may contend for access to the power line medium. The scheduling information also allocates a contention-free period during which times slots are assigned to particular stations for access to the power line medium. The scheduling information is provided relative to a TDMA Scheduling Period Start Time (or TDMA Period Start Time).

The TDMA Period start time is synchronized with respect to the AC line cycle of the power line waveform such that the time between consecutive TDMA period start times is based on the underlying AC line cycle frequency. Thus, to the extent that the AC line cycle frequency may vary, the TDMA period start time (and hence the duration of each TDMA Period) may not be perfectly periodic. Since the beacons transmitted by the HE may not be heard by every station, each station transmits its own beacon to relay the information in the beacon to stations that do not hear the HE. While the stations may transmit their beacons at different times, the TDMA period start time is established with respect to the information contained in the beacons transmitted by the HE. At each station, the TDMA period start time can be synchronized to that of the HE using a start time synchronization procedure described in more detail below. Each station can then predict a given TDMA period end time (or future TDMA period start time) based on the synchronized start time and the local AC line cycle at the given station by correlating the synchronized start time to a detectable feature of the power line waveform such as a zero crossing. The TDMA period can be set by the HE to any multiple of a half of the AC line cycle period, for example, by waiting for a given number of zero crossings.

In some cases it is desirable to increase the TDMA period to make more efficient use of the medium by reducing the percentage of time devoted to sending the "overhead" information in the beacon transmission. There is also overhead information associated with transmissions from the stations during each TDMA period. It may also be desirable to keep the TDMA period small enough to provide a desired number of transmission opportunities in a given length of time to reduce the latency. Thus, the TDMA period can be selected according to a trade-off between keeping overhead low and latency between transmission opportunities low. For example, in some implementations the TDMA period is selected to be twice the AC line cycle period. In this case, when operating in power line environments with an AC line cycle frequency of 60 Hz, the TDMA period would be approximately 33.33 msec. When operating in power line environments with an AC line cycle frequency of 50 Hz, the TDMA period would be approximately 40 msec. Variations in the TDMA period may occur due to drift in the AC line cycle frequency. The HE determines the duration of the TDMA period as well as the start time of the TDMA period.

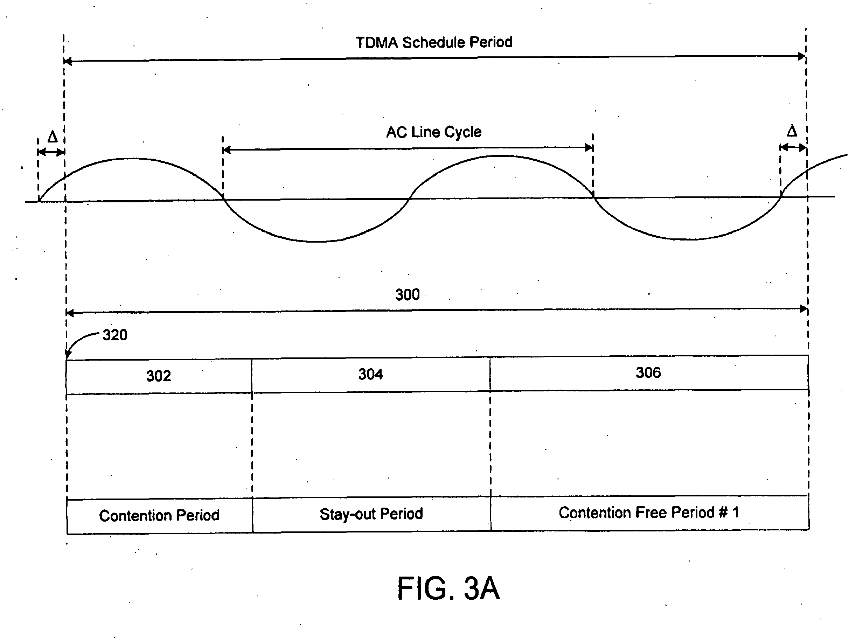

FIG. 3A shows the structure of an exemplary TDMA period 300 which consists of a Contention Period 302 followed by a Stay-out Period 304 and a Contention Free Period 306. In general, a TDMA period can contain any number of Contention Periods, Stay-out Periods and Contention Free Periods in any order. The TDMA period may also be different for different stations in the BPLN. The Contention Period 302 is a time in which stations can contend for permission to transmit using a shared medium access protocol such as CSMA/CA. The Stay-out Period 304 is a time during which stations are not allowed to transmit. The Contention Free Period 306 includes time slots assigned for use by predetermined stations (e.g., using a Time Domain Multiple Access (TDMA) protocol). Beacons are typically transmitted during the Contention Period. Beacon may also be transmitted during Contention Free Periods. The frequency of beacon transmission depends on how frequently the associated management information needs to be communicated. Typically, beacons are transmitted once in several TDMA periods.

In networks in which repeaters are used to extend the reach of signals in the network, multiple stations can retransmit beacon transmissions to be heard by stations that would otherwise not be able to receive the beacon transmissions from the HE.

In some implementations, contention occurs over all the stations in the network contending during the contention period 302. However, for large networks, even with the use of random backoff intervals, collisions are more likely to occur (e.g., due to multiple layers of hidden nodes). In some implementations, the stations can be broken into groups that perform contention independently (e.g., in different contention periods) without interfering with each other. Each contention group has a smaller number of stations, and can be selected to reduce or eliminate hidden nodes within each group.

For example, the stations can be assigned to "contention groups" centrally by the HE station based on information collected from the stations about which stations can reliably receive transmissions from which other stations, or in a distributed manner as described in more detail below. Within each contention group, a contention-based protocol (e.g., a CSMA protocol) can be used. Different (potentially overlapping) time slots can be allocated (e.g., as determined by the HE) in which contention-based communication occurs based on knowledge of traffic conditions and of routing and network topology. These contention groups can reduce inefficiencies associated with using a contention-based protocol over the entire network that result, for example, from having multiple layers of hidden stations. If hidden stations exist in a group of contending stations, to avoid collisions, Request To Send/Clear To Send (RTS/CTS) signals can be used. However, these RTS/CTS have associated overhead (e.g., time used to send the signals) that reduce efficiency. In some implementations, stations are assigned to contention groups so that each contention group does not have any hidden stations (i.e., such that all the stations in a given contention group can hear each other). Without hidden stations among the stations in a contention group, the need for using RTS/CTS signals can be eliminated, improving efficiency for each group. In some implementations, as described in more detail below, stations are assigned to contention groups to reduce the layers of hidden stations, while still allowing some hidden nodes to exists in order to reduce the number of contention groups.

Different contention groups can also be assigned different time slots so that stations in neighboring contention groups do not interfere. For example, the time slots can be assigned during the Contention Free Period 306 to ensure that contention occurs between stations assigned to the same contention group without interference from stations assigned to different contention groups. One or more contention groups that do not interfere (e.g., if the contention groups are far enough apart) and are assigned to the same time slot are called a "time slot group." Time slot groups facilitate channel reuse, as explained in more detail below. The contention groups also enable customizing parameters to each contention group based on characteristics of the group, such as the number of stations in the group. Different backoff parameters, for example, can be used. Other parameters that can be customized for each contention group are a contention window size and a defer counter.

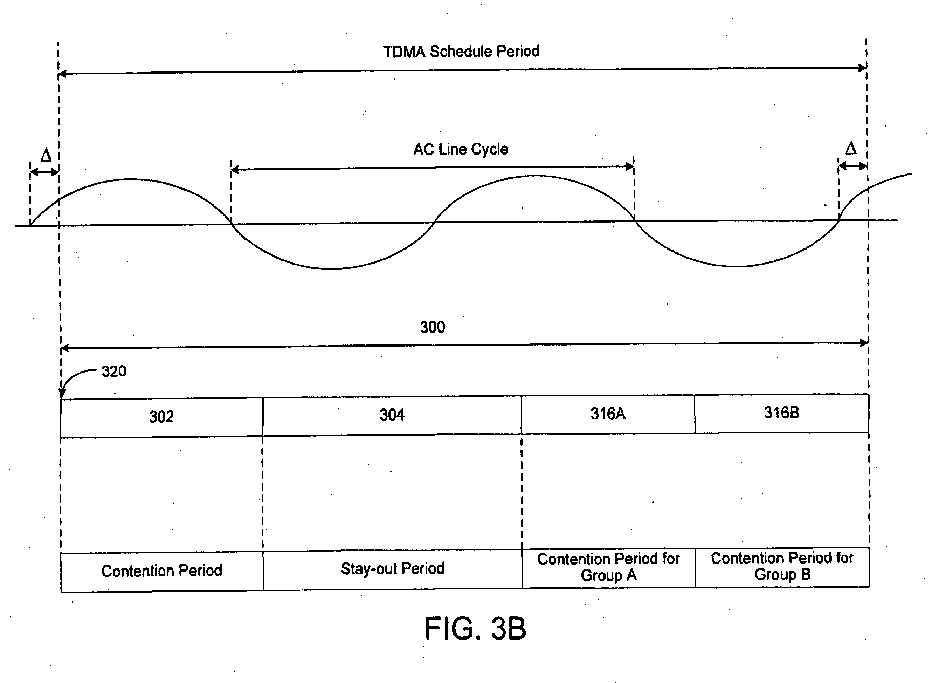

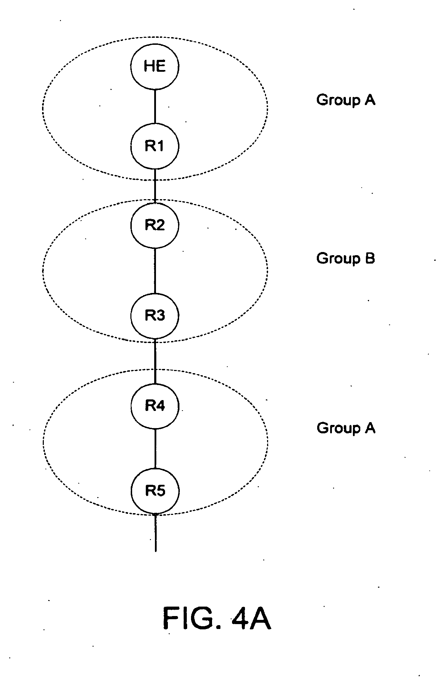

FIG. 4A shows an example, of an assignment of contention groups and time slot groups in a case in which there is a linear chain of stations including an HE station and repeater stations R1, R2, R3, R4, etc. In FIG. 4A, stations that can hear each other are connected with a line. Thus, HE can hear R1, R1 can hear HE, and R2, and so on. Each station is assigned a position in the chain such that the HE station is in position 0, repeater station R1 is in position 1, repeater station R2 is in position 3, and so on. In this example, in order to eliminate hidden nodes within contention groups and ensure that no contention groups interfere with each other, only two time slots are needed. The stations are divided into contention groups of two and each contention group is assigned to one of two time slot groups (Group A and Group B), starting with HE and R1 in time slot Group A, R2 and R3 in time slot Group B, and R4 and R5 in time slot Group A, and so on (alternating assigning adjacent contention groups to different time slot groups). All stations with a position equal to 4n or 4n+1 (where n = 0, 1, 2, ...) in time slot Group A contend during a first time slot, and all stations with a position equal 4n+2 or 4n+3 (where n = 0, 1, 2, ...) in time slot Group B contend during a second time slot that does not overlap with the first time slot. The start and end times of the time slots for each time slot group can be indicated in a message sent by the HE station and passed on to all stations in the network. FIG. 3B shows the time slot 316A used as a contention period for time slot group A and time slot 316B used as a contention period for time slot group B.

In some network topologies, complete elimination of hidden nodes can result in large number of contention groups. Since more contention groups generally call for more time slots for contention, this reduces the network efficiency. Thus, there is a trade off between the selection of a larger number of contention groups without hidden nodes and a smaller number of contention groups with hidden nodes. In the latter case, a smaller number of contention groups will result in lower efficiency loss due to grouping, however, the need to handle hidden nodes will result in efficiency loss due to collisions and use of RTS/CTS.

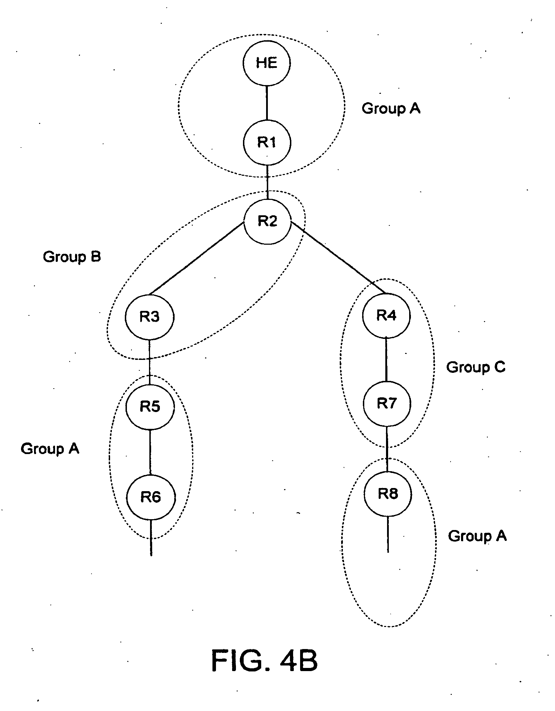

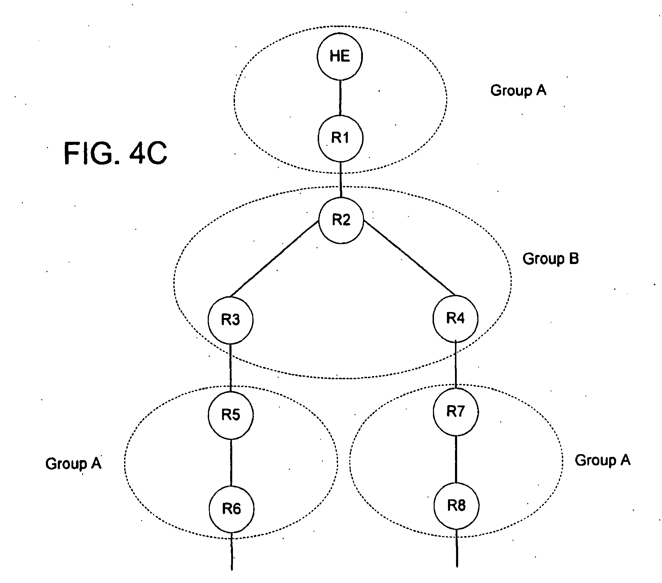

FIG. 4B and FIG. 4C show different groupings of contention groups and assignment to time slot groups for the same network topology. Contention groups are shown with dashed ovals and time slot groups are labeled. In FIG. 4B, the grouping is such that there are no hidden nodes in any of the contention groups. Three separate time slots (for three respective time slot groups) are required to schedule all of these groups so that transmissions by stations in one group do not interfere with the transmissions by stations in another group. FIG. 4C shows another grouping in which only two time slots (for two respective time slot groups) are required to schedule them. However, the single contention group assigned to time slot group B has hidden nodes, and the collisions and the RTS/CTS mechanisms used to address this hidden node problem will result in some efficiency loss. The grouping used in FIG. 4C provides better network efficiency than the grouping used in FIG. 4B. The grouping used in FIG. 4C requires only two time slots, which results in more channel reuse than that used in FIG. 4B.

In some implementations, the HE station can gather information about which stations can hear which other stations and management messages from the HE tell the stations which group they are assigned to. In some implementations, the stations can perform a distributed protocol, to determine which stations can hear each other and select contention groups such that the stations in a given group can hear each other.

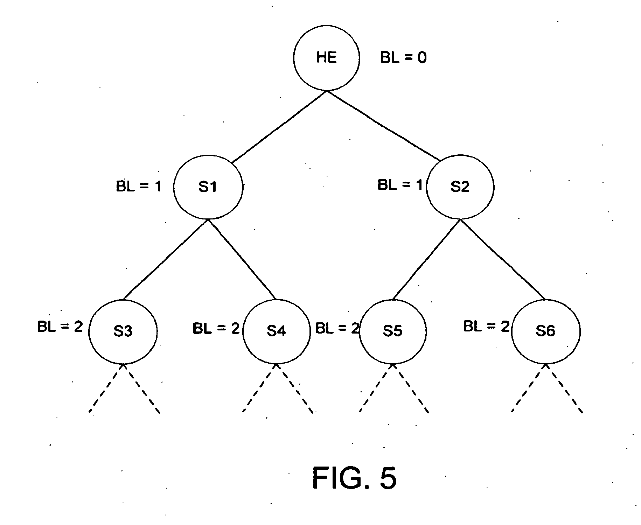

Each station in the BPLN broadcasts a beacon transmission regularly but not necessarily at the same time (or at the same frequency) at which the HE broadcasts beacon transmissions. For example, a Repeater station may transmit its beacon within a given target maximum delay (e.g., 100 ms) after reception of the beacon it is tracking. The beacon transmission can contain many fields including a Beacon Level (BL) field. The BL is used to determine the hierarchy of stations in the network. The HE is considered to be a Beacon Level 0 station and it sets the BL field in the beacon transmission to be zero. All the stations that can reliably receive (or "hear") the beacon transmissions sent by the HE (with BL = 0) are Beacon Level 1 stations and set the BL field in their beacon transmissions to 1. For all other stations, the BL is one higher than the smallest BL of all the stations it can reliably hear. FIG. 5 shows an example of stations grouped into Beacon Levels. A group of stations labeled HE and S1 - S6 may be a head end and a group of repeaters in a BPLN, for example. The stations are shown arranged in a graph with a line between stations that represents the ability to reliably receive a beacon transmission. In this example, stations S1 and S2 are Beacon Level 1 stations and S3, S4, S5 and S6 are Beacon Level 2 stations.

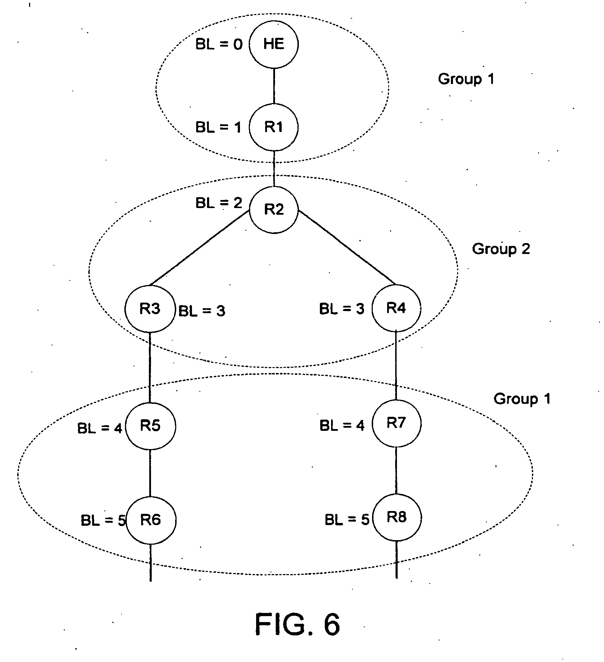

Beacon Level information can be used by stations to determine the contention groups and time slot groups in a distributed manner. For example, contention groups include stations of two consecutive beacon levels, and stations whose beacon levels are {4n, 4n+1} (where n = 0, 1, 2, ...) belong to one time slot group and stations whose beacon levels are {4n+2,4n+3} (where n = 0, 1, 2, ...) will belong to a second time slot group. This grouping will result in a schedule with two time slots. Another grouping could result in requiring three time slots with stations whose beacon levels are {6n,6n+1} (where n = 0, 1,2, ...) belong to a time slot group scheduled in the first time slot, those with beacon levels {6n+2,6n+3} (where n = 0, 1, 2, ...) belong to a time slot group scheduled in the second time slot and , those with beacon levels {6n+4,6n+5}(where n = 0, 1, 2, ...) belong to a time slot group scheduled in the third time slot. FIG. 6 shows a network with the beacon level of each station shown next to it. Using the beacon level grouping mechanism and considering a schedule of two time slots, stations with beacon levels 0, 1, 4, 5 belong to time slot Group 1 and stations with beacon levels 2, 3 belong to time slot Group 2. Hence stations HE, R1, R5, R6, R7 and R8 belong to time slot Group 1 and stations R2 and R3 belong to time slot Group 2.

Some aspects relate to clock synchronization over a shared medium.

Various stations in a network may generate regular beacon transmissions for various purposes. A beacon transmission (or simply a "beacon") includes management information that can be used for a variety of purposes. The stations may communicate with each other in time periods between beacon transmissions, provided the power line channel characteristics between any two communicating stations permit it.

In some networks one of the functions of a beacon transmission is to carry medium allocation (or scheduling) information. The scheduling information allocates some of the time between beacon transmissions as a contention period during which stations may contend for access to the power line medium. The scheduling information also allocates a contention-free period during which times slots are assigned to particular stations for access to the power line medium. The scheduling information is provided relative to a TDMA Scheduling Period Start Time (or TDMA Period Start Time).

The TDMA Period start time is synchronized with respect to the AC line cycle of the power line waveform such that the time between consecutive TDMA period start times is based on the underlying AC line cycle frequency. Thus, to the extent that the AC line cycle frequency may vary, the TDMA period start time (and hence the duration of each TDMA Period) may not be perfectly periodic. Since the beacons transmitted by the HE may not be heard by every station, each station transmits its own beacon to relay the information in the beacon to stations that do not hear the HE. While the stations may transmit their beacons at different times, the TDMA period start time is established with respect to the information contained in the beacons transmitted by the HE. At each station, the TDMA period start time can be synchronized to that of the HE using a start time synchronization procedure described in more detail below. Each station can then predict a given TDMA period end time (or future TDMA period start time) based on the synchronized start time and the local AC line cycle at the given station by correlating the synchronized start time to a detectable feature of the power line waveform such as a zero crossing. The TDMA period can be set by the HE to any multiple of a half of the AC line cycle period, for example, by waiting for a given number of zero crossings.

In the absence of the AC line cycle such as on a DC power bus or on other medium such as coax or phone lines, the TDMA Period may be based on or synchronized to the Network Time Base (NTB). In this case, the HE would communicate the period and timing of the TDMA period to other stations in the network base on the NTB. The NTB is a network wide clock provided by the HE whose current clock value is included in the beacon (e.g. 32 bit NTB clock value based on a 25 MHz clock). Each station that can directly hear the HE will recover the NTB locally from the information communicated in the HE's beacon and will include the locally recovered NTB in their own beacon transmission for use by stations that cannot hear the HE directly. Stations that cannot hear the HE directly will recover the NTB from another station that it can directly hear that is nearer to the HE than itself and will also include the locally recovered NTB in their own beacon transmission. This provides a means for all in the network stations to recover the NTB. CPEs do not need to transmit the NTB in a beacon.

In some cases it is desirable to increase the TDMA period to make more efficient use of the medium by reducing the percentage of time devoted to sending the "overhead" information in the beacon transmission. There is also overhead information associated with transmissions from the stations during each TDMA period. It may also be desirable to keep the TDMA period small enough to provide a desired number of transmission opportunities in a given length of time to reduce the latency. Thus, the TDMA period can be selected according to a trade-off between keeping overhead low and latency between transmission opportunities low. For example, in some implementations the TDMA period is selected to be twice the AC line cycle period. In this case, when operating in power line environments with an AC line cycle frequency of 60 Hz, the TDMA period would be approximately 33.33 msec. When operating in power line environments with an AC line cycle frequency of 50 Hz, the TDMA period would be approximately 40 msec. Variations in the TDMA period may occur due to drift in the AC line cycle frequency. The HE determines the duration of the TDMA period as well as the start time of the TDMA period. In order to reduce latency, more than one time slot may be assigned to a station during a TDMA period.

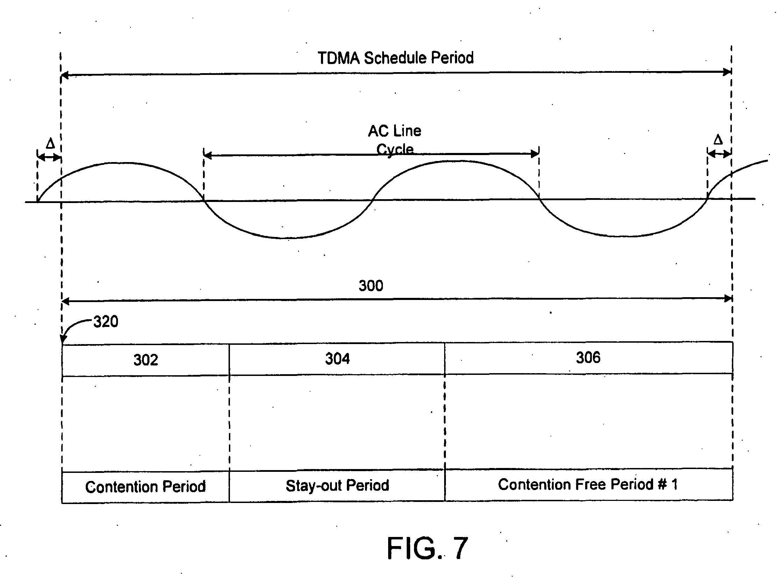

FIG. 7 shows the structure of an exemplary TDMA period 300 which consists of a Contention Period 302 followed by a Stay-out Period 304 and a Contention Free Period 306. In general, a TDMA period can contain any number of Contention Periods, Stay-out Periods and Contention Free Periods in any order. The TDMA period may also be different for different stations in the BPLN. The Contention Period 302 is a time in which stations can contend for permission to transmit using a shared medium access protocol such as CSMA/CA. The Stay-out Period 304 is a time during which stations are not allowed to transmit. The Contention Free Period 306 includes time slots assigned for use by predetermined stations (e.g., using a Time Domain Multiple Access (TDMA) protocol). Beacons are typically transmitted during the Contention Period. Beacon may also be transmitted during Contention Free Periods. The frequency of beacon transmission depends on how frequently the associated management information needs to be communicated. Typically, beacons are transmitted once in several TDMA periods.

In networks in which repeaters are used to extend the reach of signals in the network, multiple stations can retransmit beacon transmissions to be heard by stations that would otherwise not be able to receive the beacon transmissions from the HE.

Synchronization can be achieved in a network with the head end as a "master" and multiple levels of stations that are formed based on which stations are able to hear certain other stations' beacon transmissions. The synchronization can be used to: correct a local PHY clock used for the processing of transmitted and received signals at the stations, announce the future TDMA period start times and schedules relative to the TDMA period, and perform other functions such as jitter control. The synchronization can be performed in a hierarchical manner such that stations can synchronize to other stations from which they can reliably receive beacon transmissions. Thus, not all stations need to be able to reliably receive messages from the HE in order to maintain synchronization with a clock at the HE. A "Beacon Level" can be used as part of a "network time base synchronization" and a "start time synchronization" within the network.

Each station in the BPLN broadcasts a beacon transmission regularly but not necessarily at the same time (or at the same frequency) at which the HE broadcasts beacon transmissions. For example, a Repeater station may transmit its beacon within a given target maximum delay (e.g., 100 ms) after reception of the beacon it is tracking.

The beacon transmission can contain many fields including the Beacon Level (BL) and Beacon Time Stamp (BTS). The BL and BTS are used to obtain network time base synchronization. The HE is considered to be a Beacon Level 0 station and it sets the BL field in the beacon transmission to be zero. All the stations that can reliably receive (or "hear") the beacon transmissions sent by the HE (with BL = 0) are Beacon Level 1 stations and set the BL field in their beacon transmissions to 1. For all other stations, the BL is one higher than the smallest BL of all the stations it can reliably hear.

The HE maintains a timer circuit (e.g., a 32-bit timer circuit such as a counter), called the Network Time Base (NTB) timer, clocked by high-frequency clock (e.g., a 25 MHz clock). Each of the other stations also maintains its own NTB timer that represents an estimate of the NTB timer at the HE station. The stations other than the HE maintain their NTB timer using a local clock, and regularly update their NTB timer using recently received NTB timer values from beacon transmissions of the lowest level (the level closest to the level of the HE) station that it can hear. Any of a variety of techniques can be used to update the NTB timers including adjustable circuitry and/or offset formulas computed by a processor. The HE sets the BTS field of the beacon transmission to be the value of the NTB timer at the time the beacon transmission is sent (e.g., the time instant at which the first non-zero sample of the beacon transmission appears on the transmitter's analog output), called the Beacon Transmit Time (BTT). The Beacon Level 1 stations track the beacon transmissions received from the HE, and use the BTS in the received beacon transmission to update the NTB timer maintained by that station. The Beacon Level 1 stations can also correct their local clocks using this information. The Beacon Level 1 stations in turn send beacon transmissions with the BTS field set to the value of their NTB timer at the time of their beacon transmission. This process continues with each station using the BTS field information of beacons reliably received from stations with lowest BL to update their own NTB timer. Using this approach, all the stations in the BPL network can be synchronized in a hierarchical manner. The NTB timer maintained by each station can be updated by synchronizing in frequency and/or value to the NTB timer maintained at the HE via the received BTS values.

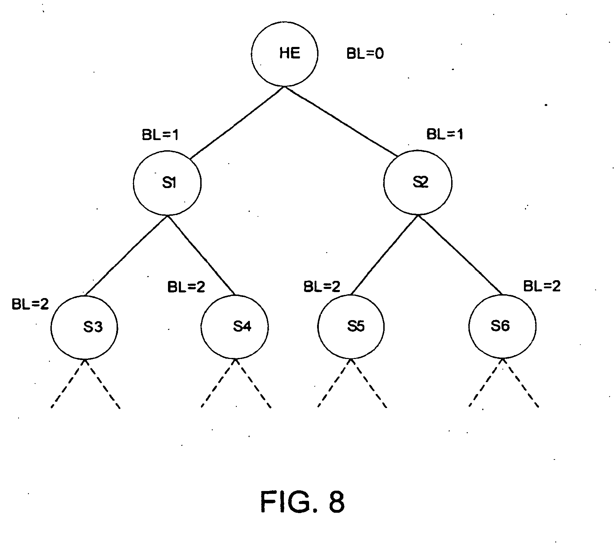

FIG. 8 shows an example of stations grouped into Beacon Levels for network time base synchronization. A group of stations labeled HE and S1 - S6 may be a head end and a group of repeaters in a BPLN, for example. The stations are shown arranged in a graph with a line between stations that represents the ability to reliably receive a beacon transmission. In this example, stations S1 and S2 are Beacon Level 1 stations and S3, S4, S5 and S6 are Beacon Level 2 stations. Stations S1 and S2 use the BTS transmitted by the HE to update their NTB timers and in turn transmit beacons with the BTS set appropriately. Stations S3 and S4 use the BTS transmitted by R1 to update their respective NTB timers, and stations S5 and S6 use the BTS transmitted by R2 to update their respective NTB timers.

Start time synchronization can be used to establish TDMA period start times as a series of repeating shared time references ("Start Times") that can be used, for example, to generate and enforce non-interfering local TDMA schedules or for channel adaptation purposes (for example, adapt differently at different portions of the TDMA period). This may be required, for example, because stations may be on different phases of the AC line cycle, and even if their relative phase offsets were known, there may be local noise in the zero cross detection circuit can distort the detection of actual position of the zero crossings making it hard to establish a shared time reference from the power line waveform alone. Each station transmits a Start Time Offset (STO) as one of the fields of its beacon transmission. The STO value corresponds to the time offset of the beacon being transmitted with respect to the shared Start Time of the network. The HE determines the Start Time according to a local time reference (e.g., the zero crossing of its AC line cycle). The other stations compute the Start Time using the STO field of the beacon it reliably received from the station with the lowest beacon level. Similar to the network time base synchronization, the start time synchronization is achieved in a hierarchical manner using the BL field and the STO field (instead of the BTS field) in the beacon.

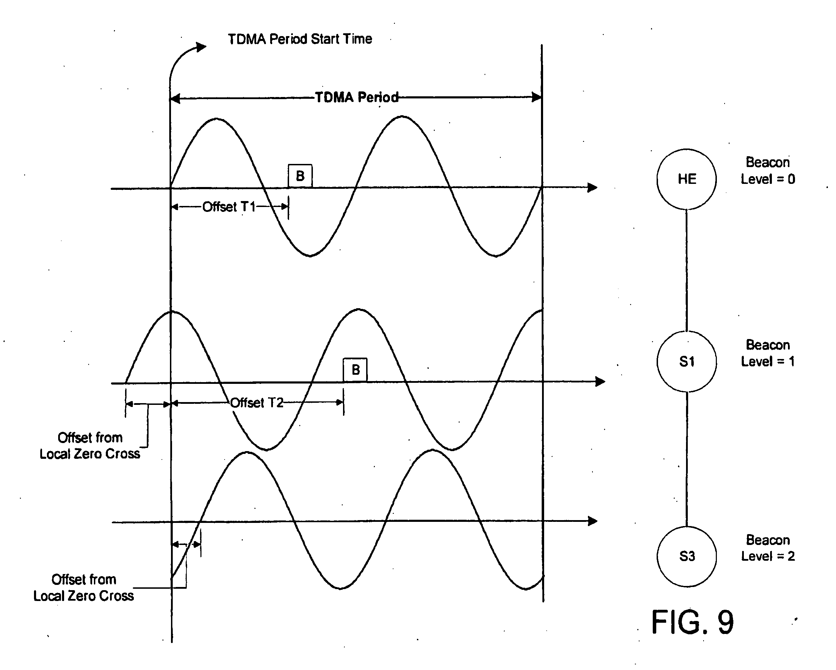

FIG. 9 shows an example of the tracking and synchronization of a Start Time of a TDMA period that is two line cycles long and aligned with the zero crossing of the HE station. In this example, the local power line waveform of HE, S1 and S2 are offset in phase from each other, but the stations are still able to establish a shared Start Time that has a different offset from each local zero crossing. The HE station transmits a beacon with the STO field set to T1. When any Beacon Level 1 station such as S1 hears the beacon, it can determine an estimate of the Start Time by subtracting T1 from the time the beacon was received. When S1 transmits a beacon, the STO field is set to T2, which is the time between the estimated Start Time and the time of transmission of its beacon. Station S3 is a Beacon Level 2 station and uses the STO value of T2 in the beacon received from station S1 to determine an estimate of the Start Time. In this manner, all the higher beacon level stations can synchronize their estimate of the Start Time using information from the beacon received reliably from the station with the lowest beacon level.

A station can predict the location of any number of future Start Times using any combination of their NTB timer, their local clock, and/or their local power line waveform. Additionally, even though a station may have been established as a Beacon Level N+1 station that reliably receives beacons from a Beacon Level N station, the station may occasionally miss a beacon due to the beacon being not received successfully or perhaps not being transmitted for some reason. If a given station does not receive a beacon transmission as expected, the station may also infer the location of a previous Start Time based on one or more previous STO values received in earlier beacons and any combination of their NTB timer, their local clock, and/or their local power line waveform. For example, line-cycle synchronization can be achieved by tracking a particular point in the AC line cycle using a Digital Phase Locked Loop (DPLL) or equivalent. Each station can use its local tracking history to predict future locations of the TDMA period Start Times.

Some aspects relate to data plane aggregation based on route and service type.

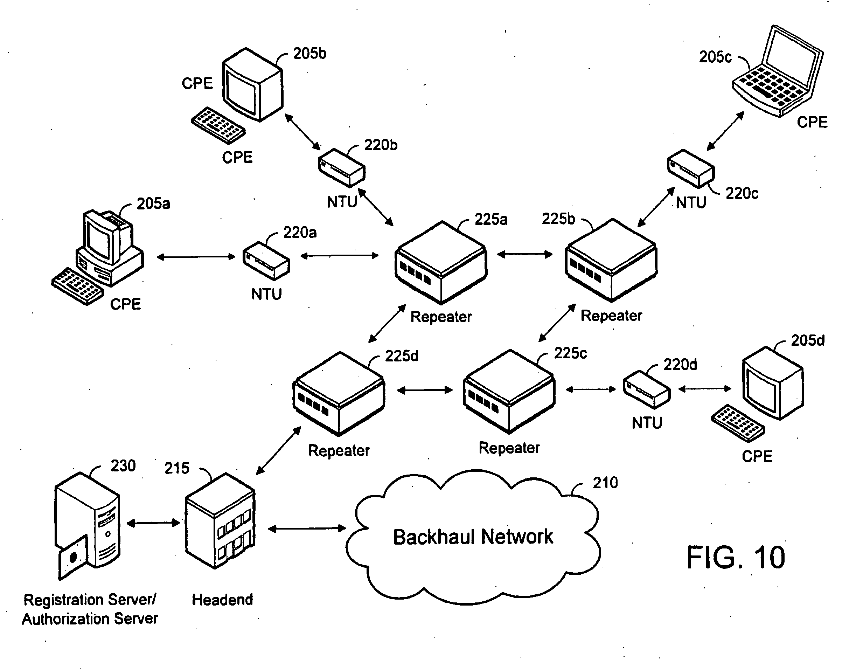

FIG. 10 is a block diagram of a powerline communication network. In various implementations, a powerline communication network can enable customer premises equipment (CPE) devices 205a-d to access a backhaul network 210 through a gateway (e.g., a headend server 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium. Systems for transmitting and receiving powerline network signals are further described above.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. Other implementations include the authorization server within the backhaul network 210. The authorization server can be operable to authenticate CPE devices 205a-d for transmission of data over the powerline network. When a CPE device 205a-d is not authenticated, in various implementations, the CPE device 205a-d can be provided access to a registration server 230. The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In various implementations, the registration server is not be co-located with the authorization server. In other implementations the registration server and authorization server are co-located, such as shown in FIG. 10. In various implementations, the registration server can be part of the backhaul network 201.

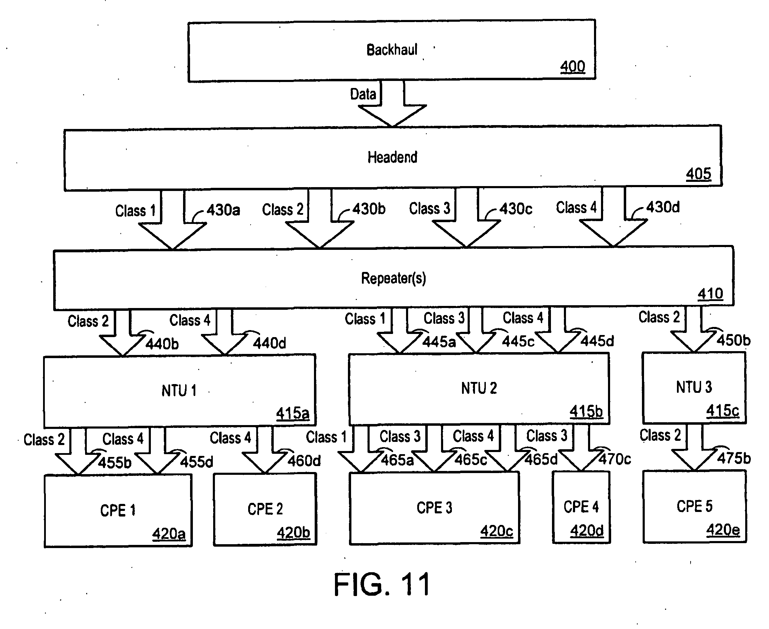

FIG. 11 is another block diagram of example network communications for an access network. In some implementations, the access network can be coupled to a backhaul network 400, for example, through a gateway device. In some examples, the backhaul network 400 can be the internet. In other examples, the backhaul network 400 can be an enterprise data network, a telephone network or any other type of network and/or protocol.

In some implementations, the access network can include a headend 405, repeater(s) 410, NTUs 415a-c, CPE devices 420a-e. The headend can receive data from the backhaul network 400 and distribute the data to repeater(s) 410. The repeater(s) 410 can operate to boost the strength of a data signal transmitted through the network. In some implementations, the headend 405 can aggregate data from the backhaul network destined for devices within the access network. The data can be aggregated based upon a next hop associated with the data and a class associated with the data. For example, there might be several data packets received at the headend 405 that are destined for the same repeater 410. Moreover, some of the sessions associated with the data packets may be such that they are not time sensitive (e.g., electronic mail, instant messaging, text messaging, file transfer protocol (FTP), hypertext transfer protocol (HTTP), etc.) while other sessions associated with the data packets might be highly dependent upon timing (e.g., voice over internet protocol (VoIP), videoconferencing, remote application access, etc.). Thus, the data packets can be grouped based upon the class of traffic associated with the session, thereby facilitating the same QoS to be provided to similar classes of traffic.

In the example of FIG. 11, the data received by the headend 405 from the backhaul network 400 is divided into four classes of traffic, class 1 430a, class 2, 430b, class 3 430c and class 4 430d. In other examples, the data packets can be divided into any number of classes based upon different service levels requested or based upon the number of communication protocols supported. The classes of traffic 430a-d at the headend can be divided based upon predefined classifications. In some implementations, the classes of traffic can correspond to levels of service provided to the data. For example, some subscribers might subscribe to a service level that only provides 1Mbps of bandwidth, while other subscribers might subscribe to a service level that provides 10Mbps of bandwidth. In such examples, traffic associated with the subscribers that subscribe to the higher service level can be prioritized over the lower service level.

In other implementations, the classes of traffic can correspond to the type of data being communicated. In such implementations, data transmission protocols that require QoS can be prioritized over data transmission protocols that do not require QoS. For example, class 1 might be associated VoIP data, and class 2 might be associated with electronic message data. In such an example, the headend 405 can prioritize the transmission of class 1 data to minimize interruption and/or jitter in a voice conversion, and can give class 2 traffic a lower priority because there is no QoS component associated with electronic messaging. In some implementations, the headend can assign a link identifier to an end-to-end connection during the initiation of the connection. After initiation of the connection, data associated with the connection can include the link identifier. The link identifier can be used to associate data with a class. In other implementations, the class of traffic might not be explicitly communicated using a link identifier, but instead can be implicitly derived from other fields in the packet. For example, fields in the ethernet packet header (e.g., VLAN tag), IP header (e.g., Type of Service field), etc. can be used to identify the traffic class. In some implementations, the fields in the packet that are used to identify the traffic class can be provided to the station during the initiation of the connection. In other implementations, these fields can be preconfigured into the station or are provided after the station joins the network.

In further implementations, the classes of traffic can correspond to a combination of level of service and type of data being communicated. In such implementations, data associated with users that subscribe to a first service level can be assigned predefined set of traffic classes based upon the type of data being transmitted, while users that subscribe to another service level can be assigned a different set of predefined traffic classes based upon the type of data being transmitted. In some examples, the set of predefined traffic classes associated with the first service level and the set of predefined traffic classes associated with the second service level can overlap. For example, in some instances high priority traffic associated with a low service level user can be classified with low priority traffic associated with a high service level user.

Data can be communicated from the headend 405 to the repeater(s) 410. The repeater(s) 410 can analyze the data received from the headend 405 to identify a next hop associated with the data. The data can be divided based upon the next hop associated with the respective data. In the example of FIG. 11, the repeater(s) 410 transmit data to NTUs 415a-c. The divided data can be further grouped according to the class associated with the data. For example, in FIG. 11, the repeater(s) 410 communicates class 2 data 440b and class 4 data 440d to a NTU 1 415a, while communicating class 1 data 445a, class 3 data 445c and class 4 data 445d to NTU 2 415b, and class 2 data 450b to a NTU 3 415c. The class 2 data 440b communicated from the repeater(s) 410 to NTU 1 415a can include data of the same type and/or service level destined for a CPE device 420a coupled to NTU 1 415a.

In the example of FIG. 11, a single repeater 410 is shown. In various implementations, the headend 405 communicates data to/from multiple repeaters. Moreover, there can be multiple repeaters 410 between the headend 405 and the NTUs 415a-c.

In some implementations, upon receiving the data from the repeater(s) 410, the NTUs 415a-c can divide the data based upon the CPEs 420a-e to which the data is destined. The NTUs 415a-c can then group the data into classes based upon the type of data and/or the service level associated with the CPE device 420a-e. In the example of FIG. 11, NTU 1 415a can group data into a second class 455b and a fourth class 455d destined for CPE 1 420a. NTU 1 415a can also group data into a fourth class 460d destined for CPE 2 420b. Similarly, NTU 2 415b can group data into a first class 465a, a third class 465 c and a fourth class 465d destined for CPE 3 420c, and a third class 470c destined for CPE 4 420d, while NTU 3 415c can group data into second class 475b destined for CPE 5 420e.

In some implementations, outbound data originated by the CPE devices 420a-e can be aggregated at the NTUs 415a-c for transmission to the repeater(s) 410. Similarly, such data can be aggregated by the repeater(s) 410 for transmission to the headend 405. The headend can use the classifiers to prioritize communication of the traffic or bandwidth assigned to the traffic. In further implementations, the devices included in the access network 405-420 can adaptively assign bandwidth to data traffic based upon a class associated with the traffic.

As described in FIG. 1, an access network can, for example, include a group of devices, such as a Head End (HE), Repeaters (R), Network Termination Units (NTU), and Customer Premise Equipment (CPE). Various types of CPE devices are the endpoint nodes in the network and can communicate with other nodes in the network including, such as an NTU, one or more repeaters, and the head end. In one implementation, each node in the network can communicate as a communication "station" (STA) using a physical layer protocol that can be used by the nodes to send transmissions to any other stations that are close enough to successfully receive the transmissions. The stations have the potential to interfere with each other, but techniques can be used to coordinate in a centralized and/or distributed manner, as described in more detail herein.

In one implementation, traffic between a pair of STAs that can communicate directly with one another can be exchanged as part of one or more links. For example, broadband power line (BPL) links can be categorized as either connection-based links and/or connectionless (e.g., priority) links. For example, each link can map to a unique MAC frame stream, or queue, within the STA. In one implementation, when multiple links are present between a pair of STAs, the prioritization of traffic can be enabled based on QoS metrics associated with the links.

In one implementation, link identifiers (LID) can be used to identify traffic belonging to various links between a pair of STAs. A MAC frame header can contain a LID associated with the data unit that transmits the data between links. In one implementation, a priority link identification (PLID) can be used for connectionless traffic. The PLID can indicate the traffic class and/or channel access priority for priority resolution during carrier sense multiple access (CSMA). In another implementation, a connection link identification (CLID) can be used for connection based traffic. For example, the connection links can be established as part of the TDMA allocation procedure, and the CLID associated with the traffic belonging to an established connection can determined by the HE.

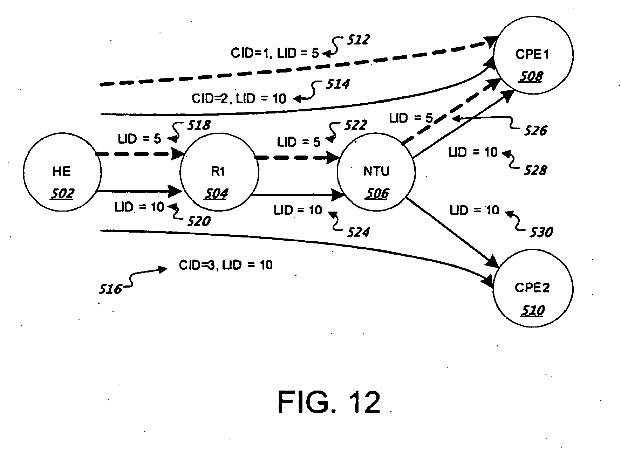

FIG. 12 is a block diagram of example network communications for an access network. In various examples, the devices in an access network can include: a head end, HE 502, a repeater, R1 504, a network termination unit, NTU 506, a first customer premise equipment, CPE1 508, and a second customer premise equipment CPE2, 510. Additionally, FIG. 12 illustrates three unidirectional downstream connections in the network with connection identifiers (CID) of 1, 2, and 3. However, in other examples, the connections can be bidirectional or unidirectional upstream connections. For example, the first connection 512 is between HE 502 and CPE1 508 and has a LID of 5. The second connection 514 is between HE 502 and CPE 1 508 and has a LID of 10. The third connection 516 is between HE 502 and CPE2 510 and has a LID of 10.

In some implementations, when a device has traffic (e.g., data) with multiple LIDs that is intended for the same destination (e.g., the next device or hop), the traffic can be transmitted as separate data units. In another implementation, when a device has traffic (e.g., data) with the same LID that is intended for the same destination (e.g., the next device or hop), the traffic can be transmitted in a single data unit, or a single burst of data units.

In FIG. 12, there are two classes of links, LID=5 518 and LID=10 520, for data communicated between HE 502 and R1 504. In some implementations, the HE 502 can determine that the traffic with the same LID and with the same next hop destination can be aggregated and transmitted together in a combined data unit from HE 502 to R1 504, while traffic that includes different LIDs or different next hop destinations can be transmitted in separate units from HE 502 to R1 504. For example, at the HE 502, traffic from the second connection 514 and the third connection 516 can be aggregated into a single data unit (e.g., link 520), because the second connection 514 and the third connection 516 share the same LID and have the same next hop destination. Furthermore, the traffic from the first connection 512 can be included in a separate data unit (e.g., link 518), because it does not share the same LID with the second connection 514 and the third connection 516.

In some implementations, after the next device receives the aggregated and/or separate data via the links, the next device determines how the data can be aggregated and/or separated to be transmitted to the next device. For example, in the illustration of FIG. 12, two links of data, LID=5 518 and LID=10 520, can be received at R1 504 from HE 502. At R1, it can be determined that the traffic with the same LID and with the same next hop destination can be aggregated and transmitted together in a data unit from R1 504 to NTU 506, while traffic that has different LIDs and different next hop destinations can be transmitted in separate units from R1 504 to NTU 506.

For example, at R1 504, there are two link identifiers (e.g., LID=5, LID=10) represented in the three connections between R1 504 and NTU 506. Therefore, at R1 504, traffic from the second connection 514 and the third connection 516 can be aggregated into a single link 524, because the second connection 514 and the third connection 516 share the same LID (e.g., LID=10) and are being transmitted to the same next hop destination, NTU 506. Furthermore, the traffic from the first connection 512 can be included in a separate link 522, because it does not share the same LID (e.g., LID=5) with the second connection 514 (e.g., LID=10) and the third connection 516 (e.g., LID=10).

At the NTU 506, traffic can be received via two links 522, 524 from R1 504. The NTU 506 can determine how to transmit the traffic downstream to CPE1 508 and CPE2 510. The NTU 506 can determine that traffic with the same LID and with the same next hop destination can be aggregated and transmitted together in a combined data unit from NTU 506 to CPE1 508 or CPE2 510, while traffic that has different LIDs and different next hop destinations can be transmitted in separate units from NTU 506 to CPE1 508 or CPE2 510.

For example, at the NTU 506, the first connection 512 has a LID=5 and needs to be transmitted to CPE1 508; the second connection 514 has a LID=10 and needs to be transmitted to CPE1 508; and the third connection 516 has a LID=10 and needs to be transmitted to CPE2 510. Therefore, at NTU 506, none of the three connections share the same LID and the same next hop destination, and the traffic can be transmitted via separate links 526, 528, 530 to the respective CPE 508, 510. For example, as illustrated in FIG. 12, the traffic from the first connection 512 can be included in a separate link 526 from NTU 506 to CPE1 508; the traffic from the second connection 514 can be included in a separate link 528 from NTU 506 to CPE1 508; and the traffic from the third connection 516 can be included in a separate link 530 from NTU 506 to CPE2 510.

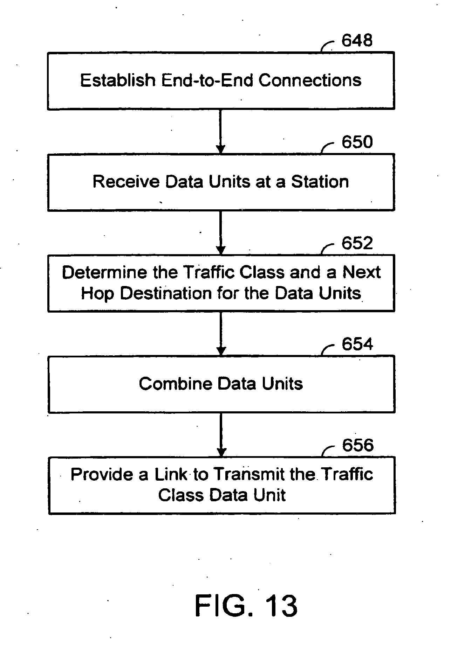

FIG. 13 is flow diagram of an example process for communications over a network. At stage 648, a plurality of end-to-end connections each comprising a plurality of data units are established. In some implementations, the end-to-end connections can be established by a headend (e.g., headend 405 of FIG. 11). The data units belonging to each connection are assigned a traffic class when the end-to-end connections are established. Some of the end-to-end connections can include the same traffic class. For example, as illustrated in FIG. 12, there are three unidirectional downstream connections in the network with connection identifiers (CID) of 1, 2, and 3. These three connections can be classified as end-to-end connections.

At stage 650, data units are received at a station. The data units can be received, for example, by a device (e.g., headend 405, repeater(s) 410, NTUs 415a-c, CPEs 420a-e of FIG. 11) within an access network. The data units can, for example, be received over a broadband power line network at a station.

At stage 652, a traffic class and a next hop destination is determined for data units. The traffic class and next hop destination of the data units can be determined, for example, by a station within the access network (e.g., headend 405, repeater(s) 410, NTUs 415a-c, or CPEs 420a-e of FIG. 11) examining MAC frame headers associated with the data units. The MAC frame header can include a source address, destination address, connection identifier, and link identifier. In some implementations, the traffic class can be identified by determining the traffic class associated with a link identifier in the MAC frame header. The next hop destination can be identified by determining the destination address in the MAC frame header and utilizing it to determine the next hop destination. In some implementations, the next hop destination can be determined by utilizing a routing table.

At stage 654, data units can be combined. In some implementations, data units that share a common traffic class and a common next hop destination can be combined into a traffic class data unit. For example, in FIG. 12, data units from the second connection 514 and the third connection 516 can be combined into a single traffic class data unit, e.g., link 524, because the second connection 514 and the third connection 516 share the same traffic class (e.g., LID=10) and they are being transmitted to the same next hop destination (e.g., NTU 506).

At stage 656, a link is provided to transmit a traffic class data unit. In some implementations, the link provided to transmit the traffic class data unit to the next hop destination based on service quality requirements for the traffic class associated with the traffic class data unit. In some examples, the service quality requirements associated with the traffic class can be the QoS requirements that can refer to the capability of a network to provide better service to specified types network traffic. The goal of the QoS requirements can be to provide priority including dedicated bandwidth, controlled jitter and latency (required by some real-time and interactive traffic), and improved loss characteristics. QoS requirements can also make sure that providing priority access for one or more data units does not make other transmitted data units fail.

In one implementation, providing a link to transmit a traffic class data unit can include determining a schedule to transmit the traffic class data units to the next hop destination. For example, methods of scheduling communications between stations of a network provided herein can be utilized.

In one implementation, a method for transmitting the traffic class data units to the next hop destination can include providing a physical layer for handling physical communication over the provided link; providing a high level layer that receives traffic class data units from the station and supplies high level data units for transmission over the provided link; providing a MAC layer that receives the high level data units from the high level layer and supplies low level data units to the physical layer; at the MAC layer, encapsulating content from a plurality of the high level data units; dividing the encapsulated content into a plurality of pieces with each piece capable of being independently transmitted; and supplying low level data units containing one or more of the plurality of pieces. A system and method for transmitting traffic class data units as taught in U.S. Patent Application No. 10/720,742, published under US 2005/0114489, can be used..

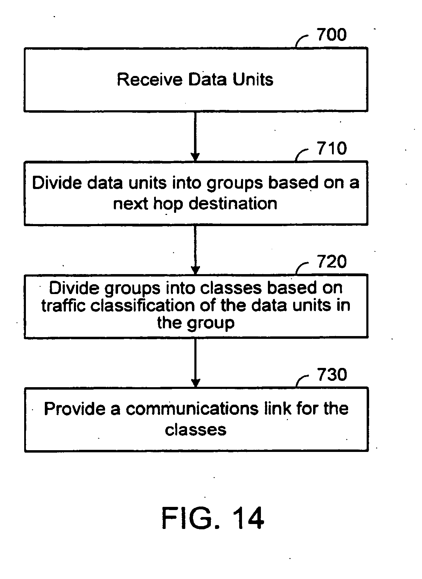

FIG. 14 is a flow diagram of another example process for aggregating communications based on route and service type. At stage 700, data units can be received. The data units can be received, for example, by a station within an access network (e.g., headend 405, repeater(s) 410, NTUs 415a-c, CPEs 420a-e of FIG. 4). In some implementations, the data units are received subsequent to establishing a connection between the devices within the access network. The connection can be assigned an LID during set up. The LID can identify a class associated with the data units in the connection. In some implementations, the data units can include a MAC frame header that can include a source address, destination address, connection identifier, and link identifier, among others.

At stage 710, data units can be divided into groups based on a next hop destination. The data units can be divided into groups, for example, by a device within the access network (e.g., headend 405, repeater(s) 410, NTUs 415a-c, CPEs 420a-e of FIG. 11). The destination address within the MAC frame header of each data unit can be used to determine the next hop associated with the data unit. In some implementations, a routing table can be used to identify the next hop based upon the destination address in the MAC header. In other implementations, the routing table can be used to identify the next hop based upon the destination address in the MAC header and based upon the LID associated with the traffic. For example, the LID can identify the type of data included in the data unit. The routing of some traffic can be based upon the type of traffic and the bandwidth or other characteristics associated with potential next hop destinations.

At stage 720, the groups can be divided into classes based on traffic classification of the data units in the group. The groups can be divided into classes, for example, by a device within the access network (e.g., headend 405, repeater(s) 410, NTUs 415a-c, CPEs 420a-e of FIG. 11). The data units can be divided into classes, for example, based upon LIDs included within the MAC frame header of the data units.

At stage 730, a communications link is provided for the classes. In some implementations, the link provided to transmit the traffic class data unit to the next hop destination based on service quality requirements for the traffic class associated with the traffic class data unit. In some examples, the service quality requirements associated with the traffic class can be the QoS requirements that can refer to the capability of a network to provide better service to specified types network traffic. The goal of the QoS requirements can be to provide priority including dedicated bandwidth, controlled jitter and latency (required by some real-time and interactive traffic), and improved loss characteristics. QoS requirements can also make sure that providing priority access for one or more data units does not make other transmitted data units fail.

Some aspects relate to routing traffic between stations, within a network.

In a BPLN, stations that cannot directly communicate with one another use one or more repeaters. A method for finding the least cost routing from any station in the BPLN to the headend is described herein, as well as a method for finding a route between any two stations in the BPLN based on their route to the headend.

*Routing approach to/from Headend (HE)*

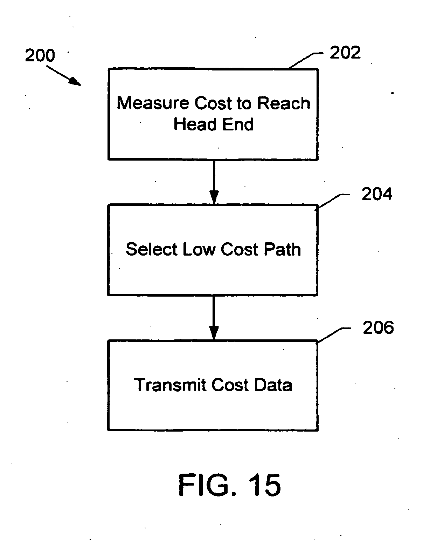

FIG. 15 is a flowchart of an example method 200 for establishing a route to a headend in a communication network. A cost to reach the headend is measured (202). A cost can be, for example, a number of station hops, an uplink bandwidth, a downlink bandwidth, and/or a network load measurement. The cost to reach the headend can be measured at a station in the network, for example, a repeater station and/or a network termination unit. In an implementation, the station listens for beacon messages (or management messages) transmitted by other stations in the network. The stations can transmit cost data in their beacon messages, and/or cost parameters can be measured by the listening station. For example, cost data from received beacon messages can be combined with one or more costs measured by the listening station.

A low cost path to the headend is selected (204). The low cost path can be selected, for example, at the listening station following an evaluation of several paths discovered during a listening period. A listening period can, for example, be a 10 minute window following power-up of the listening station. The low cost path can be, for example, the path with the highest downlink bandwidth, the path with the highest uplink bandwidth, the path with the lowest hop count to the headend, the path with the least network load, and/or a path having a compromise of these characteristics.

Cost data is transmitted (206). For example, a station can transmit cost data in periodic beacon messages. In some implementations, an effective downlink bandwidth from the headend, an effective uplink bandwidth to the headend, and/or a number of network hops to the headend are included in a periodically transmitted beacon message.

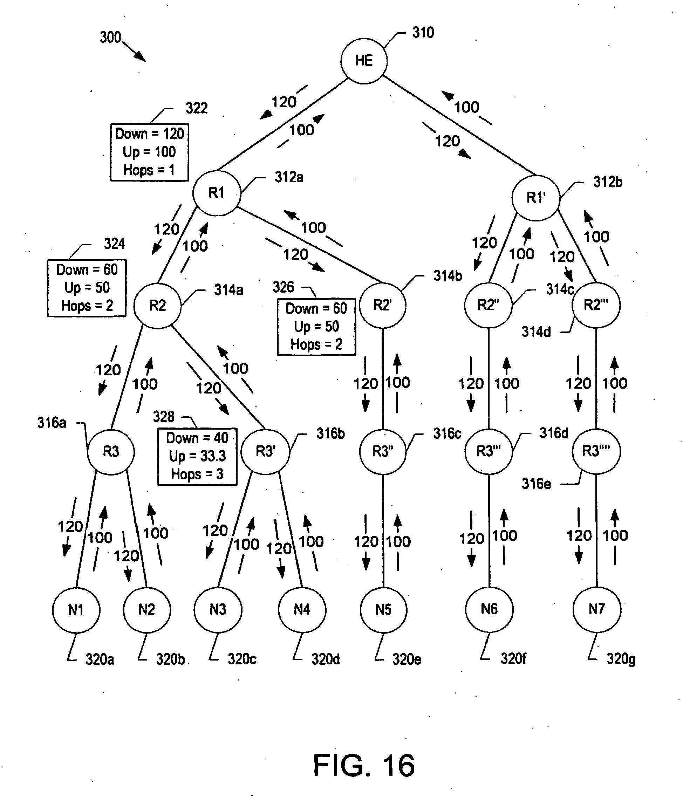

FIG. 16 is a block diagram of an example network for implementing the method of FIG. 15. The headend 310 connects to a wide area network (not shown) to transmit data to and from the network termination units 320a-320g. Intermediate stations 312a, 312b, 314a-314d, and 316a-316e act as repeaters to pass data across the network. The intermediate stations are needed due to the network termination units and the headend being incapable of direct communication due to, for example, signal attenuation over a distance between them. In the example network topology shown in FIG. 16, the lines connecting the stations indicate communication paths. For example, station R1 312a can communicate directly (without the need of a repeating station) with the headend 310 and has established communication with the headend 310. Other routes between stations are possible, but the lines connecting the stations indicate that this path has been selected for the example network shown.

In the example shown, the communication paths consistently have a downlink bandwidth of 120 Mbits/sec and an uplink bandwidth of 100 Mbits/sec as indicated by the directional arrows.

In some implementations, the headend 310 is a headend of a BPLN. The headend 310 periodically transmits a beacon message. Stations which are within range of the headend can receive (or "hear") the beacon message from the headend 310. These stations can measure the "cost" of communicating with the headend 310. In some implementations, the cost is the downlink bandwidth of the network between themselves and the headend 310, where cost is minimized by seeking the highest bandwidth. For the example shown, both R1 312a and R1' 312b can hear the headend, measure the bandwidth of the network between themselves and the headend, and establish a direct communication path to the headend.

It is possible, for example, that the downlink bandwidth between R1' 312b and the headend 310 would be so low as to cause R1' 312b to instead select a path to the headend 310 through R1 312a if such a path would provide a superior downlink bandwidth. For the example network shown, however, R1 312a and R1' 312b each establish direct communication with the headend 310.

In some implementations, following the selection of the direct path to the headend 310, R1 312a and R1' 312b begin transmitting their own periodic beacon message. Because of their differing locations in the network, the beacons of R1 and R1' are heard by stations that could not hear the beacon of the headend. Some stations might hear both the beacons of R1 and R1', while others might hear only one. In an implementation, the beacons of R1 and R1' include cost data indicating a cost of communicating to the headend through R1 and R1'. For example, the beacon of R1 can indicate, as is shown in block 322 that the downlink bandwidth between R1 and the headend is 120 Mbit/sec, the uplink bandwidth is 100 Mbit/sec, and the number of hops from R1 to the headend is one.

By listening to beacon messages and cost data included therein, other stations can determine a low cost path to the headend. For example R2 hears the beacon from R1 which indicates the uplink bandwidth, the downlink bandwidth, and the number of hops to the headend from R1. R2 can measure the bandwidth of the network between R2 and R1. R2 can calculate an effective downlink bandwidth between R2 and the headend, through R1 according to the following formula:

$$BW\_Eff_{comp} = \cfrac{1}{\cfrac{1}{BW\_Eff_{beacon}} + \cfrac{1}{BW\_Meas}}$$

Where $BW\_Eff_{comp}$ is the effective downlink bandwidth of the composite network path from R2 to the headend, $BW\_Eff_{beacon}$ is the downlink bandwidth data received in the R1 beacon, and $BW\_Meas$ is the measured downlink bandwidth between R2 and R1. In some implementations, an effective uplink bandwidth is similarly calculated.

In some implementations, R2 periodically transmits beacon messages that include the calculated effective downlink and uplink bandwidths and a hop count to reach the headend through R2. For the example shown in FIG. 16, in block 324, the beacon indicates that the effective downlink bandwidth between R2 and the headend is 60 Mbit/sec, the effective uplink bandwidth is 50 Mbit/sec, and the hop count is two. R2' similarly transmits beacon messages with its own calculated effective bandwidths and hop count as indicated by block 326.

Station R3' can hear station R2. Station R3' similarly calculates its effective bandwidths and includes this data and a hop count in periodically transmitted beacon messages. For the example shown in FIG. 16, station R3' transmits beacons with the data as shown in block 328. The beacon messages of R3' can be heard by stations N3 and N4 which establish communications with R3'.

The mechanism described so far provides a mechanism for stations in the BPLN to send traffic to the headend. For example, N3 sends the traffic intended for the HE to R3'. This traffic then gets routed through R2 and R1 and finally to the HE. For sending traffic from the HE to N3 (or any other STA in the BPLN), the HE and all repeaters maintain information regarding the set of STAs that can be reached through it and their corresponding next hop repeaters (if any). This information is referred to a routing table. In this example, the HE routing table indicates that N3 can be reached through R1. Similarly, the R1 and R2 routing tables indicate that N3 can be reached through R2 and R3' respectively. Finally, the R3' routing table indicates that it can directly reach N3.

To facilitate the population of routing tables at all stations on a route to the HE, in some implementations each station that newly joined the BPLN sends a Route Refresh message that contains the MAC address (or any other unique identifier associated with the new station) to the HE. Stations that are in the route from the STA to the HE will process these messages and add the new station to their routing table.

For example, when N3 first joins the network, it uses the beacons received from R3' to determine that R3' is the next hop destination to reach the HE. N3 will then send a Route Refresh message intended for the HE to R3'. R3' will thus learn that it can directly reach N3 (R3' updates its routing table) and then forwards the message to R2. R2 will learn that N3 can be reach through R3' (R2 updates its routing table) and then forwards the message to R1. R1 will then learn that it can reach N3 through R2 (R1 updates its routing table) and then forwards the message to the HE, which then learns that N3 can be reached through R1 (the HE updates its routing table). This procedure establishes the route from the HE to N3.

Once the initial route is established, STAs can periodically, or based on need, send Route Refresh messages to the HE to ensure that the route from the HE to the station is always current. In some implementations, stations update their routing tables whenever they receive MSDUs intended for the HE from other stations. For example, whenever R1 receives an MSDU from N3 via R2, it updates its routing table to indicate that it can reach N3 through R2. This ensures that the routing tables remain current without the need for sending an explicit Route Refresh message.

## Route Changes

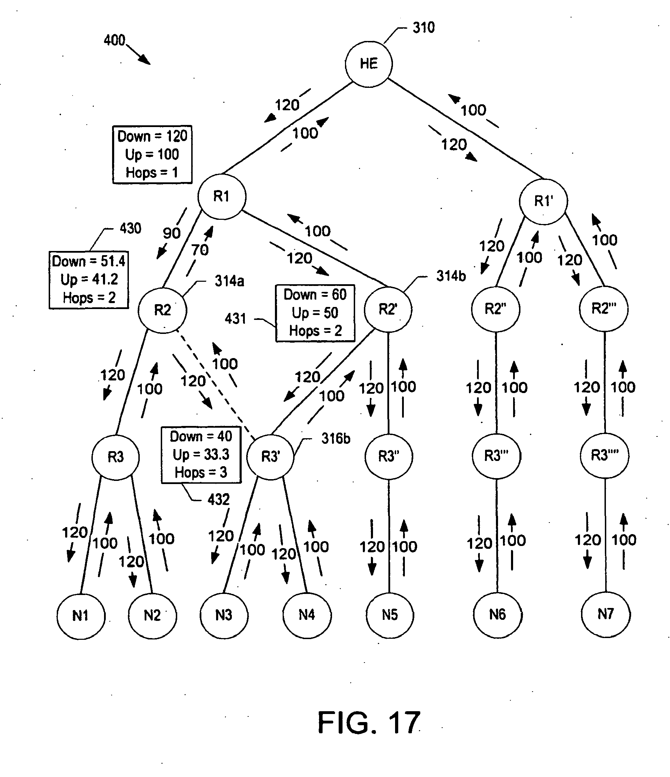

A route between a station and the HE can change when the cost on one or more links change. FIG. 17 is a block diagram of the example network of FIG. 3 with modified routing. In FIG. 17, station R3' has altered its selected path to the headend. In FIG. 17, the downlink and uplink bandwidths of the network section between R1 and R2 is 90 and 70 Mbits/sec, respectively, which represents lower bandwidths for the same link than in FIG. 16. In the example of FIG. 17, R3' has altered its selected path to the headend (compared to FIG. 16) by selecting a route through R2' instead of R2.

To change its selected route to the headend, R3' can, for example, perform the method of FIG. 15. A beacon message received at R3' from R2 can include an indication of an effective downlink bandwidth of 51.4 Mbit/sec, an effective uplink bandwidth of 41.2 Mbit/sec, and hop count of 2, as shown in block 430. A beacon message received at R3' from R2' includes an indication of an effective downlink bandwidth of 60 Mbit/sec and an effective uplink bandwidth of 50 Mbit/sec between R2 and the headend. R3' can measure the bandwidth of the network between itself and R2 (dashed line) to determine that the downlink and uplink bandwidths are 120 and 100 Mbits/sec respectively. This measurement can be used with the downlink and uplink data in the beacon received from R2 to calculate an effective bandwidth of the composite network between R3' and the headend through R2. Using the formula above, the calculated effective downlink bandwidth is:

$$BW\_Eff_{comp} = \frac{1}{\frac{1}{51.4} + \frac{1}{120}} = 36.0$$

The effective uplink bandwidth can be similarly calculated.

R3' can additionally hear beacon messages from R2'. Beacon messages from R2' indicate that the effective downlink and uplink bandwidth between R2' and the headend is 60 and 50 Mbit/sec respectively, and the hop count is 2, as shown in block 431. R3' can measure the bandwidth of the network between itself and R2' to determine that the downlink and uplink bandwidths are 120 and 100 Mbits/sec respectively. This measurement can be used with the downlink and uplink data in the beacon received from R2' to calculate an effective bandwidth of the composite network between R3' and the headend through R2'. Using the formula above, the calculated effective downlink bandwidth is:

$$BW\_Eff_{comp} = \frac{1}{\frac{1}{60} + \frac{1}{120}} = 40$$

R3' can select a low cost route to the headend. Comparing the effective downlink bandwidth from the headend through R2 and through R2', R3' can select the route through R2' due to its lower cost (in this example, its superior downlink bandwidth). R3'. can transmit periodic beacon messages including the calculated effective downlink and uplink bandwidths of 40 and 33.3 Mbit/sec, respectively. Beacon messages transmitted from R3' can include the data shown in block 432. This data is received by stations within range of R3' and can be used by those stations in determining whether to select a path to the headend through R3' or another route.

In some implementations, a station that changed its route to the HE can send a Route Update message to the headend that contains that list of stations that can be reached through it. All stations that receive the Route Update message can update their Routing Table to include the new routes for the stations listed in the Route Update message.

For example, if R3' modifies its route, it can send a Route Update message intended for the HE to R2'. The Route Update message can indicate that N3 and N4 can be reached through R3'. Upon receiving the Route Update message, R2' can update its routing table to indicate that N3 and N4 can be reached through R3', and forward the message to R1. R1 can similarly update its routing table and forward the Route Update message to the HE, which then updates its routing table. Subsequently, all traffic from the HE to R3', N3 and N4 will flow through the modified route.

### Routing Between Any Two Stations

The routing mechanism described above also enables routing of traffic between any two stations in the network. For example, in FIG 3, N3 can send traffic to N1 without the need to route it all the way through the HE. In some implementations, N3 can receive an MSDU from its host that is intended for N1, and N3 can determine that it cannot directly reach N1. N1 then forwards the MSDU to R3' (i.e., its next hop destination to the HE). R3 uses its routing table to determine that it does not have a route to R3' and hence forwards the packet to R2 (i.e., its next hop destination to the HE). R2 then uses its routing table to determine that N1 can be reached through R3 and forwards the MSDU to R3. R3 can then forward the MSDU to N1.

Some aspects relate to retransmission of broadcast and multicast traffic over a shared medium.

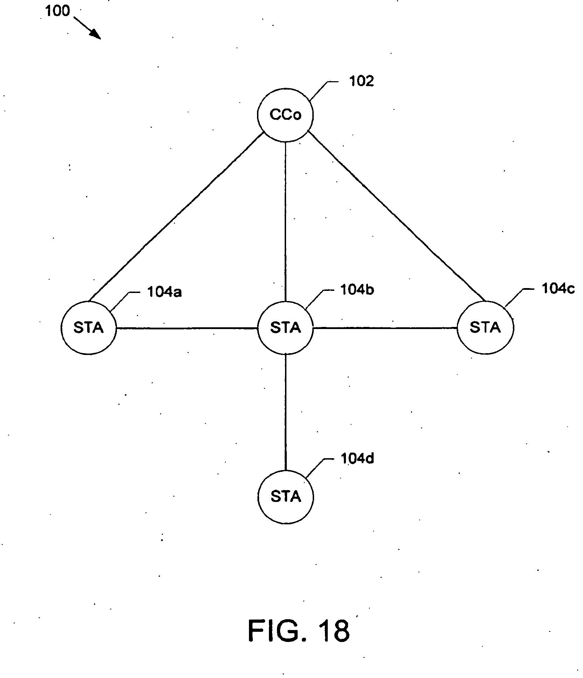

FIG. 18 is a diagram of an example powerline network 100. The example powerline network 100 can be, for example, a home broadband over powerline network (BPLN) that enables communication between various devices in the home. The home BPLN can be used to communicatively connect a variety of in-home devices (e.g., computers, televisions, set-top-boxes, audio systems, audio speakers, etc.).

The network includes a central coordinator 102 (CCo) and one or more stations 104a-104d. In the example network 100, the central coordinator 102 is the master of the network and is responsible for managing various stations in the network. In general there can be stations in the network that may not communicate directly with the central coordinator 102 (e.g., station 104d). Further, one or more stations in the network may not be able to communicate directly with each other (e.g., stations 104a and 104c).

In a BPLN, stations that cannot directly communicate with one another use one or more repeaters. A method for efficiently communicating broadcast/multicast traffic within the BPLN is described herein.

### Repeating of Multicast/Broadcast Traffic

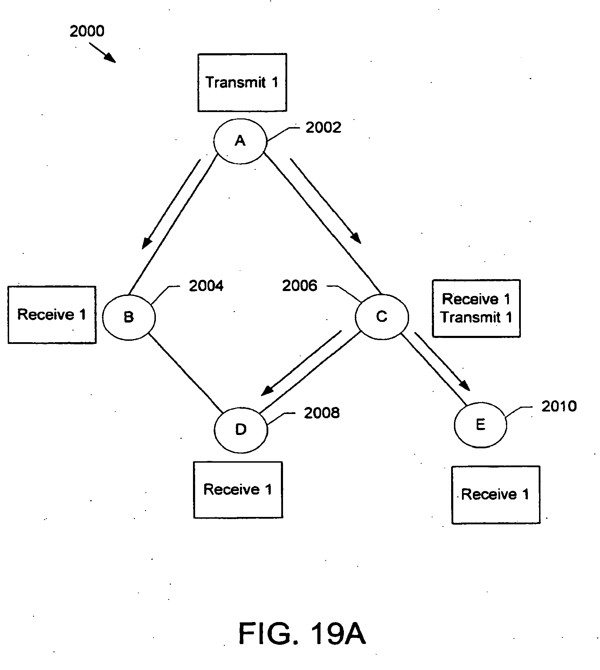

FIG. 19A is a block diagram of a network 2000 implementing selective broadcast. The network 200 includes stations A 2002, B 2004, C 2006, D 2008, and E 2010 in communication according to the network topology shown. The solid lines connecting the various stations indicate that the connected stations can 'hear' each others' transmissions such that a transmission at station A 2002 can be heard at stations B 2004 and C 2006. A transmission at B 2004 can be heard at stations A 2002 and D 2008. A transmission at C 2006 can be heard at stations A 2002, D 2008, and E 2010.

In an implementation, station A 2002 transmits, for example, a broadcast message. The broadcast message is transmitted from station A and is therefore heard/received at stations B 2004 and C 2006. Stations B 2004 and C 2006 are both capable of successfully retransmitting the broadcast message for reception at station D 2008. In an implementation, station B 2004, however, does not retransmit the broadcast message in order to conserve network resources and prevent station D 2008 from receiving duplicate copies of the broadcast message. The broadcast message is retransmitted at station C 2006 which enables reception of the message at both stations D 2008 and E 2010.

In an implementation, stations can receive instructions to operate in this manner from a remote station having knowledge of the network topology. For example, station A 2002 can provide this information to stations B 2004, C 2006, D 2008 and E 2010 based on network topology. Alternatively, stations B 2004, C 2006, D 2008 and E 2010 can determine this mode of operation using knowledge of the network topology stored in local memory. In an implementation, stations are set to a default of retransmitting broadcast/multicast messages unless they receive instructions not to. Alternatively, stations can be set to a default of not retransmitting broadcast/multicast messages unless they receive instructions to affirmatively do so.

In some implementations, instructions for retransmitting broadcast messages are dependent on the identity of the station from which the broadcast message is received.

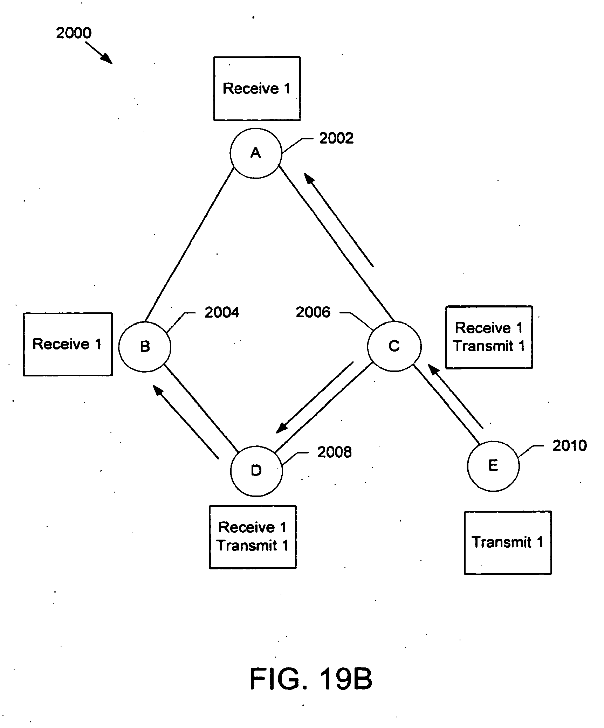

FIG 19B shows the network 2000 of FIG 19A implementing selective broadcast for a message from an alternative station. Station E 2010 transmits, for example, a broadcast message. The broadcast message is transmitted from station E 2010 and is heard/received at station C 2006. Station C 2006 retransmits the broadcast message and both station A 2002 and D 2008 receive the retransmitted message.

In an implementation, station D 2008 then retransmits the message. Station A 2002, however, does not retransmit the message. In this example, transmissions from station E 2010 are retransmitted by station C 2006 and station D 2008. Note that station B 2004 can be reached either through Station A 2002 or D 2008. In this example, station D 2008 has been given a higher priority than station A 2002 in the retransmission rules. The selection of Station D 2008 can be based, for example, on network topology information or other network data. For example, Station D 2008 may have a better communication path to Station B 2004 (e.g., higher bandwidth or lower latency), compared to station A 2002. Comparing FIG. 19A and FIG. 19B, station D 2008 is configured to retransmit broadcast transmissions originating from station E 2010, but it is configured not to retransmit broad messages from Station A 2002.

Multicast transmissions are typically intended for a subset of the stations in a network (a multicast group). Multicast transmissions can be treated in a manner similar to that of non-selective broadcast transmissions (i.e., multicast transmissions can be repeated at all stations to ensure receipt at stations in the network for which messages are intended). While this simplifies the handling of multicast traffic, this too can lead to inefficiencies due to unnecessary retransmissions.

In some implementations, retransmissions of multicast transmissions are performed selectively so that members of the corresponding multicast group receive the transmission, while unnecessary transmissions are reduced or eliminated.

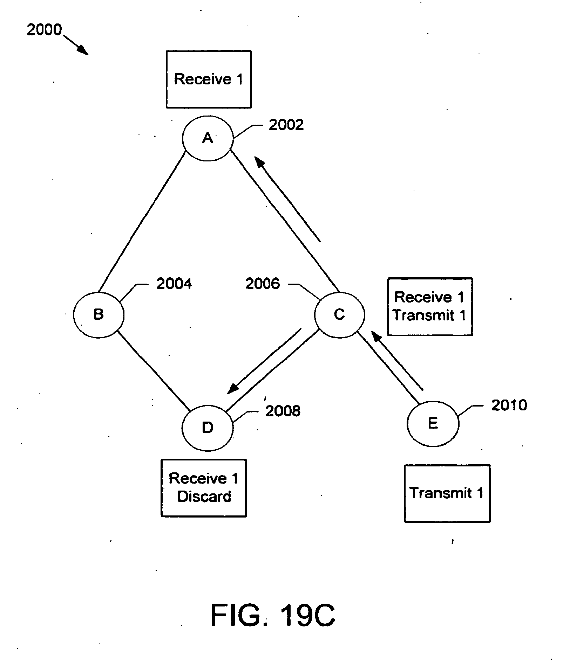

FIG. 19C is a block diagram of a network 2000 implementing selective multicast. Station E 2010, for example, transmits a multicast message. In this example, the multicast transmission is intended for station C 2006 and A 2002 (i.e., station A and C are members of the multicast group). Station E 2010 transmits the message and it is received by station C 2006. Station C retransmits the received message and it is received by station A 2002 and D 2008. Station D 2008 can discard the received message as station D is not part of the multicast group.

In some implementations, stations can receive instructions to operate in this manner from a remote station having knowledge of the network topology and the member stations of the multicast group. For example, station A 2002 can provide this information to stations B 2004, C 2006, D 2008 and E 2010 based on network topology and the knowledge that stations A 2002 and C 2006 belong to the multicast group. Alternatively, stations A 2002, B 2004, C 2006 and D 2008 can determine this mode of operation using knowledge of the network topology and multicast group information stored in local memory. In an implementation, stations are set to a default of retransmitting multicast messages unless they receive instructions not to do so. Alternatively, stations can be set to a default of not retransmitting multicast messages unless they receive instructions to affirmatively do so.

In some implementations, instructions for retransmitting multicast messages are dependent on the identity of the station from which the multicast message is received as well as on the multicast address. In other implementations, instructions for retransmitting multicast messages are dependent on the topology and the multicast address. In other implementations, multicast messages are treated as broadcast messages and instructions for retransmitting multicast messages are dependent only on the identity of the station from which the multicast address is received.

In an implementation, a master device of a network (for example, a Head End or a Central Coordinator of a BPLN) that has knowledge of the network topology and multicast groups (in case of a multicast transmissions), analyzes the network topology and distributes instructions to stations in the network regarding the circumstances under which a given station is to retransmit broadcast/multicast messages. The analysis of the network topology results in a set of retransmission rules designed to efficiently broadcast/multicast messages across a network, ensuring that each station in the network (in the case of a broadcast message) or each station in a multicast group (in the case of a multicast message) receives the message, while reducing or eliminating unnecessary duplicates.

In analyzing the network topology, the master can instruct a given station to not retransmit broadcast/multicast messages where each station that can hear the given station can receive the broadcast/multicast message from other retransmitting stations. In an implementation, the master can instruct a given station to retransmit broadcast/multicast messages where there is a station in the network for which the message is intended (i.e., all stations for the broadcast message, and the multicast group for multicast messages) that would not receive the broadcast/multicast message if the given station did not retransmit the broadcast/multicast message. Such instructions can be sent even if they will, in some cases, result in duplicate copies of the broadcast/multicast message being received at another station in the network.

In other implementations, stations in the network analyze network topology data available in the station's local memory (in a routing table, for example) to determine the circumstances under which the station retransmits or does not retransmit broadcast/multicast messages.

Repeating of broadcast/multicast messages can result in duplicate copies of the same message being received at a station. To properly detect duplicates, the broadcast/multicast information can be associated with sequence numbers and other information (such as addressing information, stream identifiers. etc.) to properly identify duplicates and reject them. Such information can be added as part of MAC Encapsulation. Two examples of MAC Encapsulation, 2-level MAC Encapsulation and 1-level MAC Encapsulation are described below.

### 2-Level MAC Encapsulation

The systems and methods described above can be implemented in a network using a MAC encapsulation protocol, such as the network described in U.S. Patent Application. No. 10/720,742, published under US 2005/0114489.

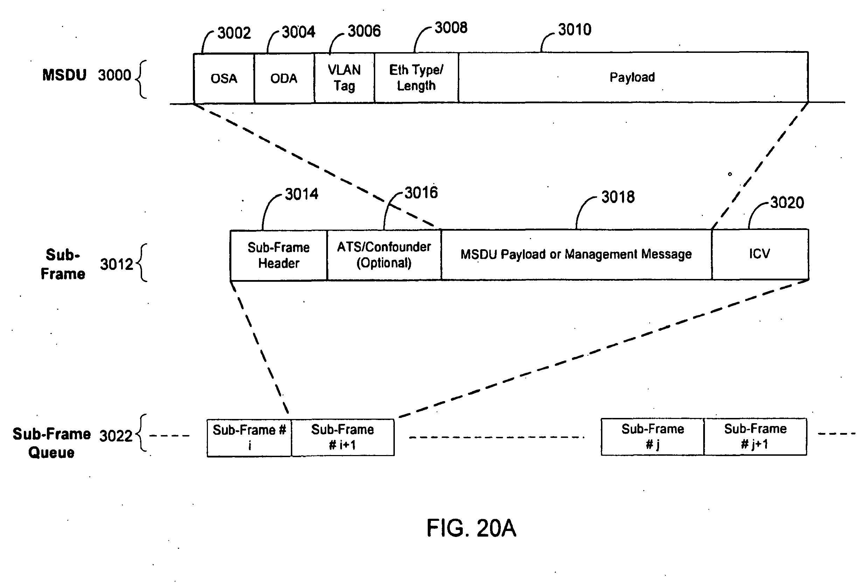

FIG. 20A illustrates an MSDU 3000 to be transmitted using 2-level MAC encapsulation. A MAC Service Data Unit (MSDU) is a high level data unit to be transported as requested by, for example, a higher level layer. In some implementations an Ethernet frame based MSDU is used as shown in FIG. 20A. An Ethernet frame includes an Original Source Address (OSA) 3002, an Original Destination Address (ODA) 3004, an optional VLAN Tag 3006, an Ethernet Type/Length field 3008, and a Payload.

The MAC sub-layer processes the MSDUs received from higher layers and converts them to Sub-Frames. FIG. 20A shows an example format of a Sub-Frame 3012. The Sub-Frame 3012 includes a Sub-Frame header 3014, Arrival Time Stamp (ATS)/Confounder 3016, MSDU payload or management message 3018, and an Integrity check vector (ICV) 3020.

The Sub-Frame header 3014 includes Sub-Frame type and Sub-Frame length fields. The Sub-Frame Type field indicates the type of information included in the Sub-Frame. It indicates whether the MSDU Payload is valid, and if valid, whether the MSDU payload is associated with an arrival time stamp or a confounder or none of these. The Sub-Frame Length indicates the length of the Sub-Frame without considering the length of the header or the ICV. ATS/ Confounder 3016 is an optional field. When this field corresponds to the ATS, it indicates the value of the Sender's Network Time Base at the time of the arrival of the MSDU. ATS is used for jitter control. When confounder is present, it is a pseudo-random vector. Confounder is generally present only in Sub-Frames carrying management messages and is used to enhance security. The Integrity Check Value (ICV) 3020 is a CRC-32 computed over a Sub-Frame. The ICV does not cover the Sub-Frame Header, ATS (if present), or confounder (if present).

Sub-Frames received by the MAC layer may require different levels of Quality of Service (QoS). For example, some Sub-Frame may carry application payload belonging to a streaming video that requires strict guarantees on QoS. To ensure that such QoS guarantees are met, the MAC layer can treat the Sub-Frame as being part of a connection so that the Sub-Frame can be provided with the necessary QoS. The MAC layer may also divide Sub-Frames based on the traffic class of the Sub-frame payload. For example, such information can be obtained from the VLAN tag or IP header fields of the MSDU. The MAC layer can segregate different Sub-Frames it receives according to the connection and class into different Sub-Frame queues. Sub-Frames belonging to a particular connection or class are concatenated to form a Sub-Frame queue 3022. FIG. 20A shows the concatenation of several Sub-Frames into a Sub-Frame queue.

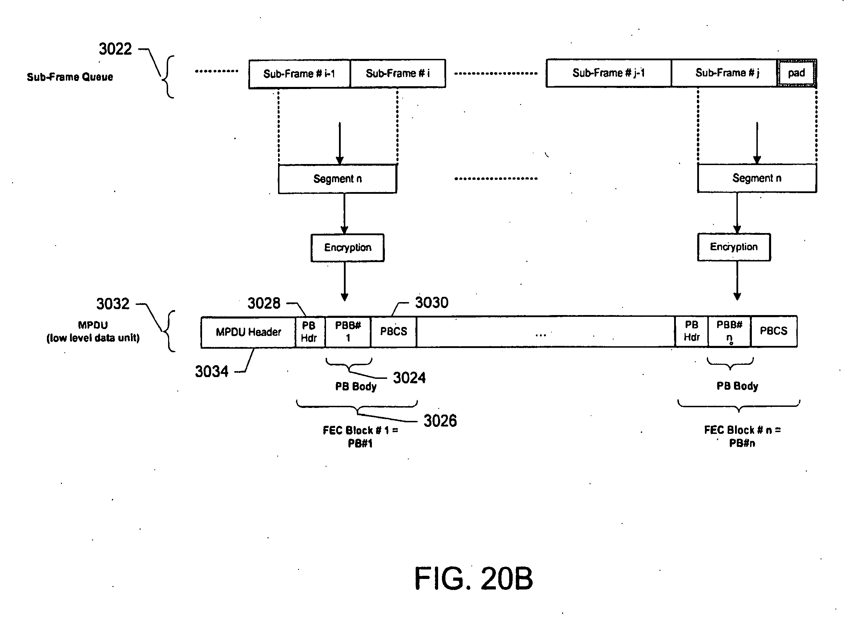

FIG. 20B illustrates the segmenting of a Sub-Frame queue 3022. Each Sub-Frame queue 3022 is segmented into, for example, 512 octet segments for transportation as part of an MPDU payload. A segment can be generated from a Sub-Frame queue whenever there are enough octets to form a segment. A Sub-Frame queue is treated as an octet stream for segmentation purposes. Thus, a segment can include partial Sub-Frames and/or multiple whole Sub-Frames. For each segment, the MAC tracks the offset of the first Sub-Frame boundary within the segment. This information is transmitted along with the segment and is used by the receiver to demarcate the Sub-Frames from the received segments. Each segment is also associated with a Segment Sequence Number (SSN). The SSN is initialized to zero for the first segment in a Sub-Frame queue and incremented by one when a new segment is generated. SSNs enable reception and reassembly of out of order segments and duplicate detection at the receiver. The end of the Sub-Frame queue might not contain enough octets to fill a segment completely at a time when the last Sub-Frame should be sent. In such cases, the Sub-Frame queue is padded (e.g., with all zeros, all ones) so that a segment can be formed.

Once a segment is formed as described above, it is treated as a single entity targeted for reliable delivery services by the MAC. Each segment can be encrypted as shown in FIG. 20B and then inserted into a Physical (PHY) Block Body (PBB) 3024. A PHY Block (PB) 3026 comprises the data bits of a FEC block at the PHY layer. PBs have a PB header 3028, a PBB 3024, and a PHY Block Check Sequence (PBCS) 3030. The PB Header field 3028 carries the SSN and the MAC Frame Boundary offset associated with the segment. The PB Header 3028 also indicates whether the segment belongs to a data stream (i.e., carrying high layer data) or a management stream (i.e., carrying MAC layer management information). The PBCS field 3030 is used to check the integrity of the PB at the receiver. Segments are transported using low level data units referred to as MAC Packet Data Units (MPDUs) 3032. The MPDUs 3032 include an MPDU Header 3034 followed by a sequence of PBs. The MPDU Header 3034 includes information about the Original Source Address of the stream of segments, the address of the STA transmitting this MPDU, the Original Destination Address of the stream of segments, the length of the MPDU, and a Connection Identifier (or Sub-Frame queue identifier). This information is used by the receiver to reassemble the segments and extract the MSDUs.

**1-Level MAC Encapsulation**

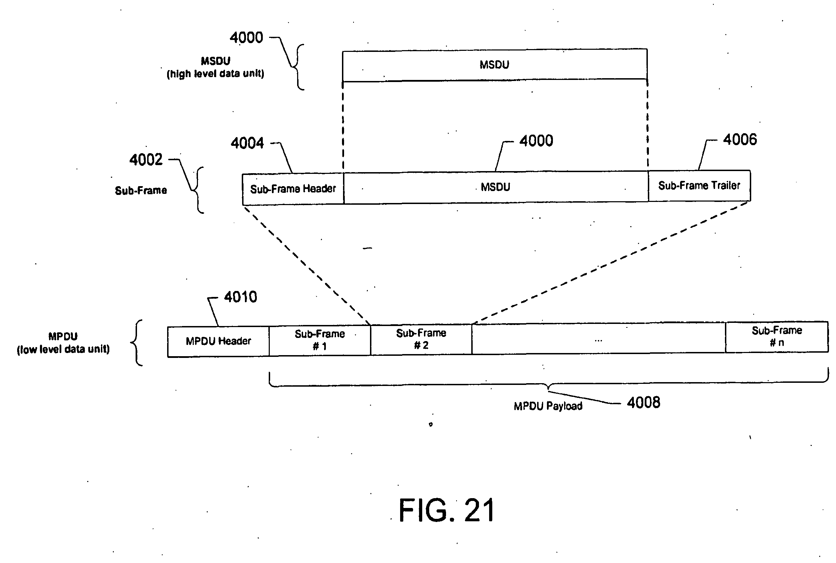

FIG. 21 illustrates an MSDU 4000 to be transmitted using 1-level MAC encapsulation. A Sub-Frame 4002 is formed by attaching a Sub-Frame header 4004 and Sub-Frame trailer 4006 to an MSDU 4000. The Sub-Frame Header 4004, among other fields, includes a sequence number associated with the MSDU 4000. The Sub-Frame Trailer 4006, among other fields, includes a cyclic redundancy check (CRC) to detect errors in the Sub-Frame 4002. One or more Sub-Frames 4002 are aggregated and transmitted in an MPDU payload 4008. The MPDU header 4010 includes additional information associated with each MSDU. This includes information such as the address of the station that first transmitted the MSDU in the network (for example, in FIG. 19A, station A is the first station that broadcasted the MSDU), the address of the station that transmitted the MPDU, information needed to uniquely identify the queue to which the MSDU belongs, and the destination address of the MSDU. The information in the MPDU Header and the information in the Sub-Frame header/trailer enable unique identification of each MSDU.

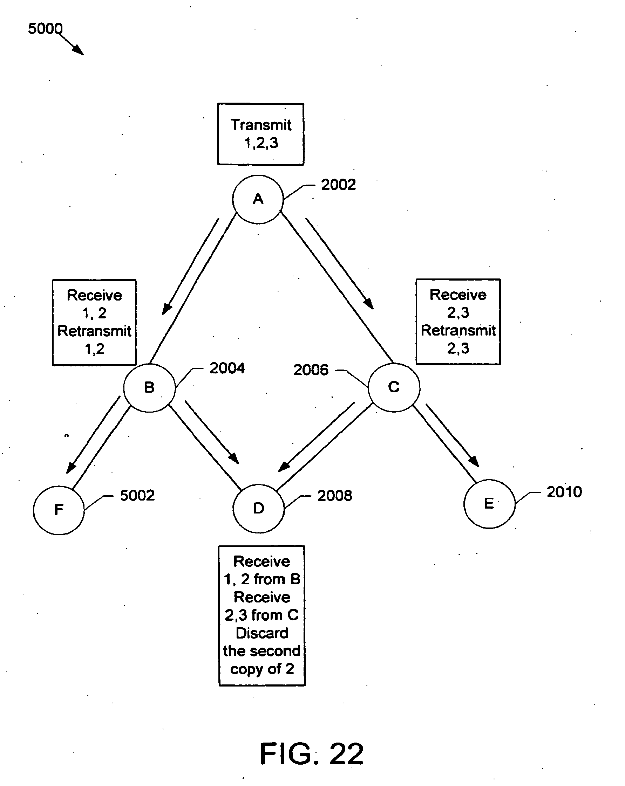

FIG. 22 is a block diagram of a network 5000 implementing selective broadcast and using MAC encapsulation. Network 5000 differs from the network of Fig. 19A in that station F 5002 is present and can hear messages from station B 2004. In this case, in order for station F 5002 to receive a broadcast message, station B 5002 retransmits broadcast messages from A 2002 even though this results in station D 2008 receiving duplicates.

The 2-level MAC encapsulation permits the transmission of longer messages that include PBs that are capable of being retransmitted independently. This permits selective retransmission such that the entire longer message that included a given PB need not be retransmitted, preserving network resources.

When 2-level MAC encapsulation is used, the sequence numbers included with the PBs enable them to be reassembled. In this case, the sequence numbers also permit the identification of duplicates. For example, Station A 2002 can transmit a broadcast message that includes PBs 1, 2, and 3. Due to network errors, Station B 2004 might only receive PBs 1 and 2, and Station C 2006 might only receive PBs 2 and 3. Stations B 2004 and C 2006 both retransmit the received PBs. Station D 2008 receives PBs 1 and 2 from Station B 2004 and receives PBs 2 and 3 from Station C 2006. Therefore Station D 2008 receives PB 2 twice, such that the second received PB 2 is a duplicate. Station D 2008 assembles PBs 1, 2, and 3 in a queue based on their respective sequence numbers. Due to the sequence numbers of both of the received PB 2s being the same, Station D 2008 can discard the second copy of PB 2. Had Stations B 2004 and C 2006 both received and retransmitted each of PBs 1, 2, and 3, Station D 2008 could discard duplicate copies in the same manner.

When 1-level MAC encapsulation is used, duplicate rejections can be handled in a manner similar to that of 2-level MAC encapsulation, where sequence numbers in the Sub-Frame are used to detect duplicates.

Duplicate detection for multicast messages operates in a similar manner as for broadcast messages, with the multicast message being retransmitted to reach members of a multicast group. For 2-level MAC encapculation, sequence numbers of segments are used to detect duplicates. For 1-level MAC encapsulation, sequence numbers of Sub-Frames are used to detect duplicates.

Some aspects relate to authorization of customer premise equipment into a network.

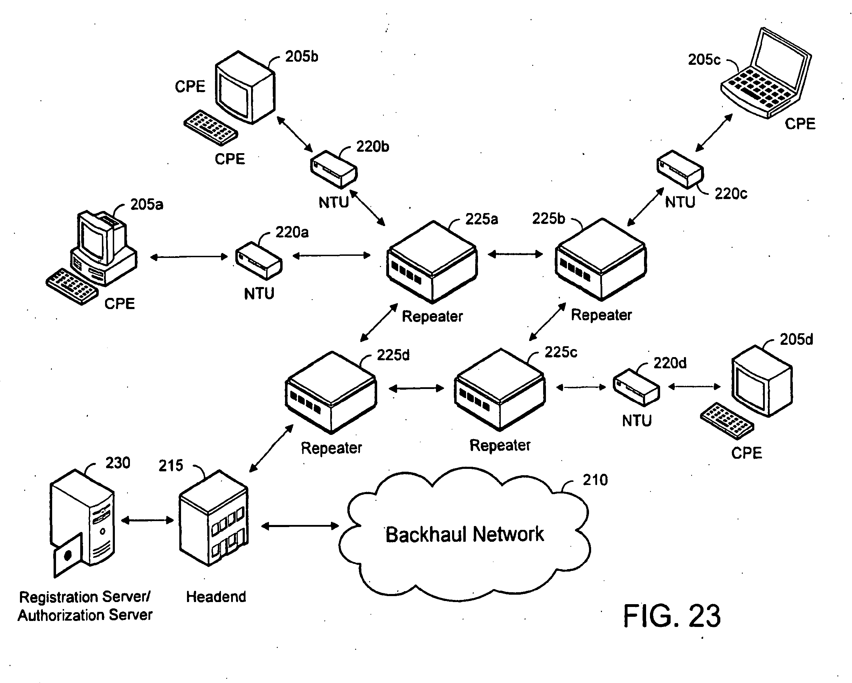

FIG. 23 is a block diagram of a powerline communication network. In various implementations, a powerline communication network can enable customer premises equipment (CPE) devices 205a-d to access a backhaul network 210 through a gateway (e.g., a headend 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. A preferred implementation is to have the Authorization Server on the Backhaul Network 210. The authorization server can be operable to authenticate CPE devices 205a-d for transmission of data over the powerline network. When a CPE device 205a-d is not authenticated, in various implementations, the CPE device 205a-d can be provided access to a registration server 230. The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In some implementations the registration server and authorization server can be co-located as shown in FIG. 2. In additional implementations, the registration server can be part of the backhaul network 201. In other implementations, the registration server might not be co-located with the authorization server.

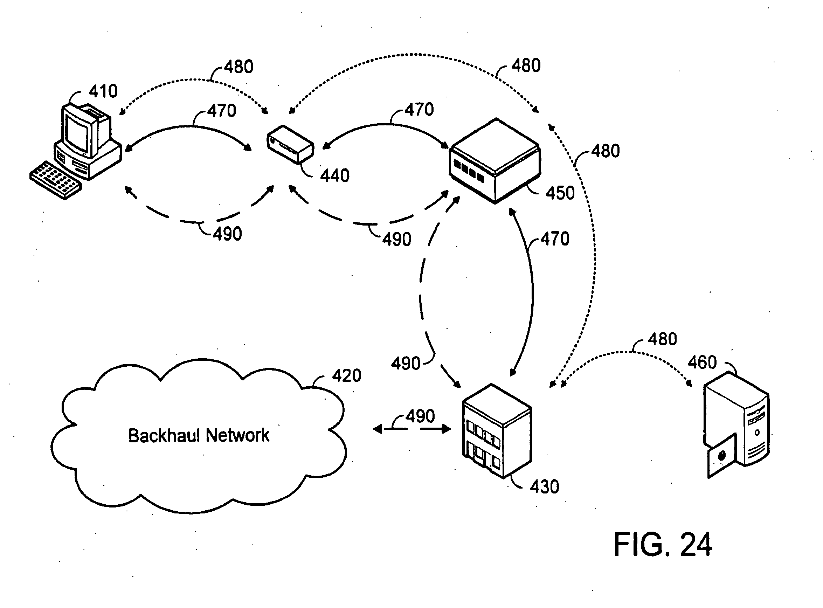

FIG. 24 is a block diagram illustrating a process for authorizing a new customer premise equipment device into a network. A CPE device 410 can request access to a backhaul network 420 from a headend 430. The CPE device can communicate with the headend 430 through an NTU 440 and one or more repeaters 450. In various implementations, when the CPE device 410 is a new device, the CPE device 410 can communicate a connection request 470 to the headend 430. The headend 430 can determine whether the CPE device is authorized to use the network based upon the connection request. In various examples, the connection request can be encrypted using a publicly available network management key (NMK). In various examples, the NTU 440 can also be configured to recognize the new CPE device 410 based on connection request encrypted with a publicly available NMK and can communicate a connection request 470 to the headend 430 on behalf of the CPE device 410.

In various implementations, based upon receipt of a connection request using the publicly available NMK, the headend 430 can provide access to a registration server 460. The registration server 460 can enable the user of the CPE device 410 to provide further information 480 to obtain further access to the powerline network or to the backhaul network 420. In some implementations, the headend 430 can authorize the CPE device 410 for limited access 490 to the backhaul network 420 based upon receiving the publicly available NMK. In various implementations, the NTU can be configured to provide limited access to new CPE devices without sending an explicit connection request to the HE.

In some implementations, the connection request from the CPE device 410 is unencrypted. In such implementations, the headend 430 can provide the CPE device 410 with the publicly available NMK, thereby enabling the CPE device 410 to access limited services through the powerline network, including, for example, the registration server 460.

In some implementations, once a user has registered the CPE device 410, the CPE device 410 can be provided access 490 to the backhaul network 420. In various implementations, the access 490 to the backhaul network 420 can be limited based upon a service level subscribed to by the user of the CPE device 410. The access 490 can be limited for example by the NTU 440, the headend 430, or a combination thereof.

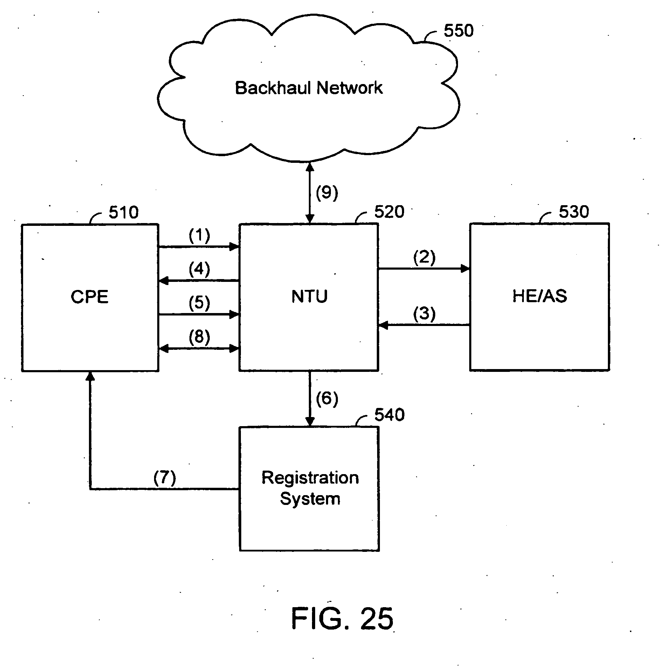

FIG. 25 is a block diagram illustrating the communication flow associated with authorizing a new customer premise equipment device into a network. A flow can include a CPE device 510, an NTU 520, a headend (HE) or authorization server (AS) 530, a registration server 540 and a backhaul network 550. As shown by signal (1), when a new CPE device 510 attempts to join the network, the device 510 sends a connection request to the NTU 520. Because the NTU 520 does not recognize the new device 510, the NTU 520 forwards the request to the headend or authorization server 530 for authorization, as shown at signal (2).

The headend or authorization server 530 can determine whether the device is authorized to use the network based upon the connection request. For example, if the connection request is encrypted using a publicly available network management key (NMK), the device can be approved for limited access to the network. The publicly available NMK can be distributed using any of a variety of distribution schemes. For example, a website associated with a powerline network can provide the key, the headend can provide the publicly available key upon receiving a connection request, the key can be e-mailed, communicated by telephone, etc.

Upon authorizing the new device 510 using the publicly available NMK, the headend 530 can notify the NTU 520 that the device 510 is approved for limited access as shown at signals (3) and (4). The NTU 520 can then limit the access of the CPE device 510 to certain destinations, specified bandwidth or a specified period of time. In some implementations, a period of free usage can be provided and the network can require the user to register to receive additional service at the end of the period of free usage.

In FIG. 25, the CPE device 510 can send a registration request to the NTU 520 as shown at signal (5). The NTU 520 can forward the registration request to the registration server 540 as shown at signal (6). In various implementations, the registration information can be provided securely to the registration server 540, such as, for example, using a secure hypertext transfer protocol (HTTPS), encrypted e-mail, or another secure transfer protocol. Upon receipt of the registration information, the registration server 540 can provide the CPE device 510 with a unique NMK as shown by signal (7).

In various implementations, the unique NMK can enable the CPE device 510 to associate with a sub-cell of the powerline network. In some examples, association with a sub-cell of the network enable the CPE device 510 to communicate with the backhaul network 550 using the NTU 520, as shown by signals (8) and (9).

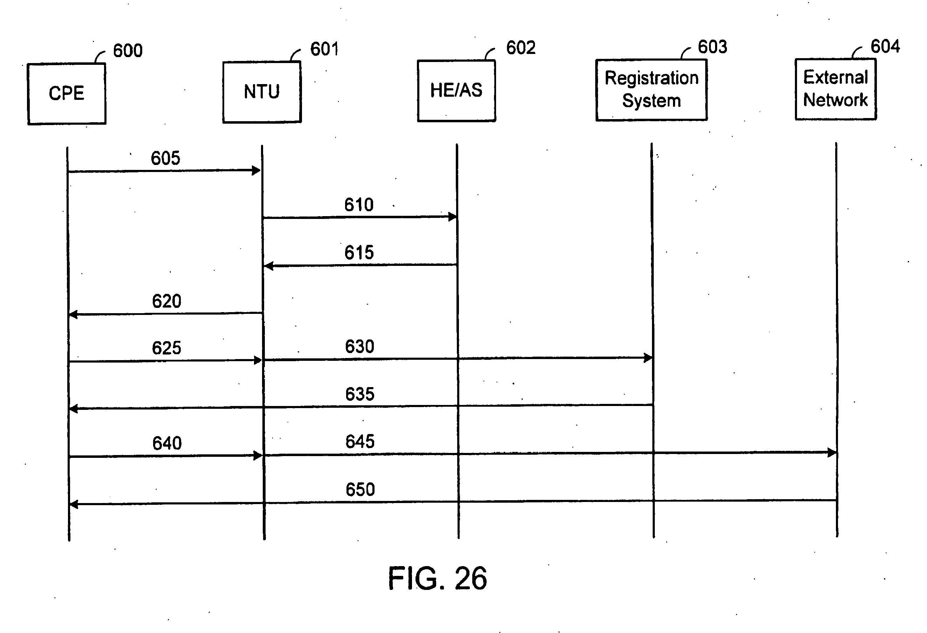

FIG. 26 is a flow diagram depicting an example flow for authorization of a CPE device into a centrally managed network. A CPE device can be authorized for limited access to a network based upon presentation of a publicly available network membership key (NMK). The limited access can provide a user with an opportunity to register for service level access to the network. In some implementations, the limited access can provide access to the device for a limited period of time before requiring registration and payment. In other implementations, the limited access can be bandwidth limited access, allowing the user to register and pay for a higher bandwidth service. Other provisions of limited access service are possible.

In some implementations, a new CPE device 600 (e.g., AV-CPE or BPL-CPE of FIG. 1) can join a network using a publicly available NMK. In these implementations, an NTU 601 can receive a network connection request from the CPE device 600 as shown by signal 605. In some implementations, the network connection request can be encrypted using a publicly available NMK. The publicly available NMK can be used to enable the user to gain limited access to the network. For example, the publicly available NMK can be used to enable a user to register a device for service by providing a registration page to the user. In some implementations, the publicly available NMK can be distributed through a website. Other distribution systems are possible.

The NTU 601 can forward the connection request to a headend (HE) or to an authorization server (AS) 602 as shown by signal 610. In various implementations the authorization server can provide centralized management of authorization (e.g., providing the NMK to an authorized device) and authentication (e.g., providing the NEK for a station with a valid NMK). In other implementations, distributed management of authorization and authentication can be provided, for example, using multiple headend devices. In further implementations, the forwarded connection request can be encrypted using the publicly available NMK. In other implementations, the connection request can be encrypted using a network encryption key (NEK) prior to forwarding the connection request to the HE or AS.

In some implementations, the HE or AS 602 can provide the publicly available NMK to the NTU as shown by signal 615. In other implementations, the NTU can include the ability to recognize the publicly available NMK and merely provides notification of the use of the publicly available NMK to the HE or AS 602.

The NTU can approve the connection request based on the response from the HE or AS 802 as shown by signal 620. The CPE device 600 can then begin communicating with the NTU 601 as shown by signal 625. In some implementations, the NTU can filter the data received from the CPE device based on the provision of limited access to the CPE device using the publicly available NMK. For instance, in some implementations, the NTU 601 might only allow access to a registration system 603 as shown by signal 630 based upon the CPE device being connected to the network using the publicly available NMK.

In some implementations, the NTU 801 and/or the AS or HE 602 can provide limited access to content including providing access only to content provided by the service provider or content provided by the registration system 603. In other implementations, access to the network using the public NMK can be limited to a certain amount of time. In still further implementations, packets communicated to the network by a CPE device using the public NMK can be tagged by the NTU 601. The tags can be used by network stations to specify special handling (e.g., low priority, high priority, bandwidth restrictions, etc.) for packets that have been marked using the tags.

In some implementations, the registration system 603 can provide a registration site to the user, enabling the user to submit registration information to obtain a service level access. In some implementations, data can be exchanged using various secure communications mechanisms, such as, for example, a secure hypertext transfer protocol (HTTPS). The registration information, in some implementations, can include payment information. In further implementations, the registration information can also include service level information (e.g., which level of service the user wants to purchase). In still further implementations, the registration information can include a device access key communicated using a secure communication protocol to the registration system 603.

Registration for service level access can include registering for any of several service levels, each of the service levels providing varying levels of service based upon the registration information provided by the user. For example, a user might be want to purchase 10Mbps service for a day, while another user might want to purchase 5Mbps service for a month. The service levels can be monitored and administered by the NTU 801 in conjunction with the HE or AS 602.

Once registration information is received, the HE or AS 602 can provide the CPE device 600 with a unique NMK as shown by signal 635. In some implementations (and as described throughout this application), the unique NMK is substantially unique. For example, there may be two identical NMKs. However, the identical NMKs are uniquely associated with a unique identifier (e.g., a MAC address) such that the combination of the NMK and the MAC address is unique. The unique NMK can be encrypted using a device access key (DAK) associated with the CPE device 600. The DAK key can be obtained during an initial registration process, and can be used to maintain secrecy of the unique NMK. Upon receipt of the unique NMK, the CPE device 600 can be associated with the NTU 601 by a sub-cell (e.g., sub-net).

The CPE device 600 can then communicate with an external network 804 (e.g., the internet) through the NTU 601 as shown by signals 640 and 645. The NTU can provide service throttling based on a service level associated with the CPE device 600 as identified by the unique NMK. The external network 604 can also communicate information to the CPE device 600, for example, based on requests issued by the CPE device 600, as shown by signal 650.

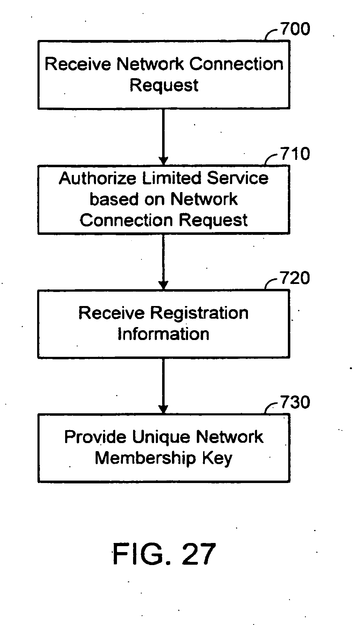

FIG. 27 is a flowchart illustrating an example authorizing a device into a network using a public NMK. At stage 700, a network connection request is received. The network connection request can be received, for example, by an NTU (e.g., NTU 220 of FIG. 23). In some implementations, the network connection request can be encrypted. The encryption can be performed by a CPE device requesting connection to the network.

At stage 710, limited service can be authorized based on the network connection request. In various embodiments, limited service can be authorized, for example, by a NTU (e.g., NTU 220 of FIG. 23), by a headend (e.g., headend 215 of FIG. 23), or by a central authorization server. In some implementations, the network connection request can be authorized based on the encryption key used to encrypt the network connection request. For example, if the network connection request is encrypted using a publicly available NMK, the CPE device can be provided limited access to the network. Limited access, in some implementations, includes a registration site that the user can user to submit registration and/or payment information for service level access.

At stage 720, registration information can be received. Registration information can be received, for example, by a headend (e.g., headend 215 of FIG. 23) or by an authorization server. The registration information, in some implementations, can include payment information associated with the user. Registration information can also include a device access key associated with the CPE device.

At stage 730, a unique NMK can be provided. The unique NMK can be provided, for example, by a headend device (e.g., headend 215 of FIG. 23) or an authorization server. In some implementations, the unique NMK can be encrypted using a device access key associated with the CPE device prior to communicating the unique NMK to the device. In some implementations, the unique NMK can be used by the NTU to identify a service level associated with the CPE device. For example, the user might only register the device for one day of service. Thus, the unique NMK might only provide service for a day. In other examples, the user might register the device for monthly service and register for a limited bandwidth. Thus, the NTU can limit the bandwidth available to the CPE device based upon the unique NMK. In still further examples, the user can specify certain types of traffic to be provided (e.g., business related traffic). The NTU can then filter other types of traffic. Other service levels are possible.

The systems and methods disclosed herein may use data signals conveyed using networks (e.g., local area network, wide area network, internet, etc.), fiber optic medium, carrier waves, wireless networks (e.g., wireless local area networks, wireless metropolitan area networks, cellular networks, etc.), etc. for communication with one or more data processing devices (e.g., mobile devices). The data signals can carry any or all of the data disclosed herein that is provided to or from a device.

Some aspects relate to authorizing stations into a centrally managed network.

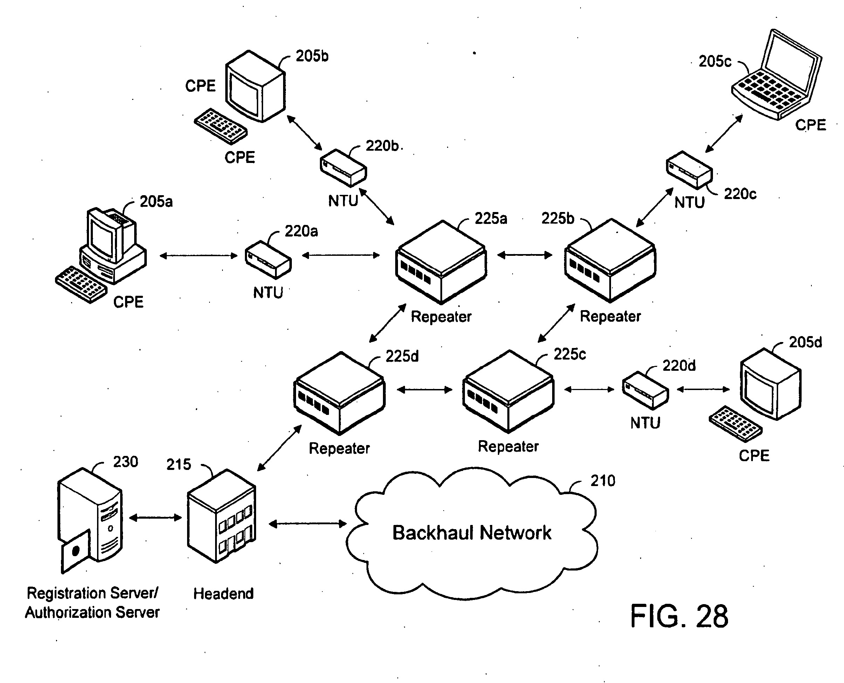

FIG. 28 is a block diagram of a powerline communication network. In various implementations, a powerline communication network can enable customer premises equipment (CPE) devices 205a-d to access a backhaul network 210 through a gateway (e.g., a headend 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium. Systems for transmitting and receiving powerline network signals are further described above.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. In one implementation, the authorization server is included on the backhaul network 210. The authorization server can be operable to authorize CPE devices 205a-d for transmission of data over the powerline network. When a CPE device 205a-d is not authorized, in various implementations, the CPE device 205a-d can be provided access to a registration server 230. The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In some implementations, the registration server and authorization server can be co-located as shown in FIG. 28. In additional implementations, the registration server can be part of the backhaul network 201. In still further implementations, the registration server is not co-located with the authorization server.

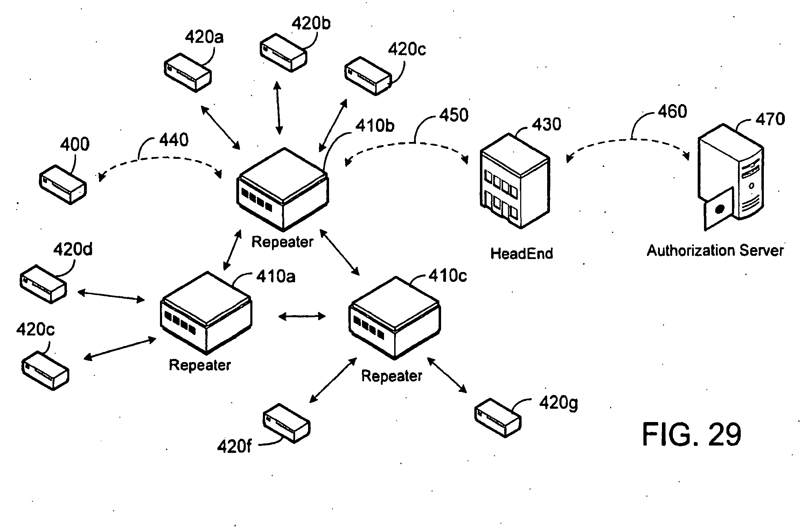

FIG. 29 is a block diagram illustrating a process for authorizing a new network termination unit (NTU) 400 into a network. The powerline network, in various implementations, can include a number of repeaters 410a-c and NTUs 420a-g. The NTUs 420a-g can communicate with a headend 430 through the repeaters 410a-c. The repeaters 410a-c can help to restore losses in the signals over spans in the network prior to the signal reaching a headend 430. The headend 430 can provide a gateway to a backhaul network.

In various implementations, new devices can be added to the powerline network. For example, in FIG. 29, new NTU device 400 is added to the network. Upon connection, the new NTU device 400 can send a connection request 440 to a repeater 410b. The repeater 410b can determine that the device is new. In some implementations, the repeater 410b can determine that the device is new based upon being unable to recognize the connection request. For example, the connection request 440 can be encrypted by the new device 400 using a device access key (DAK) associated with the new device 400. If the device has not previously been associated with the repeater, the repeater is unable to decrypt the encrypted connection request received from the new NTU device 400. The repeater 410b can forward the connection request 450 to the headend 430.

In various implementations, the DAK associated with the device can be substantially unique. For example, in such implementations, the DAK associated with a device can be randomly generated. Random generation of the DAK causes multiple use of the same DAK improbable. In some implementations, a randomly generated DAK can be tested against previously generated DAKs to ensure that the generated DAK is unique.

In various implementations, the headend 430 can extract an identifier (e.g., a media access control (MAC) address) associated with the request and identify a device access key (DAK) associated with the device by querying 460 authorization server 470. In various implementations, the authorization server 470 can include the MAC/DAK of devices authorized to access the network and can provide the DAK when requested by the headend 430. For example, when a new device 400 is deployed, the MAC address associated with the device 400, along with the DAK associated with the device 400 can be stored at the authorization server 470. Such data can substitute for a usemame/password combination for the new device 400. The connection request can be decrypted using the DAK associated with the extracted MAC address. In such implementations, when the DAK associated with the MAC address of the device is operable to decrypt the connection request, the new NTU device 400 can be authorized to connect to the network. The headend 430 can notify one or more repeaters 410a-c that the NTU device 400 is authorized to join the network. The NTU device 400 can then be associated with one or more repeater devices 410a-c. The headend 430 can respond to the connection request by encrypting a network membership key (NMK) using the DAK associated with the new NTU 400. The new NTU 400 can thereby decrypt the NMK using it's own DAK. In some implementations, the NMK can be a unique or substantially unique NMK. For example, the NMK can be randomly generated. However, a randomly generated key may not be completely unique (e.g., the same key could be generated again. In some implementations, the NMK can be provided by the authorization server 470 to the headend 430.

In various implementations, the headend 430 forward the connection request 450 to the authorization server 470. The authorization server 470 can extract an identifier (e.g., a media access control (MAC) address) associated with the request 460 and identify a device access key (DAK) associated with the device. In various implementations, the authorization server 470 contains the MAC/DAK of devices authorized to access the network. For example, when a new device 400 is deployed, the MAC address associated with the device 400, along with the DAK associated with the device 400 can be stored at the authorization server 470. Such data can substitute for a username/password combination for the new device 400. The connection request can be decrypted using the DAK associated with the extracted MAC address. In such implementations, when the DAK associated with the MAC address of the device is operable to decrypt the connection request, the new NTU device 400 can be authorized to connect to the network. The authorization server 470 can notify the headend 430 that the new NTU can be authorized. The authorization server 470 can respond to the connection request by encrypting a network membership key (NMK) using the DAK associated with the new NTU 400. The new NTU 400 can thereby decrypt the NMK using it's own DAK. The authorization server 470 can also provide the NMK to the headend 430. The headend 430 can notify one or more repeaters 410a-c that the NTU device 400 is authorized to join the network. The NTU device 400 can then be associated with one or more repeater devices 410a-c. In some implementations, the NMK can be a unique or substantially unique NMK. For example, the NMK can be randomly generated. However, a randomly generated key may not be completely unique (e.g.; the same key could be generated again.

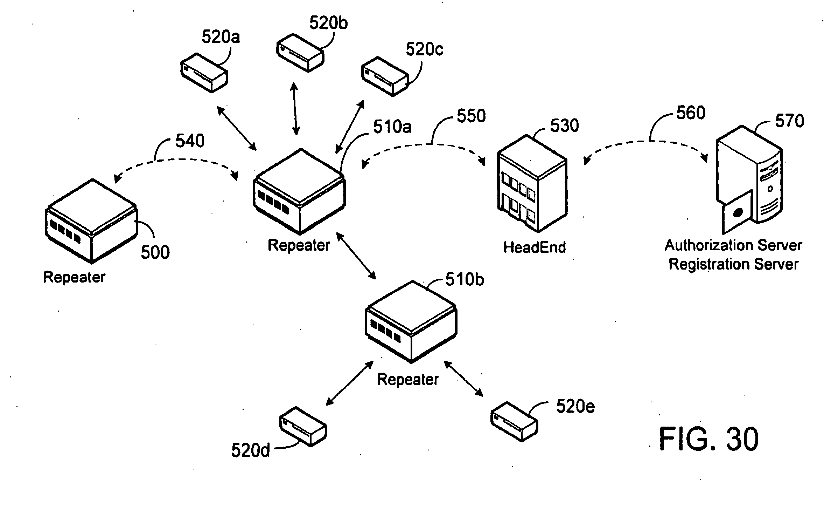

FIG. 30 is a block diagram illustrating a process for authorizing a new repeater 500 into a network. The network can include a number of existing repeaters 510a-b in communication with a number of network termination unit (NTU) devices 520a-e. The NTU device 520a-e can communicate with a headend 530 through the repeaters 510a-b. In various implementations, the repeaters 510a-b can operate to retransmit data signals on the line after degradation of the data signal over distances.

When a new repeater 500 attempts to join the network, it can send a connection request to any of the network devices (e.g., repeaters 510a-b, headend 530, etc.). In some examples, the new repeater 500 can send a connection request 540 to an existing repeater 510a. In various implementations, the existing repeater 510a can send a forwarded connection request 550 to the headend 530. In various implementations, the headend 530 can forward the connection request to the authorization server 570.

In various implementations, the authorization server 570 can authorize the forwarded connection request 550 based upon an encryption applied to the forwarded connection request 550 by the new repeater 500. For example, the authorization server 570 can extract an identifier (e.g., a unique or substantially unique identifier) associated with the new repeater 500. In various implementations, the identifier can include a MAC address associated with the new repeater 500. Other unique identifiers are possible. The MAC address can be used to determine the DAK associated with the new repeater 500. The authorization server 570 can then attempt to decrypt the forwarded connection request 560 using the DAK associated with the extracted MAC address. If the authorization server 570 can successfully decrypt the forwarded request 560, the new repeater 500 is authorized. The authorization server 570 can respond to the connection request by encrypting a network membership key (NMK) using the DAK associated with the new repeater 500. The new repeater 500 can thereby decrypt the NMK using it's own DAK. In some implementations, the NMK can be a unique or substantially unique NMK. For example, the NMK can be randomly generated. However, a randomly generated key may not be completely unique (e.g., the same key could be generated again.

In other implementations, the connection request 540 can be sent unencrypted. In such implementations, the authorization server 570 can extract an identifier (e.g., MAC address) from the connection request. The authorization server 570 can use the identifier to determine the DAK associated with the new repeater. The authorization seerver 570 can then communicate (e.g., securely) an NMK to the new repeater 500 by encrypting the NMK using the DAK associated with the new repeater 500. The new repeater 500 can then communicate with existing repeaters 510a-b using the NMK received from the headend device. The NMK communicated to the new repeater 500 can also be communicated to one or more of the existing repeaters 510a-b to enable the existing repeaters 510a-b to communicate with the new repeater 500.

In various implementations, the new repeater 500 can use its unique NMK to request of a network encryption key (NEK). In some of these implementations, the NEK is known to each of the repeaters 510a-b, NTUs 520a-e, headend (s) 530, and authorization server 570. The NEK can be supplied securely to the network devices using a substantially unique key (e.g., a substantially unique NMK) associated with the device.

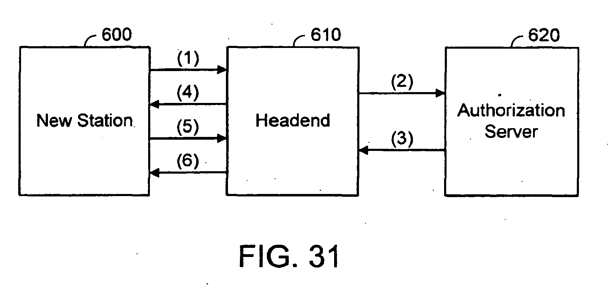

FIG. 31 is a block diagram illustrating the communication flow associated with authorizing a new station into a network. When a new station 600 (e.g., an NTU, repeater, headend, etc.) joins the network, the new station 600 can transmit a connection request as shown by signal (1).

In various implementations, the connection request can be encrypted by the new station 600 using a device access key (DAK) associated with the new station 600. The connection request can be received by a headend/authorization server 610. The headend 610 can forward the connection request to the authorization server 620 as shown in (2). The authorization server 620 includes the identifiers associated with authorized devices and their corresponding DAKs.

The authorization server 620 can parse the connection request to extract an identifier associated with the new station 600. After extracting the identifier associated with the new station 600, the authorization server 620 can determine whether the identifier corresponds to an authorized device. If the identifier is recognized by the authorization server 620, authorization server 620 can used the corresponding DAK to decrypt the connection request received from the new station 600.

In various implementations, the authorization server 620 can authorize the new station 600 based upon being able to decrypt the connection request using the DAK associated with the new station 600. Upon authenticating the new station 600, the authorization server 620 can provide a network management key (NMK) to the new station 600 by send it to the headend 610, as shown by signal (3), which the passes it to the new station, as shown by signal (4). In some implementations, the NMK is unique or substantially unique to the device. The NMK can be randomly generated by authorization server 620.

In some implementations, upon receiving the NMK, the new station 600 can send a request to the headend 610 for a network encryption key (NEK) as shown by signal (5). In various implementations, the NEK can be used to encrypt communications among powerline network devices (e.g., NTUs, repeaters, headend(s), MAC/DAK data store, etc.). The NEK request can be encrypted using the NMK associated with the new station 600.

Upon receiving a request for the NEK, a headend 610 can authenticate the request by retrieving the NMK associated with the requesting station 600 from the authorization server 620, as shown by signals 2, 3. In some implementations, the authorization server can provide the NMK of all authorized stations to the headend. In such cases the headend can retrieve the NMK associated with the requesting station 600 from its local store instead of retrieving the NMK from the authorization server 620. The headend 610 attempting to decrypt the NEK request using the NMK associated with the requesting station 600. If the NMK associated with the requesting station 600 is operable to decrypt the NEK request, the headend 620 can encrypt the NEK using the NMK associated with the requesting station 600 and communicate the encrypted NEK to the requesting station 600 as shown by signal (6). The new station 600 can receive the encrypted NEK, and use the previously received NMK to decrypt the NEK. Upon decrypting the NEK, the new station 600 can encrypt communications to other network devices using the NEK.

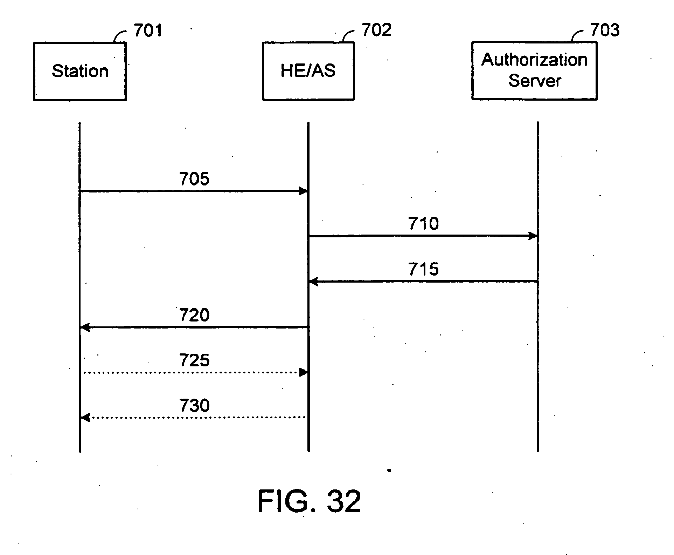

FIG. 32 is a flow diagram depicting an example flow for authorization of a STA into a centrally managed network. Stations in the centrally managed network can be authorized using a unique network membership key (NMK) associated with each of the stations. In some implementations, the unique NMK can be encrypted prior to distribution to each of the stations. Thus, each station might only include information about its own unique NMK, thereby safeguarding the unique NMKs for other devices and limiting the value of the information that can be obtained from a single NMK. The unique NMK can provide a mechanism to differentiate between stations in the event that a station is compromised by an intruder.

When a new station 701 joins the network, the station 701 requests to receive a unique network membership key from the HE 702, as shown by signal 705. The request can be encrypted using a device access key (DAK) associated with the station 701.

Upon receipt of the request, the HE can examine the request and locate a unique identifier, e.g., a media access control (MAC) address, associated with the request. The HE can query the authorization server 703 based upon the parsed MAC address as shown by signal 710. The authorization server 703 is configured to store MAC/DAK pairs. Approved stations can be entered into the MAC/DAK data store 703 prior to deployment of the station.

If the MAC address is valid, the authorization server 703 can return a DAK associated with the MAC address as shown by signal 715. The DAK can be used in an attempt to decrypt the request. If the decryption is successful, the request is authorized. Otherwise the request is not authorized and is ignored or rejected.

When the request is authorized, the HE 702 can use the DAK to encrypt a unique NMK associated with the station. In some implementations, the HE 702 can generate the unique NMK. In other implementations, the HE 702 can retrieve the unique NMK from the authorization server 703. The encrypted unique NMK can then be communicated to the station as shown by signal 720.

In optional implementations, the station can use the unique NMK to encrypt a request a network encryption key (NEK) as shown by signal 725. In such implementations, the NEK can be used to encrypt all communications among stations 701 in a core cell (e.g., core cell of FIG. 1). The HE 702 can authenticate the request by decrypting the request using the unique NMK. The HE 702 can provide the NEK based upon authenticating the request as shown by signal 730.

In some instances, the authorization server or headend might determine that a station has been compromised by an intruder or hacker. In such instances, the authorization server or headend can reset the NEK. When the NEK is reset, the headend can transmit the new NEK to any stations that have not been compromised. The new NEK can be encrypted using the unique NMKs associated with those stations that have not been compromised. Thus, those stations that have been compromised will not be able to decrypt the new NEK and the compromised station is thereby isolated from the remainder of the network.

The NEK can also be rotated to protect the network encryption key from cracking using brute force algorithms. In order to protect stations from illegitimate key rotations requests, headend or authorization server can provide a counter to the stations. In some implementations, the same counter can be provided to all stations. In other implementations, the counter can be a pseudo-random number that may differ between stations. In some implementations, the counter can be provided in an encrypted format, for example, using a network membership key associated with the station, or using a device access key associated with the station. In other implementations, the counter can be provided to the station with the first NEK, both the counter and the NEK being encrypted using the NMK associated with that device.

The counter can serve to test that a new NEK is authentic. In some implementations, a rotation message can be sent to the stations. The rotation message can include the new NEK and an incremented counter. In various implementations, the increment associated with the counter might not be linear, or might not be incremental, but rather the counter may be incremented according to some algorithm known to both the authorization server and the stations. The rotation message can be encrypted using the NMK associated with each respective station.

Upon receiving a rotation message, the stations can decrypt the message using the stations' respective NMKs. The station can compare the counter value included in the rotation message to its own counter value. If the counter values match, the new NEK is authenticated, and replaces the previous NEK.

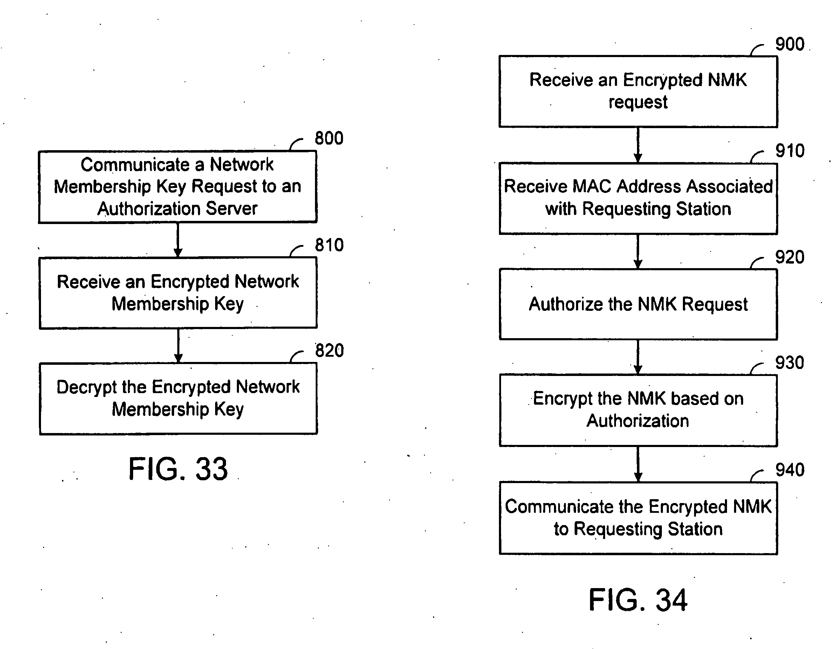

FIG. 33 is a flowchart illustrating an example method to request a NMK for a station. At stage 800, an NMK request is communicated to an authorization server. The NMK request can be communicated, for example, by a station (e.g., NTU, RP, or HE of FIG. 1). In some implementations, the NMK request can be encrypted. The encryption can be performed by a station requesting the NMK, and can be encrypted using a device access key (DAK) associated with the requesting station.

At stage 810, an encrypted network membership key can be received. In various embodiments, the encrypted NMK can be received, for example, by a station (e.g., NTU, RP, HE of FIG. 1). In some implementations, the NMK can be encrypted using the DAK associated with the requesting station. The DAK associated with the requesting station can be identified, for example, by an authorization server using the unique identifier associated with the station (e.g., the MAC address). The NMK request is determined to be authentic based upon the DAK being operable to decrypt the NMK request.

At stage 820, the encrypted NMK can be decrypted. The encrypted NMK can be decrypted, for example, by a requesting station (e.g., NTU, RP, HE of FIG 1). The NMK is encrypted using the DAK associated with the requesting station. The requesting station has knowledge of its own DAK and is therefore able to decrypt the encrypted NMK.

FIG. 34 is a flowchart illustrating an example method to provide a unique NMK to a station. At stage 900, an encrypted NMK request is received. The NMK request can be communicated, for example, by an authorization server (e.g., AS 470 of FIG. 29). In some implementations, the NMK request is encrypted using the DAK associated with a station requesting the NMK.

At stage 910, a MAC address associated with the requesting station is received. In various embodiments, the MAC address can be received, for example, by an authorization server (e.g., AS 470 of FIG. 29) as part of the encrypted NMK request. The MAC address associated with the requesting station can be transmitted without encryption.

At stage 920, the NMK request can be authorized. The NMK request can be authorized, for example, by a authorization server (e.g., AS 470 of FIG. 29). The request can be authenticated by retrieving a DAK associated with a unique identifier (e.g., a MAC address). If the DAK is operable to be used to decrypt the NMK request, the NMK request is considered to be authentic.

At stage 930, the NMK is encrypted based on authorization of the request. The NMK can be encrypted, for example, by an authorization server (e.g., AS 470 of FIG.29). In some implementations, the NMK can be encrypted using the DAK associated with the requesting station.

At stage 940, the encrypted NMK is communicated to the requesting station. The encrypted NMK can be communicated, for example, by an authorization server (e.g., AS 470 of FIG. 29). The NMK can be communicated using a broadband over powerline network. Other communication mechanisms are possible.

Some aspects relate to authorizing customer premise equipment on a sub-network.

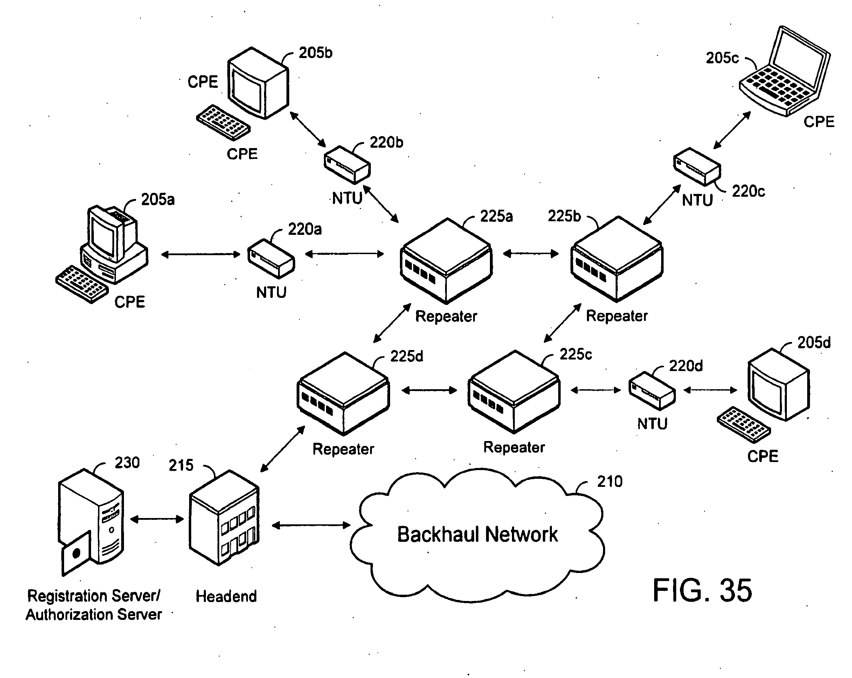

FIG. 35 is a block diagram of a powerline communication network. In various implementations, a powerline communication network can enable customer premises equipment (CPE) devices 205a-d to access a backhaul network 210 through a gateway (e.g., a headend 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium. Systems for transmitting and receiving powerline network signals are further described above.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. In one implementation, the authorization server is included on the backhaul network 210. The authorization server can be operable to authorize CPE devices 205a-d for transmission of data over the powerline network. When a CPE device 205a-d is not authorized, in various implementations, the CPE device 205a-d can be provided access to a registration server 230: The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In some implementations, the registration server and authorization server can be co-located as shown in FIG. 35. In additional implementations, the registration server can be part of the backhaul network 201. In still further implementations, the registration server is not co-located with the authorization server.

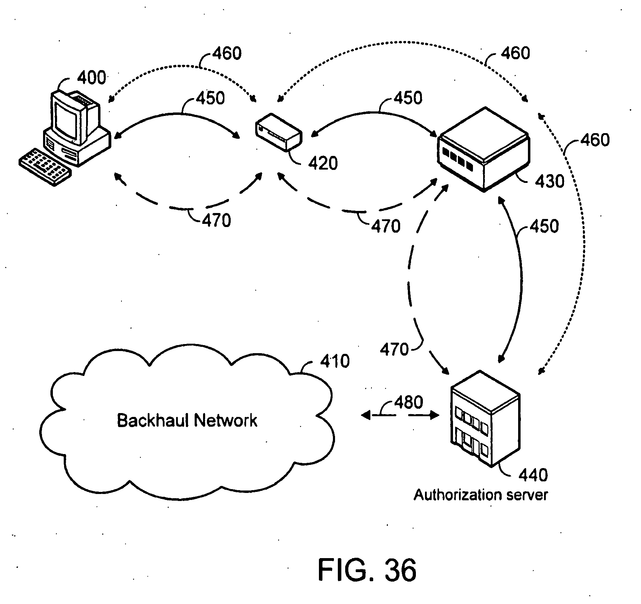

FIG. 36 is a block diagram illustrating a process for authorizing customer premise equipment (CPE) device into a sub-network. In various implementations, a powerline network can enable a CPE device 400 to access a backhaul network 410 through a powerline network. The powerline network can include a network termination unit (NTU) 420, a repeater 430, an authorization server 440 which determines whether the CPE 400 can access the backhaul network 410.

In various implementations, CPE 400 can associate with the powerline network by sending a connection request 450 to the authorization server 440 through the NTU 420 and the repeater 430. the connection request 450, in some implementations, can include a request for a network encryption key (NEK). The connection request 450 can be encrypted by the CPE 400 using a network membership key (NMK) associated with the CPE 400.

In some implementations, the authorization server 440 can decrypt the connection request 450 using the NMK associated with the CPE 400. The authorization server 440 can identify the NMK associated with the CPE 400 by extracting an identifier (e.g., a media access control (MAC) address) associated with the connection request 450. Once the NMK has been identified, the authorization server can decrypt the connection request 450 to determine that the CPE device is requesting an NEK to connect to the network. The authorization server 440 can authorize the CPE device 400 based upon being able to decrypt the connection request 450.

The authentication server 440 can respond to the NTU 420 by encrypting the NMK associated with the CPE device 400 using a device access key (DAK) associated with the NTU 420, as shown by signal 460. The NTU 420 can decrypt the communication from the authorization server 440 by using its own DAK. The NTU can then encrypt an NEK using the NMK associated with the new CPE device 400 received from the authorization server 440, as further shown by signal 460.

When the CPE device 400 receives the encrypted NEK from the NTU 420, the CPE device 400 can decrypt the NEK using its own NMK. The CPE device 400 can be joined to the network and enabled to communicate with the network devices (e.g., NTU 420, repeater 430, and authentication server 440) as shown by signal 470. The CPE device 400 can also communicate with the backhaul network 410 (e.g., external network).

In some implementations, the CPE communicates to the authorization server through NTUs, repeaters and a headend (i.e., a gateway device to the backhaul network). For example, in FIG. 35 the CPE 205a can communicate with the authorization server 230 through NTU 210a, repeaters 215a, 215d and headend 220. In such implementations, the headend 230 can relay the connection request from the CPE 205a to the authorization server 230. The headend can further relay the response from the authentication server to the NTU. In various implementations, the authorization server 230 can inform the headend 220 that the CPE 205a is authorized to access the backhaul network along with the information on the service level that are guaranteed for the CPE 205a. The service level information can include, for example, the maximum uplink and maximum down link bandwidths that were guaranteed to the CPE, the number of VoIP number and/or type of connections the CPE can make, etc. The headend can use this information to restrict the CPE from accessing the backhaul network. In various implementations, the authorization server 230 can itself be part of the backhaul network.

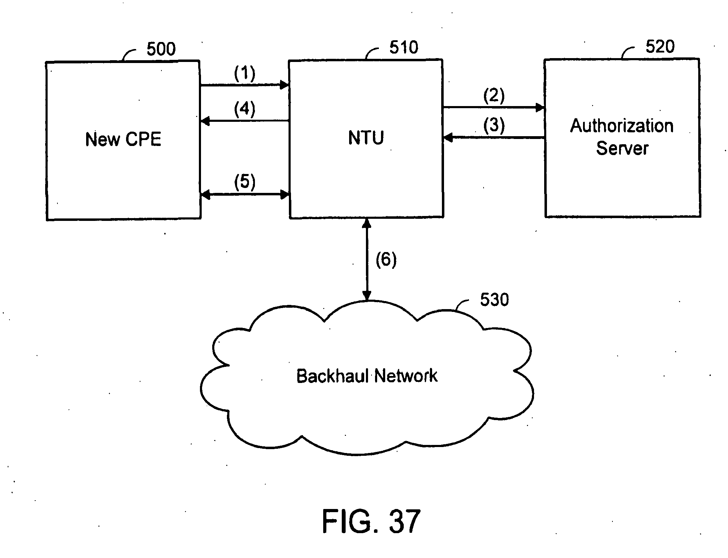

FIG. 37 is a block diagram illustrating.the communication flow associated with authorizing a customer premise equipment (CPE) device 500 into a sub-network. The CPE device 500 can send a connection request to an associated network termination unit (NTU) 510 as shown by signal (1). The connection request can include a request for a network encryption key (NEK) to join a sub-net associated with the NTU 510. In various implementations, the connection request can be encrypted using a network membership key (NMK) associated with the CPE device 500. Because the CPE device 500 was not previously associated with the NTU 510, the NTU 510 cannot decrypt the encrypted connection request.

The NTU 510 can forward the connection request to an authorization server 520 as shown by signal (2). The authorization server 520 can extract an identifier associated with a device originating the connection request (e.g., a media access control (MAC) address associated with the CPE device 500). Based upon the extracted identifier, the authorization server 520 can identify an NMK associated with the CPE device 500. The authorization server can then decrypt the connection request using the identified NMK associated with the identifier extracted from the connection request. The authorization server 520 can authorization the CPE device 500 based upon decryption of the connection request using the NMK associated with the extracted identifier.

The authorization server can then encrypt the NMK associated with the CPE device 500 using a device access key (DAK) associated with the NTU 510 that forwarded the connection request. The authorization server 520 can then send the encrypted NMK to the NTU 510 as shown by signal (3). The NTU 510 can decrypt the encrypted NMK received from the authorization server 520 using its own DAK.

The NTU 510 can then encrypt an NEK using the decrypted NMK associated with the new CPE device 500. The NTU 510 can then send the encrypted NEK to the CPE device 500 as shown by signal (4). The CPE device 500 can then decrypt the encrypted NEK using its NMK. The decrypted NEK can thereafter be used to encrypt communications sent to the NTU 510 as shown by signal (5). The CPE device 500 can also use the NEK to communicate with other network devices and to send/receive information to/from a backhaul network 530 (e.g., the Internet) through the NTU 510 as shown by signal (6).

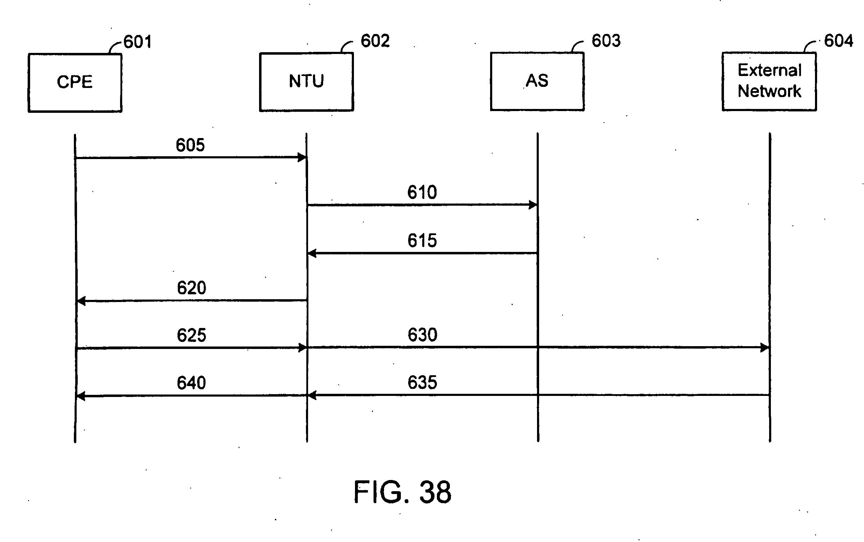

FIG. 38 is a flow diagram depicting an example flow for joining a CPE device 601 into a sub-cell (e.g., a sub-net). In some implementations, registered CPE devices 601 can access the network from a variety of locations. The variety in locations, for example, can be caused by relocating, can be caused by the user taking his or her laptop from home to the office, etc. In such implementations, the CPE device already includes a unique NMK.

However, when the CPE device 601 attempts to join a new NTU 602 by requesting a unique NEK encrypted using the unique NMK as shown by signal 605, the new NTU 602 does not recognize the encrypted NEK request. The request for a unique NEK, in some implementations, can include a unique identifier (e.g., a MAC address) associated with the NTU 602 from which the NEK is requested.

The NTU 602 forwards the encrypted NEK request to an authorization server 603 as shown by signal 610. The authorization server 603 can parse the forwarded request to locate a unique identifier (e.g., a MAC address) associated with the CPE device 601. Once the unique identifier has been located, the authorization server 603 can query a data store to determine a unique NMK associated with the unique identifier. The unique NMK can be used to decrypt the NEK request. In some implementations, a unique identifier associated with the encrypted portion of the NEK request can be matched to the NTU 602 from which the NEK request was forwarded to determine authenticity of the request.

The authorization server 603 can then encrypt the NMK of the CPE device 601 using a DAK associated with the NTU 602 as shown by signal 615. The NTU 602 can thereby decrypt the NMK associated with the requesting CPE device 601 using its DAK. The NMK associated with the CPE device 601 can be used to encrypt the NEK. The NTU 602 can communicate the encrypted NEK to the CPE device 601 as shown by signal 620.

The CPE device 601 can decrypt the NEK using its NMK. The CPE device 601 can then send information to an external network 604 through the NTU 602 using the NEK to encrypt the transmissions, as shown by signals 625, 630. The CPE device 601 can also receive information from the external network 604 through the NTU 602 as shown by signals 635 and 640, the signals 625, 640 between the NTU 602 and the CPE device 601 being encrypted using the NEK to provide security between the CPE device 601 and the NTU 602. In some implementations, the NEK used between the CPE device 601 and the NTU 602 is a unique NEK within the sub-cell (e.g., sub-net) associated with a particular NTU 602.

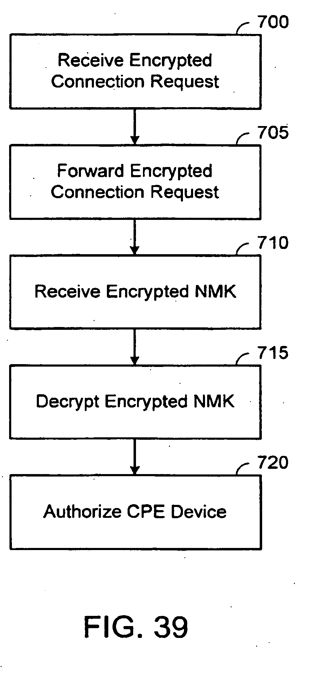

FIG. 39 is a flowchart illustrating an example method to request connection to a sub-cell (e.g., sub-net). At stage 700, an encrypted connection request is received. The encrypted connection request can be received, for example, by an NTU (e.g., NTU of FIG. 1). In some implementations, the connection request can be encrypted by a CPE device using a unique NMK associated with the CPE device. The encrypted connection request cannot be decrypted by the NTU, because the NTU does not possess the NMK associated with the CPE device.

At stage 705, an encrypted connection request can be forwarded. In various embodiments, the encrypted connection request can be forwarded, for example, by an NTU (e.g., NTU 420 of FIG. 36). The encrypted connection request can be forwarded to an authorization server (e.g., authorization server 603 of FIG. 38).

At stage 710, the encrypted NMK can be received. The encrypted NMK can be received, for example, by an NTU (e.g., NTU 420 of FIG. 36). The NMK is encrypted using the DAK associated with the NTU. The NTU has knowledge of its own DAK and is therefore able to decrypt the encrypted NMK.

At stage 715, the encrypted NMK can be decrypted. The encrypted NMK can be decrypted, for example, by an NTU (e.g., NTU 420 of FIG. 36). The NMK is decrypted using the DAK associated with the NTU. The NTU has knowledge of its own DAK and is therefore able to decrypt the encrypted NMK.

At stage 720, the CPE device is authorized. The CPE device can be authorized, for example, by the NTU (e.g., NTU 420 of FIG. 36). The authorization can include communicating an NEK to the CPE device using the unique NMK associated with the CPE device. In other implementations, authorization can include joining the CPE device to the sub-cell.

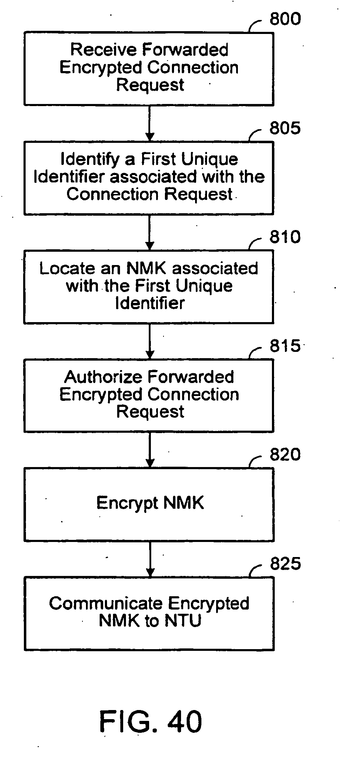

FIG. 40 is a flowchart illustrating an example method to authorize joining of a CPE device to a sub-cell. At stage 800, a forwarded encrypted connection request is received. The encrypted network connection request can be received, for example, by a authorization server (e.g., authorization server 440 of FIG. 36). In some implementations, the connection request is encrypted using the NMK associated with the CPE device requesting the connection.

At stage 805, a unique identifier associated with the connection request is identified. In various embodiments, the unique identifier can be identified, for example, by an authorization server (e.g., authorization server 440 of FIG. 36). In some implementations, the unique identification can include a MAC address associated with the CPE device requesting the connection, and can be transmitted without encryption.

At stage 810, an NMK associated with the first unique identifier is located. The NMK associated with the first unique identifier can be located, for example, by an authorization server (e.g., authorization server 420 of FIG. 36). In some implementations, the NMK associated with the first unique identifier can be located, for example, by querying a data store for an NMK associated with the first unique identifier.

At stage 815, the encrypted connection request can be authorized. The connection request can be authorized, for example, by the authorization server (e.g., authorization server 440 of FIG. 36). In some implementations, the connection request can be authorized by decrypting the connection request using the NMK associated with the first unique identifier. In some implementations, the connection request includes a second unique identifier within the encrypted portion of connection request. Based upon the second unique identifier matching an NTU unique identifier, the connection request can be authenticated.

At stage 820, the NMK is encrypted. The NMK can be encrypted, for example, by an authorization server (e.g., authorization server 440 of FIG. 36). In some implementations, the NMK can be encrypted using the DAK associated with the NTU. The DAK associated with the NTU can be retrieved from a data store including multiple DAKs, each of the DAKs being respectively associated with a unique identifier of an NTU.

At stage 825, the encrypted NMK is communicated to the NTU. The encrypted NMK can be communicated to the NTU, for example, by an authorization server (e.g., authorization server 440 of FIG. 36). In some implementations, the encrypted NMK can be encrypted using a DAK associated with the NTU. Thus, the NTU can decrypt the NMK using its DAK, and authorize the CPE device to join the sub-net.

Some aspects relate to an in-home coexistence network

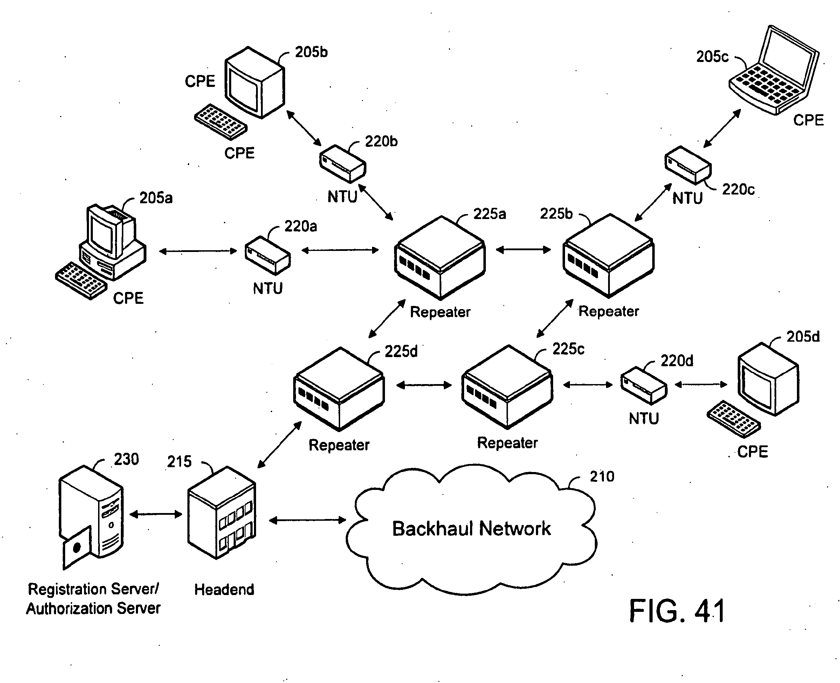

FIG. 41 is a block diagram of a powerline communication network. In various implementations, a powerline communication network can enable customer premises equipment (CPE) devices 205a-d to access a backhaul network 210 through a gateway (e.g., a headend 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium. Systems for transmitting and receiving powerline network signals are further described above.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. Other implementations include the Authorization Server within the Backhaul Network 210. The authorization server can be operable to authenticate CPE devices 205a-d for transmission of data over the powerline network. When a CPE device 205a-d is not authenticated, in various implementations, the CPE device 205a-d can be provided access to a registration server 230. The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In various implementations, the Registration Server is not co-located with the Authorization Server. In other implementations, the Registration Server and Authorization Server are co-located as shown in FIG. 41. In various implementations, the Registration Server can be part of the Backhaul Network 201.

Various stations in a network may generate regular beacon transmissions for various purposes. A beacon transmission (or simply a "beacon") includes management information that can be used for a variety of purposes. The stations may communicate with each other in time periods between beacon transmissions, provided the power line channel characteristics between any two communicating stations permit it.

One of the functions of a beacon transmission is to carry medium allocation (or scheduling) information. The scheduling information can allocate some of the time between beacon transmissions as a contention period during which stations may contend for access to the power line medium. The scheduling information can also allocate a contention-free period during which times slots are assigned to particular stations for access to the power line medium. The scheduling information is provided relative to a TDMA Scheduling Period Start Time (or TDMA Period Start Time).

The TDMA Period start time is synchronized with respect to the AC line cycle of the power line waveform such that the time between consecutive TDMA period start times is based on the underlying AC line cycle frequency. Thus, to the extent that the AC line cycle frequency varies, the TDMA period start time (and hence the duration of each TDMA Period) may not be perfectly periodic. Since the beacons transmitted by the HE may not be heard by every station, each station transmits its own beacon to relay the information in the beacon to stations that do not hear the HE. While the stations may transmit their beacons at different times, the TDMA period start time is established with respect to the information contained in the beacons transmitted by the HE. At each station, the TDMA period start time can be synchronized to that of the HE using a start time synchronization procedure described in more detail below. Each station can then predict a given TDMA period end time (or future TDMA period start time) based on the synchronized start time and the local AC line cycle at the given station by correlating the synchronized start time to a detectable feature of the power line waveform such as a zero crossing. The TDMA period can be set by the HE to any multiple of a half of the AC line cycle period, for example, by waiting for a given number of zero crossings.

In some cases it is desirable to increase the TDMA period to make more efficient use of the medium by reducing the percentage of time devoted to sending the "overhead" information in the beacon transmission. There is also overhead information associated with transmissions from the stations during each TDMA Period. It may also be desirable to keep the beacon period small enough to provide a desired number of transmission opportunities in a given length of time to reduce the latency. Thus, the TDMA period can be selected according to a trade-off between keeping overhead low and latency between transmission opportunities low. For example, in some implementations the TDMA period is selected to be twice the AC line cycle period. In this case, when operating in power line environments with an AC line cycle frequency of 60 Hz, the TDMA period would be approximately 33.33 msec. When operating in power line environments with an AC line cycle frequency of 50 Hz, the TDMA period would be approximately 40 msec. Variations in the TDMA period may occur due to drift in the AC line cycle frequency. The HE determines the duration of the TDMA period as well as the start time of the TDMA period.

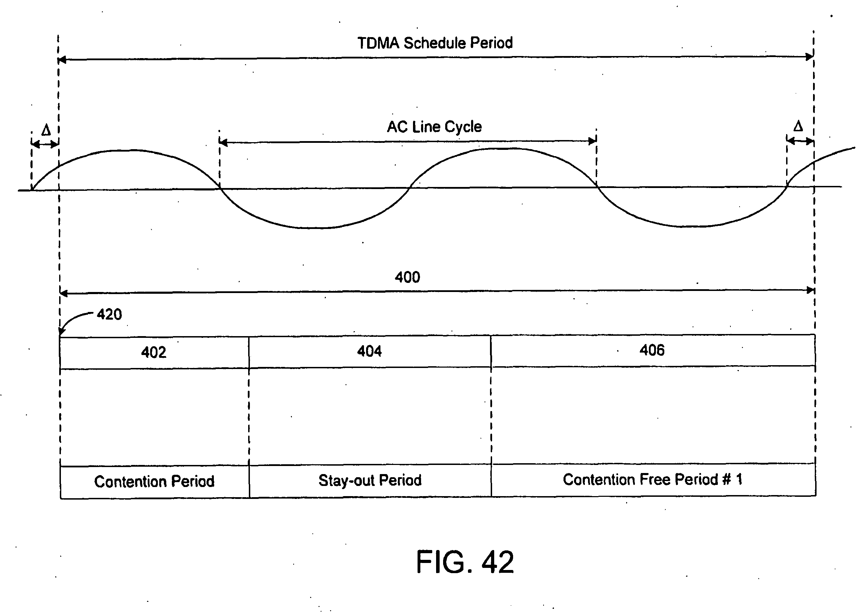

FIG. 42 shows the structure of an exemplary TDMA period 400 which consists of a Contention Period 402 followed by a Stay-out Period 404 and a Contention Free Period 406. In general, a TDMA period can contain any number of Contention Periods, Stay-out Periods and Contention Free Periods in any order. The TDMA period may also be different for different stations in the BPLN. The Contention Period 402 is a time in which stations can contend for permission to transmit using a shared medium access protocol such as CSMA/CA. The Stay-out Period 404 is a time during which stations are not allowed to transmit. The Contention Free Period 406 can include time slots assigned for use by predetermined stations (e.g., using a Time Domain Multiple Access (TDMA) protocol). Beacons are typically transmitted during the Contention Period. Beacon may also be transmitted during Contention Periods. The frequency of beacon transmission depends on how frequently the associated management information needs to be communicated. Typically, beacons can be transmitted once in several TDMA periods.

In networks in which repeaters are used to extend the reach of signals in the network, multiple stations can retransmit beacons transmissions to be heard by stations that would otherwise not be able to receive the beacons transmissions from the HE.

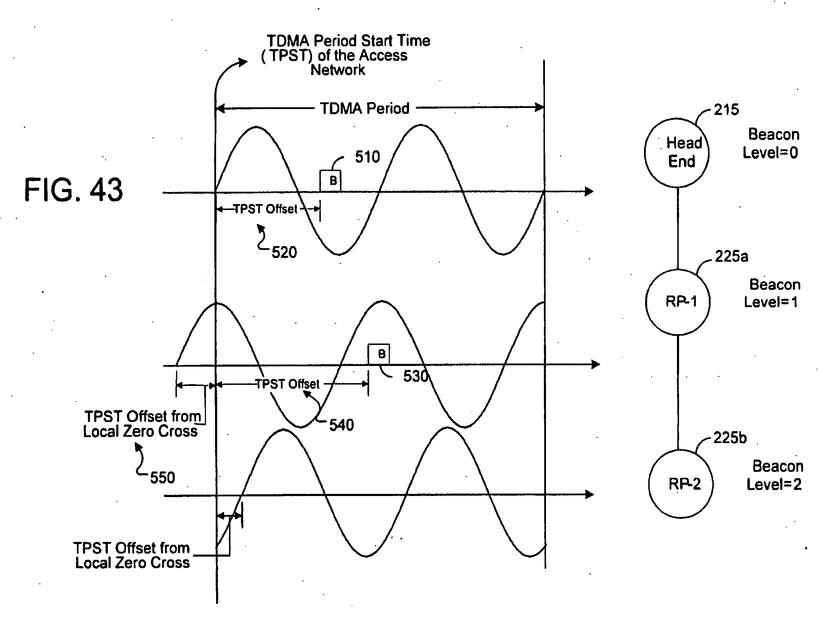

FIG. 43 is a timing diagram illustrating synchronization of multiple levels of stations using a beacon signal. In some implementations, the headend 215 can originate a beacon signal 510. The beacon signal 510 can include a TDMA period start time (TPST) offset 520. The TSPT offset 520 can indicate the time period between the start time of the TDMA period and the time at which the corresponding beacon is transmitted. A repeater 225a can receive the beacon signal 510. Based upon the beacon signal 510, the repeater 225a can synchronize its clock to the headend.

However, as can be seen with respect to FIG. 41, the beacon signal generated by the headend is not received by each of the repeater devices (e.g., repeater devices 225-b-d). Thus, the repeater devices that receive the beacon signal can generate a local beacon signal 530. The local beacon signal 530 can include a TPST offset 540 that corresponds to the derived synchronization from the headend 215 zero crossing as well as a local TPST offset 550 from the local repeater's (repeater 225a) zero crossing. A second level repeater 225b, upon receiving the beacon signal 530 from the first level repeater device 225a, can derive synchronization with the headend 215 based upon the beacon signal 530. In some implementations, the synchronization can be derived based upon TPST offset 540 and local TPST offset 550.

In various implementations, the local beacon signals can be generated by any station in the network, including the NTUs (e.g., NTUs 220a-e of FIG. 41) and/or CPEs (e.g., CPEs 205a-d of FIG. 41). Thus, the headend's TDMA period start time can be communicated to every station in an access network. Such synchronization of the TDMA Period start time throughout the network can be used to facilitate time-based access to the access network, for example, by using time division multiple access (TDMA) protocols.

In some implementations, the access network can facilitate coexistence networks. In such implementations, the access media can be shared, for example, by using a time based access sharing plan. In some implementations, the access network can provide half of a TDMA period for use by the access network stations, and the remainder of the TDMA period for use by coexistence networks. In general, the sharing of the TDMA period can be divided in any proportion between access network and the coexistence network based on predetermined policy.

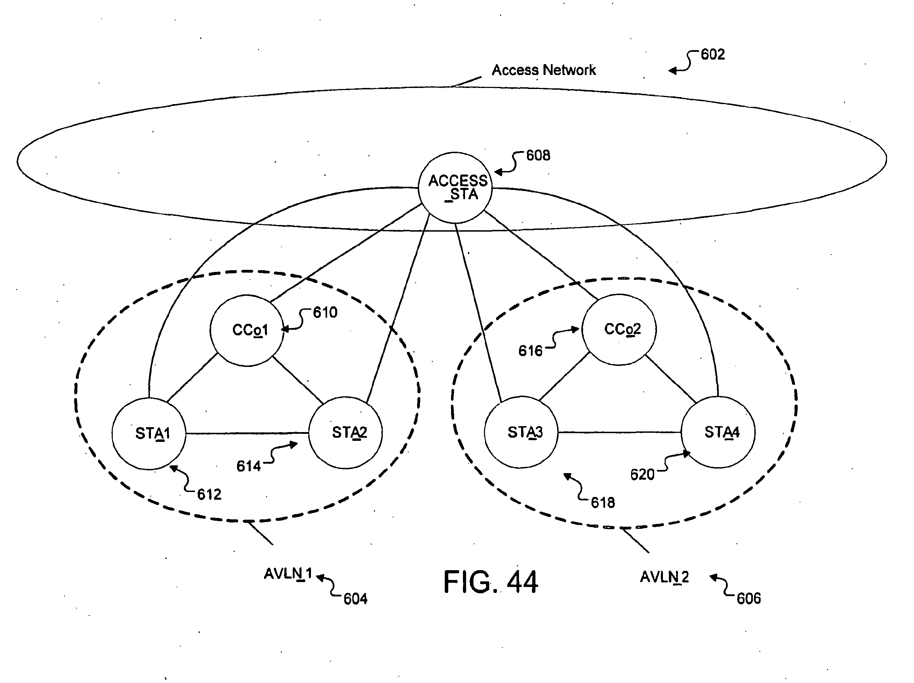

FIG. 44 is a block diagram illustrating an example communications network. The communications network includes an access network 602 that can communicate with two in-home network, AVLN1 604 and AVLN2 606. The access network 602, AVLN1 604, and AVLN2 606 can coordinate to share bandwidth access within network.

In some implementations, the access network 602 can include an access station, ACCESS_STA 608. For example, the ACCESS_STA 608 can be a headend (e.g., headend 215 of FIG. 41). The in-home networks, AVLN1 604 and AVLN2 606, can include one or more stations. For example, CCo_1 610, STA_612 and STA_2 614 belong to A VLN_604. Furthermore, CCo_2 616, STA_3 618 and STA_4 620 belong to A VLN_2 606. In FIG. 44, the devices that can receive signals from each other directly are connected with solid lines. Therefore, in FIG. 44, AVLN1 604 and AVLN2 606 cannot receive signals from each other directly. However, the ACCESS_STA1 608 of the access network 602 can receive signals from all the devices in AVLN1 604 and AVLN2 606.

In FIG. 44, the access network 602, AVLN1 604, and AVLN2 606 can synchronize communications in order to share bandwidth access in the network. For example, bandwidth access can be defined by an interval period that is part of a TDMA period. However, because AVLN1 604 and AVLN2 606 cannot communicate directly with each other, it can be difficult for AVLN1 604 and AVLN2 606 to share bandwidth access because neither receives the signals initiated by the other. Therefore, in one example, AVLN1 604 and AVLN2 606, may independently recognize the access network 602 and request 50% of the Beacon period, leaving the additional 50% of the Beacon period for the access network 602. However, in this example, if AVLN1 604 and A VLN2 606 are both utilizing 50% of the beacon period, this could result in zero bandwidth for the access network 602 if the requests from AVLN1 604 and AVLN2 606 do not overlap.

The example described above with respect to FIG. 44 represents an extreme case for a communications network. However, the example illustrates how non-coordination among the access networks and in-home networks can impede bandwidth and QoS attributes of the communications network. To overcome this problem, a method can be implemented to provide synchronization information for in-home networks, i.e. AVLN1 604 and AVLN2 606, from the access network 602. In some implementations, the access network 602 can provide TDMA intervals within a TDMA period during which one or more in-home networks can access the communications medium. Providing an access interval period from the access network to the in-home networks can enable the in-home networks to update their TDMA period so that none of the in-home devices will access the communication medium during the access network's 602 TDMA period.

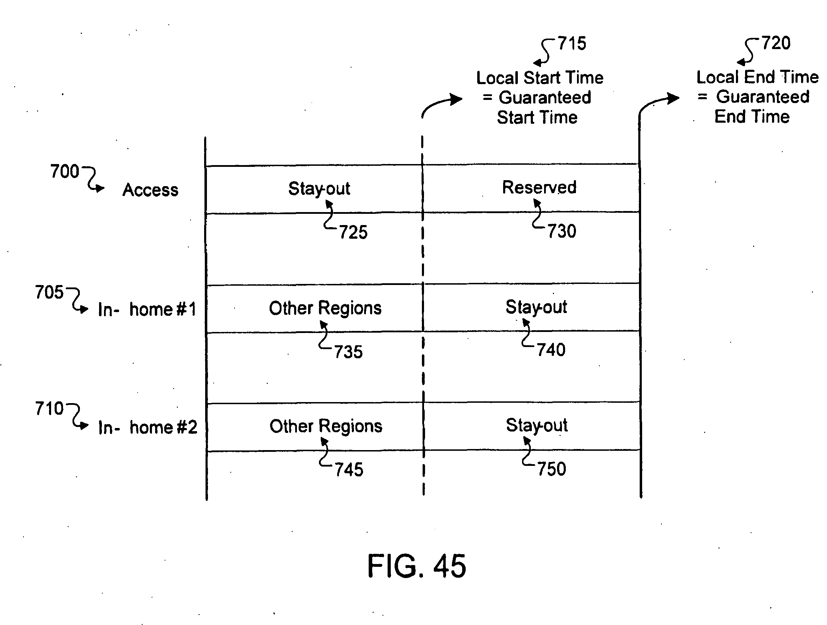

FIG. 45 is a timing diagram illustrating an example timing for an access network 700 and one or more coexistence networks 705, 710. In some implementations, the access network 700 can designate two regions. The two regions, for example, can be delineated by a guaranteed start time and a guaranteed end time, defining a guaranteed interval period and an in-home interval period. The guaranteed interval period can represent a minimum amount of time for the access network to access a medium during a high traffic period, while the in-home interval period can represent a minimum amount of time for one or more in-home networks to access the medium. In one implementation, policy can define a default time for the guaranteed interval period. In some examples, the policy can set the default time for the guaranteed interval period to be equal to half of the beacon period, thereby leaving the one or more in-home networks the remaining half of the beacon period. In some implementations, the guaranteed interval period of the access network can be utilized at the end of the beacon period, while the in-home interval period can be utilized at the beginning of the beacon period.

In the example of FIG. 45, both the access network and the in-home network require the full default bandwidth (e.g., 50% of the beacon period). In such examples, the separation of the regions can be marked by a "local start time" marker 715, while the end of the period can be marked by a "local end time" marker 720. In some examples, a first region can be designated as a "Stay-out" region 725. The "Stay-out" region 725 can designate the first region as used by coexistence networks 705, 710. A second region can be designated as a "Reserved" region 730. The "Reserved" region 730 can designate the second region as used by the access network 700. The "Reserved" region 730 can begin at the "local start time" marker 715 and end at the "local end time" marker 720. In various implementations, stations in the access network can communicate the local start time and local end time as part of the beacon transmission.

In some implementations, a first coexistence network 705 can designate two regions. A first region can be designated as "Other Regions" 735. The "Other Regions" 735 can define a time period during which stations in the coexistence network can transmit. For example, "Other Regions" can include intervals where all station in the coexistence network 705 can transmit using a contention based channel access. "Other Regions" can also include intervals where a specific station or traffic stream (for example, Video stream or Voice over IP Stream) is allowed contention free access within the coexistence network 705. Furthermore, "Other Regions" can also include intervals where all stations in the coexistence networks 705 and 710 can share the medium using a contention based channel access. A second region can be designated as a "Stay-out" region 740. The "Stay-out" region 740 can define a time period during which the coexistence stations of the first coexistence network 705 are instructed not to communicate information.

In some implementations, a second coexistence network 710 can designate two regions. A first region can be designated as "Other Regions" 745. The "Other Regions" 745 can define a time period during which stations in the coexistence network can transmit. A second region can be designated as a "Stay-out" region 750. The "Stay-out" region 750 can define a time period during which the coexistence stations of the first coexistence network 710 are instructed not to communicate information.

In various implementations, the "Other Regions" and "Stay-out" regions can be communicated by one or more station in the coexistence network. Some implementations of the coexistence network include a HomePlug AV specification based in-home network. In HomePlug AV networks, the TDMA Period is set to two times the AC line cycle period. In one implementation is for the access HE to specify a TDMA Period of two times the AC line cycle for coexistence with HomePlug AV based in-home coexistence networks. In some implementations, the "Reserved" and "Stay-out" regions for the access network can be communicated to the HomePlug AV network using HomePlug AV type beacons with Regions BENTRY to indicate the demarcation of various regions within the TDMA Period. An implementation is for the HomePlug AV network to use its Regions BENTRY to indicate to the access network its "Stay-out" and "Other" Regions. Regions BENTRY in HomePlug AV Beacons include Other Regions such as CSMA Region, Reserved Region, Beacon Region, etc. In general, HomePlug AV networks may specify multiple disjoint Stay-out Regions, Reserved Regions etc. Another implementation can use a special BENTRY in the Beacon for communicating the regions information between access and HomePlug Av networks.

In scenarios where the Central Coordinator (CCo) of the HomePlug AV network cannot directly hear any stations within the Access network, it can appoint a station that can hear both the CCo and one or more stations in the Access network as a Proxy Coordinator (PCo). Proxy Coordinator provides the function of relaying the coexistence intervals information (or regions information) between the access network and the CCo.

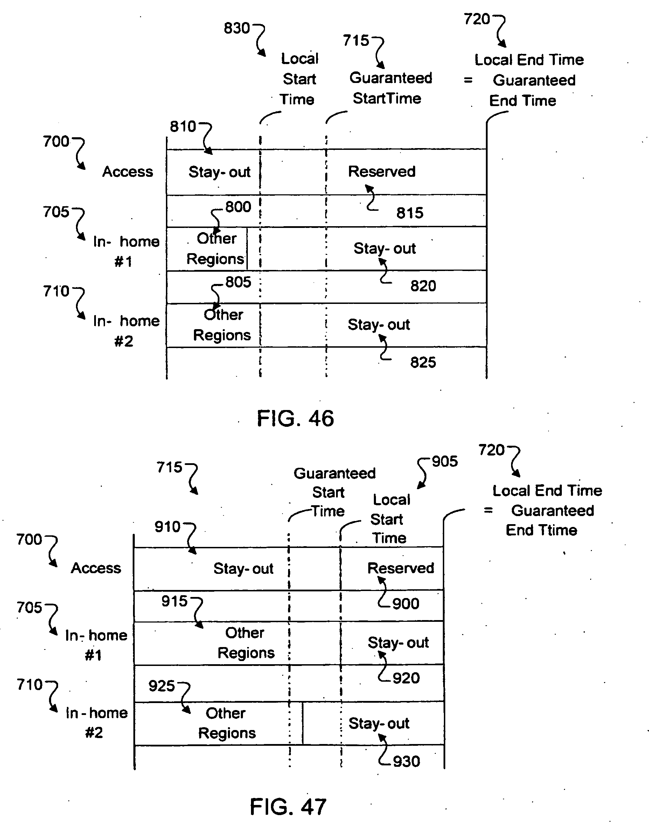

FIG. 46 is a timing diagram illustrating another example timing for an access network 700 and one or more coexistence networks 705, 710. In the example of FIG. 46, the coexistence networks 705, 710 are underloaded. The coexistence networks 705, 710 in such examples have only requested a portion of the bandwidth available to the coexistence networks 705, 710.

In some implementations, a first coexistence network 705 can identify a first "Other Regions" time period 800 during which the first coexistence network 705 is planning to transmit data. Similarly, a second coexistence network 710 can identify a second "Other Regions" time period 805 during which the second coexistence network 710 is planning to transmit data. Based on the specification of these regions, the access network can dynamically identify a "Stay-out" region 810 based on the maximum of the first "Other Regions" time period 800 and the second "Other Regions" time period 805. The maximum of the first "Other Regions" time period 800 and the second "Other Regions" time period 805 can be identified by a local start time 830. It is important to note that different stations in the Access network will see different in-home coexistence networks. Hence the selection of "local start time" and "local end time" at each station in the access network has to be based on the set of in-home coexistence networks that are visible to it and should also take into account the duration of the "stay-out" regions communicated by all detectable in-home networks. For example, station A might receive traffic from in-home network devices IHI, IH2, and IH3, while station B might receive traffic from in-home network devices IH1, IH3, and IH4. In this example, station A would not receive traffic from IH4, and station B would not receive traffic from IH2. Thus, station A would base the "local start time" and "local end time" on only IH1, IH2, and IH3, while station B would base its "local start time" and "local end time" on only IH1, IH3, and IH4.

In some implementations, the identification of the local start time 830 can also identify the beginning of a "Reserved" region 815 associated with the access network 700. The "Reserved" region 815 can run from the local start time 830 to the guaranteed end time 720, which can also be referred to as the local end time. The coexistence networks 705, 710 can identify "Stay-Out" regions 820, 825 based upon the time periods that the coexistence networks 705, 710 have given up based upon the specification of the first "Other Regions" time period 800 and second "Other Regions" time period 805.

FIG. 47 is a timing diagram illustrating another example timing for an access network 700 and one or more coexistence networks 705, 710. In the example of FIG. 47, the access network 700 is underloaded. The access network 700 in such examples have only requested a portion of the bandwidth available to the access network 700.

In some implementations, an access network 700 can identify a "Reserved" time period 900 during which the access network 700 is planning to transmit data. The "Reserved" time period 900 can define a "Local Start Time" 905 for each of the devices 700, 705, 710. The remainder of the period can be assigned as a "Stay-out" region for the access network.

In some implementations, a first coexistence network 705 can use the "Local Start Time" 905 to define a maximum time available to the first coexistence network 705. In this example, the first coexistence network 705 requests allocation of the bandwidth by defining "Other Regions" period 915 extending to the "Local Start Time" 905. The period outside of the "Other Regions" period 915 can be defined as the "Stay-out" period 920. The second coexistence network 710 can similarly use the "Local Start Time" 905 to define a maximum start time available to the second coexistence network 710. In this example, the second coexistence network 710 requests an allocation of the bandwidth by defining "Other Regions" period 925. The period outside of the "Other Regions" period 925 can be defined as the "Stay-out" period 930.

In some implementations, requests for allocation of bandwidth can be made within each coexistence network independently of the requests made by other coexistence networks. For example, in FIG. 47 the access network requests the "Reserved" region 900, while the first coexistence network 705 requests "Other Regions" period 915, and the second coexistence network 710 requests "Other Regions" period 925. In such an example, each of the coexistence networks 705, 710 can dynamically and independently define regions based upon allocation requests (e.g., bandwidth requirements of the networks). It is important to note that different in-home networks will see different stations in the access networks. Hence the selection of "Other Regions" at each in-home coexistence network has to be based on the set of access stations that are visible to it and should also take into account the duration of the "stay-out" regions communicated by all such stations in the access networks. For example, in-home network IH1 might receive traffic from access network stations A, B, and C, while in-home network IH2 might receive traffic from access network stations A, B, and D. In this example, IH1 would not receive traffic from station D, and IH2 would not receive traffic from station C. Thus, IH1 would base in-home interval period on only access network stations A, B, and C, while IH2 would base its in-home interval period on only A, B, and D.

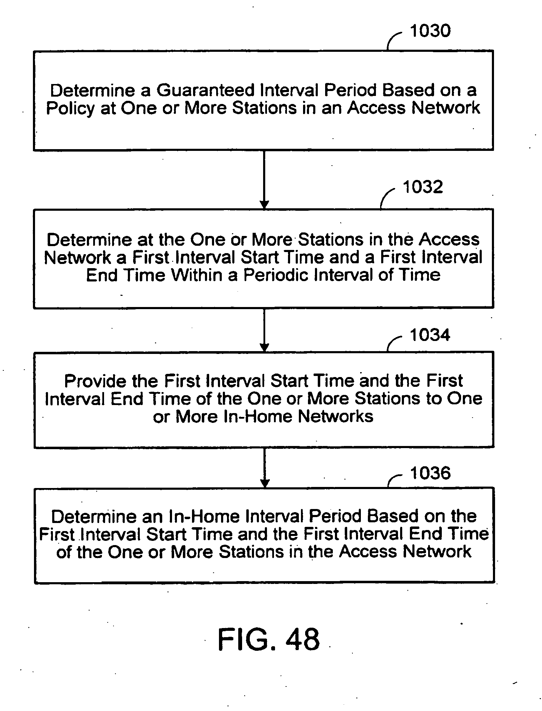

FIG. 48 is a flow chart illustrating an exemplary process for synchronizing communications among stations in a network. For example, the network can include an access network and one or more in-home networks that can comprise a broadband over power line network

At stage 1030, a guaranteed interval period comprising a guaranteed interval start time and a guaranteed interval end time within a periodic interval of time based on a policy can be determined at one or more stations in an access network. For example, the guaranteed interval period represents a minimum amount of time for the access network to access a medium. In one implementation, a default time for the guaranteed interval period can be equal to half of the beacon period. In one implementation, the guaranteed interval period of the access network can be utilized at the end of the beacon period. In another implementation, the in-home interval period can be utilized at the beginning of the beacon period.

In one implementation, the access network can determine the guaranteed interval period when at least one in-home network is present. For example, the guaranteed interval period can be determined by a head end of the access network.

In another implementation, one or stations in an access network can determine the guaranteed interval start time and a guaranteed interval end time by receiving guaranteed interval period information from a head end of the access network. For example, the guaranteed interval period information provided by the head end can include the start and end time of the guaranteed interval period within the periodic interval of time.

In one implementation, the policy utilized by the one or more stations in an access network to determine the guaranteed interval period can define a percentage of time within the periodic interval of time that the access network can utilize. In another implementation, the utilized policy can determines a duration of the periodic interval of time that the access network can utilize. In another implementation, the policy is based on a number of in-home networks that a station in the access network detects. In another implementation, the policy is based on the priority of traffic being utilized by the in-home network and the access network.

At stage 1032, a first interval start time and a first interval end time within the periodic interval of time can be determined at the one or more stations in the access network, wherein the first interval start times and first interval end times are different than the guaranteed interval start time and the guaranteed interval end time. For example, in one implementation, the first interval end time is fixed for the one or more stations in the access network, and the first interval start time is adjustable for the one or more stations in the access network based on a network demand.

In one implementation, determining at the one or more stations in the access network a first interval start time and a first interval end time within the periodic interval of time can include monitoring a traffic load for one or more connected in-home networks and the guaranteed interval period, and adjusting the local access start time based on the monitoring. In other implementations, access stations can obtain from the head end of the access network the first interval start time and first interval end time within the periodic interval of time. In such implementations, the head end can monitor traffic on the network and identify first interval start times and first interval end times for the access network stations.

At stage 1034, the first interval start time and the first interval end time of the one or more stations in the access network can be provided to one or more in-home networks. In one implementation, the one or more in-home networks can monitor the access network to determine the first interval start time and the first interval end time of the one or more stations in the access network.

At stage 1036, an in-home interval period can be determined at one or more in-home networks based on the first interval start time and the first interval end time of the one or more stations in the access network. For example, the in-home interval period can represent an amount of time for the in-home network to access a medium.

In one implementation, the in-home network may require more bandwidth. For example, the access network can determine that the in-home network requires more bandwidth by monitoring the network traffic load of the in-home network. In response to determining that the in-home network requires more bandwidth, the guaranteed interval period which includes the guaranteed interval start time and the guaranteed interval end time within a periodic interval of time can be decreased.

In another implementation, the access network may require more bandwidth. For example, the access network can determine that it requires more bandwidth based on its network traffic loads. In response to determining that the access network requires more bandwidth, the guaranteed interval period which includes the guaranteed interval start time and the guaranteed interval end time within a periodic interval of time can be increased.

In another implementation, the access network can determine whether the in-home network is a HomePlug AV network. In response to determining that the in-home network is a HomePlug AV network, the access network can utilize the guaranteed interval period at the access network. Furthermore, the in-home network can utilize a stay-out region to indicate a period of time that the in-home network is not utilizing.

In another implementation, the access network can set the in-home interval period at the in-home network at half of the beacon period. In response to setting the in-home interval period at half of the beacon period, the access network can adjust the guaranteed interval period of a beacon period at the head end of the access network.

Some aspects relate to managing communications over a shared medium.

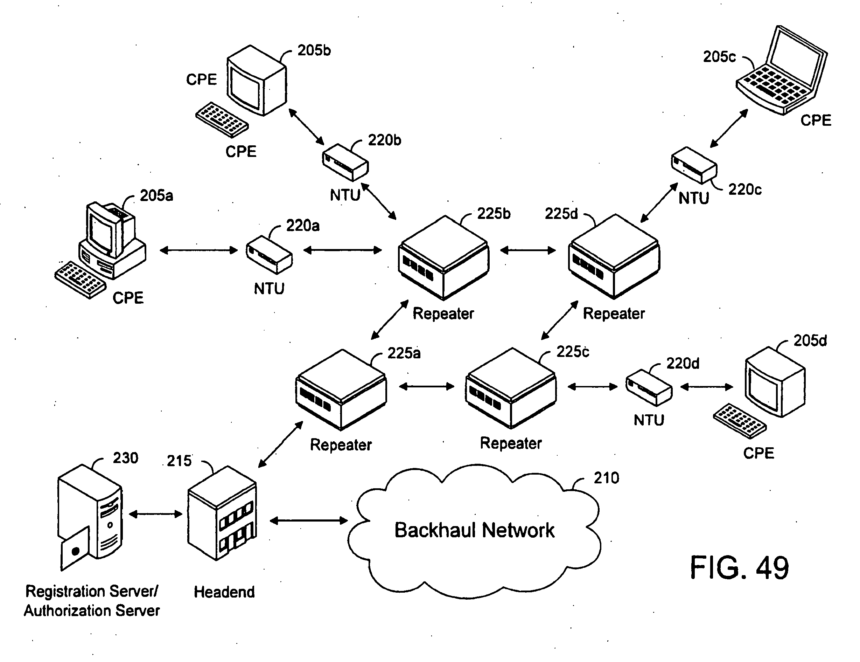

FIG. 49 is a block diagram of a powerline communication network. In various implementations, a powerline communication network can enable customer premises equipment (CPE) devices 205a-d to access a backhaul network 210 through a gateway (e.g., a headend server 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium. Systems for transmitting and receiving powerline network signals are further described above.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. Other implementations include the Authorization Server within the Backhaul Network 210. The authorization server can be operable to authenticate CPE devices 205a-d for transmission of data over the powerline network. When a CPE device 205a-d is not authenticated, in various implementations, the CPE device 205a-d can be provided access to a registration server 230. The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In various implementations, the Registration Server is not co-located with the Authorization Server. In other implementations, the Registration Server and Authorization Server are co-located as shown in FIG. 49. In various implementations, the Registration Server can be part of the Backhaul Network 201.

Various stations in a network may generate regular beacon transmissions for various purposes. A beacon transmission (or simply a "beacon") includes management information that can be used for a variety of purposes. The stations may communicate with each other in time periods between beacon transmissions, provided the power line channel characteristics between any two communicating stations permit it.

One of the functions of a beacon transmission is to carry medium allocation (or scheduling) information. The scheduling information can allocate some of the time between beacon transmissions as a contention period during which stations may contend for access to the power line medium. The scheduling information can also allocate a contention-free period during which times slots are assigned to particular stations for access to the power line medium. The scheduling information is provided relative to a TDMA Scheduling Period Start Time (or TDMA Period Start Time).

The TDMA Period start time is synchronized with respect to the AC line cycle of the power line waveform such that the time between consecutive TDMA period start times is based on the underlying AC line cycle frequency. Thus, to the extent that the AC line cycle frequency varies, the TDMA period start time (and hence the duration of each TDMA Period) may not be perfectly periodic. Since the beacons transmitted by the HE may not be heard by every station, each station transmits its own beacon to relay the information in the beacon to stations that do not hear the HE. While the stations may transmit their beacons at different times, the TDMA period start time is established with respect to the information contained in the beacons transmitted by the HE. At each station, the TDMA period start time can be synchronized to that of the HE using a start time synchronization procedure described in more detail below. Each station can then predict a given TDMA period end time (or future TDMA period start time) based on the synchronized start time and the local AC line cycle at the given station by correlating the synchronized start time to a detectable feature of the power line waveform such as a zero crossing. The TDMA period can be set by the HE to any multiple of a half of the AC line cycle period, for example, by waiting for a given number of zero crossings.

In some cases it is desirable to increase the TDMA period to make more efficient use of the medium by reducing the percentage of time devoted to sending the "overhead" information in the beacon transmission. There is also overhead information associated with transmissions from the stations during each TDMA Period. It may also be desirable to keep the beacon period small enough to provide a desired number of transmission opportunities in a given length of time to reduce the latency. Thus, the TDMA period can be selected according to a trade-off between keeping overhead low and latency between transmission opportunities low. For example, in some implementations the TDMA period is selected to be twice the AC line cycle period. In this case, when operating in power line environments with an AC line cycle frequency of 60 Hz, the TDMA period would be approximately 33.33 msec. When operating in power line environments with an AC line cycle frequency of 50 Hz, the TDMA period would be approximately 40 msec. Variations in the TDMA period may occur due to drift in the AC line cycle frequency. The HE determines the duration of the TDMA period as well as the start time of the TDMA period.

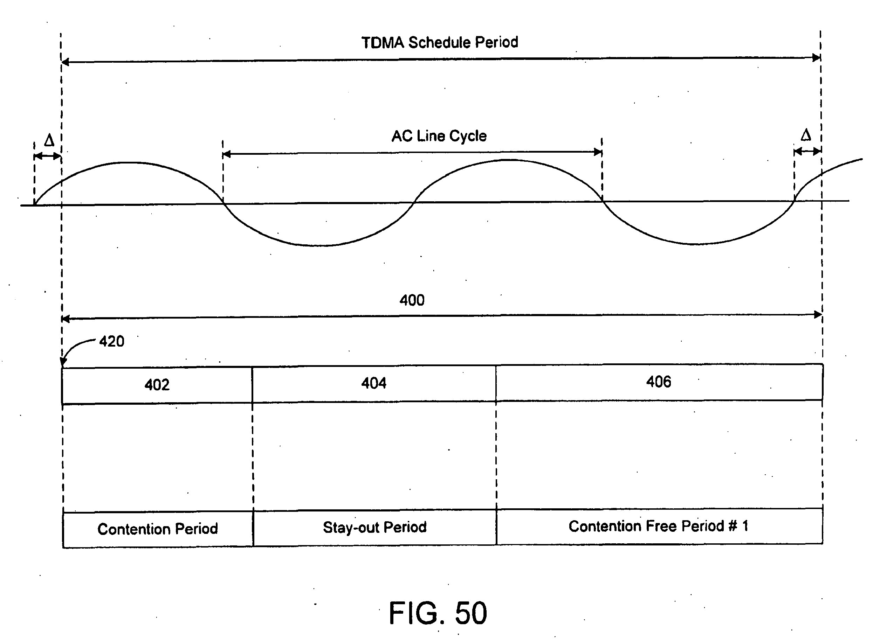

FIG. 50 shows the structure of an exemplary TDMA period 400 which consists of a Contention Period 402 followed by a Stay-out Period 404 and a Contention Free Period 406. In general, a TDMA period can contain any number of Contention Periods, Stay-out Periods and Contention Free Periods in any order. The TDMA period may also be different for different stations in the BPLN. The Contention Period 402 is a time in which stations can contend for permission to transmit using a shared medium access protocol such as CSMA/CA. The Stay-out Period 404 is a time during which stations are not allowed to transmit. The Contention Free Period 406 can include time slots assigned for use by predetermined stations (e.g., using a Time Domain Multiple Access (TDMA) protocol). Beacons are typically transmitted during the Contention Period. Beacon may also be transmitted during Contention Periods. The frequency of beacon transmission depends on how frequently the associated management information needs to be communicated. Typically, beacons can be transmitted once in several TDMA periods.

In networks in which repeaters are used to extend the reach of signals in the network, multiple stations can retransmit beacons transmissions to be heard by stations that would otherwise not be able to receive the beacons transmissions from the HE.

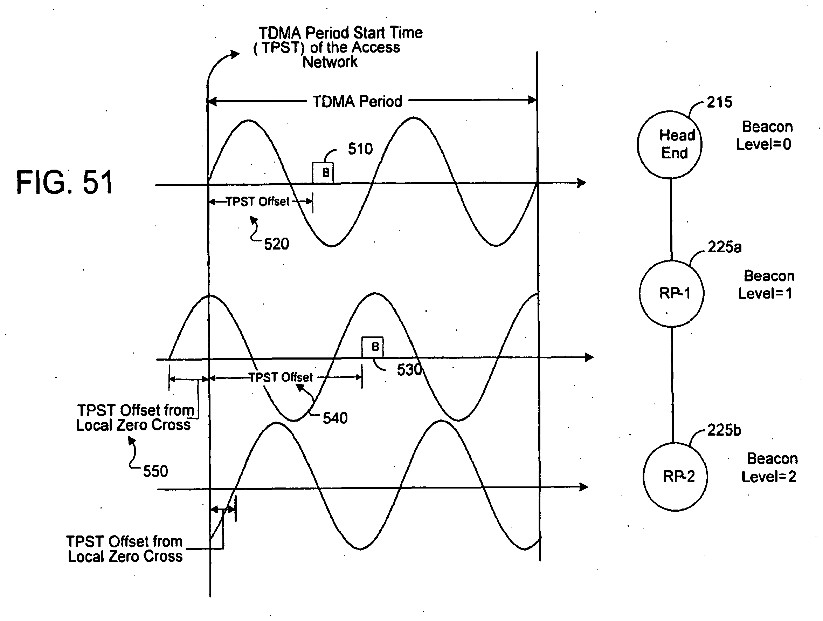

FIG. 51 is a timing diagram illustrating synchronization of multiple levels of stations using a beacon signal. In some implementations, the headend 215 can originate a beacon signal 510. The beacon signal 510 can include a TDMA period start time (TPST) offset 520. The TSPT offset 520 can indicate the time period between the start time of the TDMA period and the time at which the corresponding beacon is transmitted. A repeater 225a can receive the beacon signal 510. Based upon the beacon signal 510, the repeater 225a can synchronize its clock to the headend.

However, as can be seen with respect to FIG. 49, the beacon signal generated by the headend is not received by each of the repeater devices (e.g., repeater devices 225-b-d). Thus, the repeater devices that receive the beacon signal can generate a local beacon signal 530. The local beacon signal 530 can include a TPST offset 540 that corresponds to the derived synchronization from the headend 215 zero crossing as well as a local TPST offset 550 from the local repeater's (repeater 225a) zero crossing. A second level repeater 225b, upon receiving the beacon signal 530 from the first level repeater device 225a, can derive synchronization with the headend 215 based upon the beacon signal 530. In some implementations, the synchronization can be derived based upon TPST offset 540 and local TPST offset 550.

In various implementations, the local beacon signals can be generated by any station in the network, including the NTUs (e.g., NTUs 220a-e of FIG. 49) and/or CPEs (e.g., CPEs 205a-d of FIG. 49). Thus, the headend's TDMA period start time can be communicated to every station in an access network. Such synchronization of the TDMA Period start time throughout the network can be used to facilitate time-based access to the access network, for example, by using time division multiple access (TDMA) protocols.

In some implementations, the access network can facilitate coexistence networks. In such implementations, the access media can be shared, for example, by using a time based access sharing plan. In some implementations, the access network can provide half of a TDMA period for use by the access network stations, and the remainder of the TDMA period for use by coexistence networks. In general, the sharing of the TDMA period can be divided in any proportion between access network and the coexistence network based on predetermined policy.

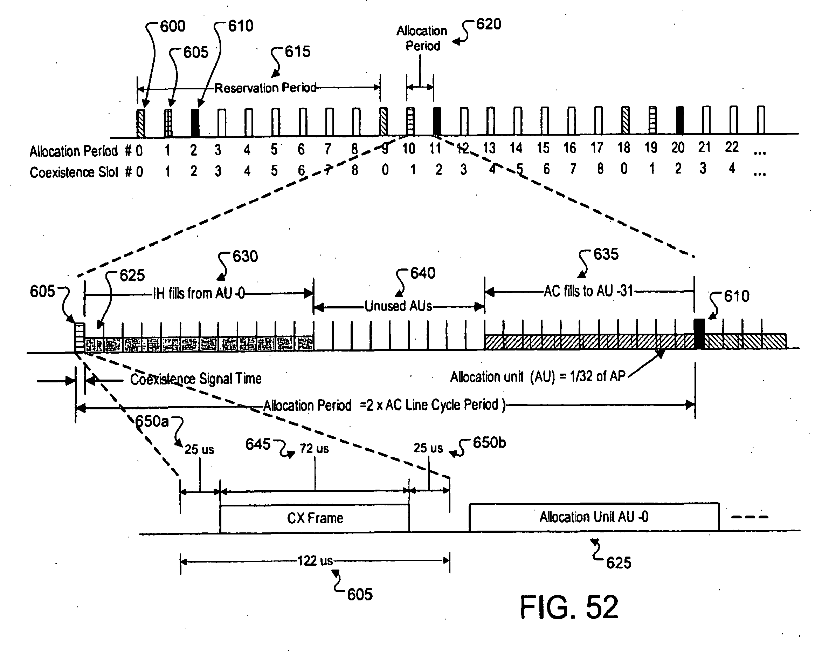

FIG. 52 is a timing diagram illustrating coexistence of in-home networks with an access network. The timing diagram illustrates multiple coexistence slots (e.g., coexistence slots 600, 605, 610). A first coexistence slot 600 can be reserved for an access network (e.g., including devices such as headend 215, repeaters 225a-d, NTUs 220a-d, and CPEs 205a-d of FIG. 49). In some implementations, the access network can broadcast a coexistence signal once every nine allocation periods 620. The coexistence signal can be used by the access network to reserve bandwidth (e.g., allocation unit 625) for devices included in the access network.

In some implementations, the coexistence slots 605, 610 can be assigned to foreign devices using the in-home power network to distribute signals. Upon connecting to the in-home network, a coexistence network can observe the network for a period of time and then request an apparently available coexistence slot 605, 610 and coexistence network identification (CNID). If the requested coexistence slot and CNID are available, the neighboring devices will provide an acknowledgement of the selection. If the requested coexistence slot and CNID are not available, the neighboring devices will reject the allocation or will not respond. The new coexistence network device can select another CNID and/or coexistence slot 605, 610 if the requested CNID and/or coexistence slot 605, 610 is not available.

The access network and the in-home devices can broadcast coexistence signals during the coexistence slots to reserve bandwidth (e.g., allocation units 625) for the foreign network devices on the network. In some implementations, the coexistence signal for a foreign network can be transmitted once every nine allocation periods 620. Transmission of a coexistence signal once every 9 allocation periods can enable up to 8 foreign networks (9 total coexistence slots - I access network coexistence slot) to coexist with the access network. In other implementations, the coexistence signal for a foreign network can be transmitted once every 27 allocation periods. Transmission of a coexistence signal once every 27 allocation periods can enable up to 24 foreign networks (27 total coexistence slots - 3 access network coexistence slots). In still further implementations, transmission of a coexistence signal once every 9 allocation periods and transmission of a coexistence signal once every 27 allocation periods can be combined. For example, some foreign networks might transmit a coexistence signal once every 9 allocation periods while other foreign networks might transmit a coexistence signal once every 27 allocation periods.

After broadcasting a reservation, the access network or the foreign network can wait a reservation period 615 before using the requested bandwidth, thereby enabling one or more foreign networks or the access network to reject the requested allocation. In some implementations, the access network can be provided a right to half of the allocation units (e.g., 16 allocation units per allocation period, in the example of FIG. 52), while the foreign network can be provided a right to the other half of the allocation units (e.g., 16 allocation units per allocation period). In some implementations, the reservation period can be equal to the time period between transmission of a coexistence signal from the access network. Thus, in the example of FIG. 52, a foreign network or access unit would broadcast the coexistence signal requesting a certain bandwidth allocation, and wait nine allocation periods before transmitting using the previously requested bandwidth allocation. For example, if the access network requested 11 allocation units of bandwidth during coexistence slot #0 600, the access network would wait until allocation period 10 before transmitting using the requested 11 allocation units. In such an example, while the foreign network devices could not reject the allocation since it is less than the 16 allocation units the access network is provided as a right, the reservation period delay in using those allocation units can serve to provide notice to the foreign networks that the bandwidth is being used.

In some implementations, the in-home (foreign networks) allocation units 630 can be filled from AU-0, while the access network allocation units 635 can be filled from AU-31. Any unused allocation units 640 are thereby located in the middle of the allocation period.

In some implementations, the access network or the foreign networks can request more than 50% of the bandwidth (e.g., more than 16 allocation units). For example, if the allocation unit is overloaded, while the foreign networks are underloaded, the access network can transmit a coexistence signal requesting 18 allocation units (e.g., AU-14 through AU-31). Because the foreign networks are underloaded, none of the foreign networks will reject the allocation request, and the access network can begin using the extra allocation units after the reservation period 615, thereby giving the foreign networks a chance to reject the allocation. If both the foreign networks and the access network are overloaded, each network can transmit requests for bandwidth greater than 50%, but such allocation will be rejected by the access network or by the foreign network. In such an example, each network will transmit using the 50% of the bandwidth as provided by rule. Other default allocations can be used.

A coexistence slot (e.g., coexistence slot 605) can include a coexistence signal. In some implementations, the coexistence signal can be 122μs in length and can include buffers 650a-b of 25μs each, and a coexistence frame 645 of 72ps. The buffers 650a-b can help to ensure that the coexistence frame does not run into neighboring allocation units. In some implementations, the allocation units can be provided similar buffers to prevent a transmission during one allocation unit to interfere with transmission during another allocation unit or a coexistence frame 645.

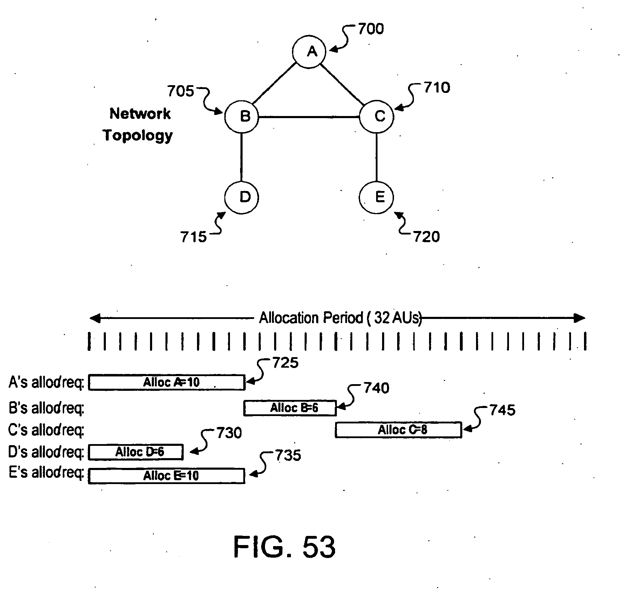

FIG. 53 is a network diagram showing an example assignment of allocation units. In some network topologies, it can be difficult for an allocation of bandwidth to be received by neighboring devices. The network topology of FIG. 53 includes device A 700, device B 705, device C 710, device D 715 and device E 720. However, in this network topology, device A is unable to receive any allocations requested by device D 715 or device E 720. Similarly, device D is unable to receive any allocations requested by device A 700 or device E 720, while device E is unable to receive any allocations requested by device A 700 or device D 715.

In the example of FIG. 53, device A 700 might request the first 10 allocation units 725. Unaware of the request from device A 700, device D 715 might request the first 8 allocation units 730. Similarly unaware of the request from device A 700, and unaware of the request from device D 715, device E 720 might request the first ten allocation units 735. In contrast, device B 705, having received the allocation request 725 from device A 700, requests allocation of AU-10 through AU-15 740. Similarly, device C 710, having received the allocation request 725 from device A 700 and the allocation request 740 from device B 705, requests allocation of AU-16 through AU-24 745. Because the allocation request 730 from device D 715 and the allocation request 725 from device A 700 are both received by device B 705, device B can notify device D that the selected timeslot is already taken. Similarly, the allocation request 735 from device E 720 and the allocation request 725 from device A 700 are both received by device C 710. Device C 710 can notify device E 720 that the requested allocation 735 has been selected. Devices D and E 715, 720 can thereby send further allocation requests.

In some examples, there may exist multiple out-of-sync networks that should be re-synced. For example, the presence of two out-of-sync coexistences slots indicates the presence of two networks. The networks can generally operate out-of-sync indefinitely while the networks are independent (e.g., one node/network does not receive traffic from both networks. However, if a new node becomes aware of both networks, or a node associated with one of the network becomes aware of the other network, then a network or node that sees both co-existence frames will send a co-existence frame requesting a re-sync to the other group. In some implementations, when the re-sync request is received, the other group will abandon their coexistence slots and join the new group. Joining the new group can typically include restarting the process allocating the coexistence slots to the in-home network.

In those instances where a new node detects multiple networks, the new node can choose to join one network, and initiate a re-sync request to the other network. The choice of which network to join can be based on whether one group is the access network. In some implementations, when one network is the access network, the new node will join the access network and instruct the other network(s) to re-sync. In those instances where multiple in-home networks are detected without an access network, in some implementations, the new node can choose to join the in-home network for which the coexistence frame is more reliably received. In some implementations, the access can be accorded priority over all in-home networks. In such implementations, the access network will not re-sync. If one of the two groups is synchronized to the access group, the other group will have to be re-synched.

In those implementations where the access network is accorded priority, when the access network is present, it will determine the start of the coexistence slot. The remaining plurality of in-home networks will then synchronize the start of coexistence slots to that of the access slots. If the access network is not present, one of the in-home networks will serve as a "proxy access network" in determining the start of the coexistence slot. When a proxy access network is present, all other in-home networks will then synchronize the start of coexistence slots to that of the proxy access network. The presence of a proxy access network can be indicated by marking the coexistence frame as a proxy coexistence frame. For example, marking the coexistence frame can include setting a bit within the coexistence frame to indicate that the frame is a proxy coexistence frame. Thus, if the real access network is ever detected by one of the nodes associated with the proxy access network, the node will join the real access network and initiate a re-sync request to the proxy access network.

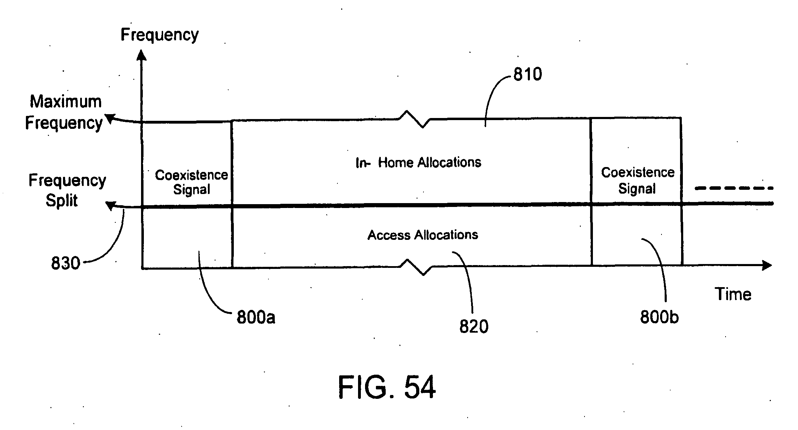

FIG. 54 is a timing diagram showing an example frequency division. In some implementations, the foreign coexistence networks and the access network can divide the bandwidth based upon a frequency division scheme. The coexistence signal 800a, 800b can continue to provide the networks with a mechanism by which to broadcast a request for bandwidth. However, the bandwidth requested is a range of frequencies. In some implementations, the coexistence signal 800a, 800b can be transmitted during a time period and can be transmitted on the frequencies requested. In other implementations, the coexistence signal 800a, 800b can be transmitted over all frequencies, thereby notifying other devices of the intent to use the specified bandwidth after a reservation period has expired.

The bandwidth can be allocated 50% to the access network and 50% to the foreign coexistence networks by default. However, the default arrangement can be modified based upon a request received from either the access network or the foreign coexistence networks. Bandwidth can then be reassigned using an in-home (e.g., foreign coexistence network) frequency allocation 810, and an access network allocation 820. The division between the in-home network frequency allocation 810 and the access network frequency allocation 820 can be defined by a frequency split 830

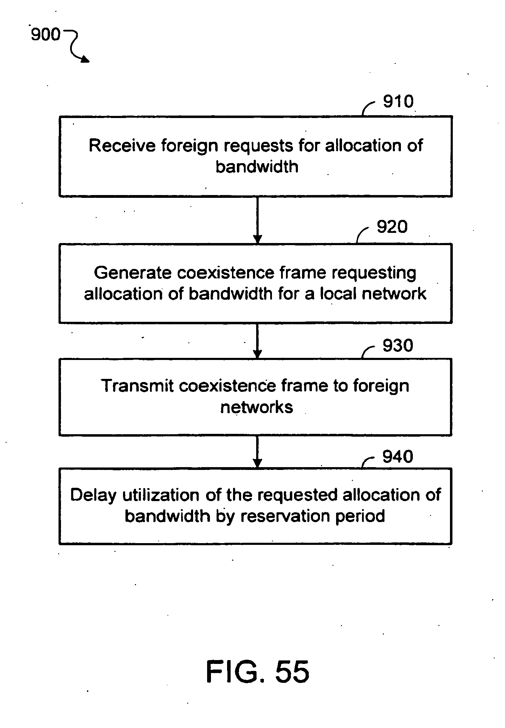

FIG. 55 is a flowchart illustrating an example process 900 for providing foreign network coexistence. At stage 910, foreign requests for allocation of bandwidth can be received. The foreign requests for allocation of bandwidth can be received, for example, by an access network device (e.g., NTU 220 of FIG. 49) or an in-home coexistence device/ network. In some implementations, the foreign requests for allocation of bandwidth can be received from coexistence networks (e.g., foreign devices using a different communication protocol). In some implementations, the foreign networks can include an access network and one or more in-home coexistence networks. In other implementations, the foreign networks can include only in-home coexistence networks. The foreign requests can be in the form of a coexistence signal (e.g., coexistence frame), and can be transmitted during periodically occurring coexistence slots. In some implementations, the foreign requests for allocation of bandwidth can provide a request for a specific piece of bandwidth (e.g., timeslot for TDMA networks or frequency range for FDMA networks) associated with a communications medium.

At stage 920, a coexistence frame requesting allocation of bandwidth for a local network can be generated. The coexistence frame can be generated, for example, by an access network device, or by an in-home coexistence network device. In some implementations, the coexistence frame can request a local allocation for the local network/ device based upon the foreign allocation requests. For example, if other networks/devices have requested a set of allocations, the local allocation request can be sure to avoid requesting any allocations from the set of allocations requested by the other networks/devices. The local allocation thereby shares the communication media with the other networks/devices.

At stage 930, the coexistence frame can be transmitted to foreign networks. The coexistence frame can be transmitted, for example, by an access network device (e.g., NTU 220 of FIG. 49) or by an in-home coexistence network device. In some implementations, the coexistence frame can have a standard format that can be implemented by the foreign networks as well as the local network. The coexistence frame can be transmitted within a periodically occurring coexistence slot. In some implementations, a buffer can be applied on either or both sides of the coexistence frame to prevent the coexistence frame from crossing over outside of the periodically occurring coexistence slot.

At stage 940, utilization of the requested allocation of bandwidth can be delayed by one reservation period.

The utilization of the request allocation of bandwidth can be delayed, for example, by an access network device or an in-home coexistence network device. In some implementations, a delay between the allocation request and utilization of the requested allocation can facilitate identification of problems with the requested allocation by foreign networks/ devices. For example, if device A intends to transmit at time 0 and device B later signals an intent to transmit at time 0, device C can notify the later signaling device (e.g., device B) that the requested time has been previously allocated. In other examples, an access network/device might signal an allocation that uses some of the bandwidth belonging to the coexistence networks. If the coexistence networks are utilizing the requested bandwidth, the coexistence networks/ devices can notify the access network/device that the requested allocation is being used by the coexistence networks/ devices. In some implementations, the reservation period is set at nine coexistence slots between subsequent coexistence transmissions from the same device. However, other lengths associated with the reservation period can be used.

In some implementations, processes for synchronizing the sharing of a communications medium among a plurality of networks can be provided. For example, the plurality of networks can include a broadband over power line network. In one implementation, the networks can include IEEE access networks, IEEE in-home networks, foreign access networks, and foreign in-home networks. For example, the sharing process can be implemented with time division multiplexing (TDM) and/or frequency division multiplexing (FDM).

In one implementation, a method of sharing between a plurality of networks can include transmitting a coexistence frame from a plurality of networks by utilizing a periodically occurring coexistence slot; wherein the coexistence frame is utilized for negotiating and reserving a medium for transmission by a network. For example, the plurality of networks can include an access network and one or more in-home networks, and the plurality of networks can utilize different technologies. In one implementation, the coexistence frame can be based on a HomePlug 1.0 delimiter.

In one implementation, one of the networks reserves a periodically occurring coexistence slot. The network can determine the periodicity, i.e., the frequency, of the coexistence slot reservation based on a priority of network traffic. For example, some network traffic, such as video feeds, have a higher priority than other network traffic. Therefore, for higher priority traffic, the network can, for example, reserve every ninth coexistence slot. Furthermore, for lower priority traffic, the network can, for example, reserve every twenty-seventh coexistence slot. The network can set the periodicity of the coexistence slot reservation at a lower value for lower priority traffic.

In one implementation, reserving a coexistence slot can include transmitting a slot allocation request from one of the networks to all of the other networks. The network can utilize the slot allocation that it requested, if it receives a slot allocation confirmation in to response to its request from all of the other networks. The slot allocation confirmations from the other networks can, for example, be transmitted during the other network's reserved coexistence slots.

In one implementation, reserving a periodically occurring coexistence slot can include selecting a network identifier at the network. The network can provide the network identifier to the other networks and determine whether the other networks approve the network identifier of the network.

In one implementation, one of the plurality of networks can determine a start of the coexistence slot with a fixed offset from an AC line cycle zero cross associated with the network (e.g., as described with reference to FIG. 51). The remaining plurality of networks can then, for example, determine a start of the coexistence slot based on where the coexistence frames are heard relative to a AC line cycle associated with the network. In one implementation, the remaining plurality of networks can track a coexistence slot based on the reception of a coexistence frame heard from another network, wherein the coexistence frame can include information on the number of hops between the current network and the network tracking the AC line cycle.

In one implementation, the reservation of the communications medium by the network can include one or more intervals between coexistence slots that are owned by the network. For example, the duration of the interval reserved by the network can be based on a policy, wherein the purpose of the policy is to facilitate the plurality of networks having an equal share of the medium. In other examples, the policy can facilitate the plurality of networks having a weighted share of the medium (e.g., based upon the priority of the traffic associated with the respective networks).

In one implementation, a first network can receive a request from a second network to swap an allocation interval period with the second network. For example, network A and network B can be utilizing different allocation interval periods, wherein network A is using allocation interval periods 1-10 and network B is using allocation interval periods 11-20. However, the allocation interval periods 16-20 may not be equivalent to the allocation interval periods 1-15. Therefore, in one implementation, network B can request network A to swap their respective allocation interval periods.

In response, in one implementation, network A may agree to the swap and take allocation interval periods 11-20 and network B would take allocation interval periods 0-10. In response, in another implementation, network A may not be able to take allocation interval periods 11-20 if allocation interval periods 16-20 are not equivalent. Therefore, network A can decrease its allocation interval periods to 1-8; therefore, allowing network B to take allocation interval periods 9-15. Thus, network B is allowed to increase its equivalent allocation interval periods by two.

Some aspects relate to network encryption key rotation.

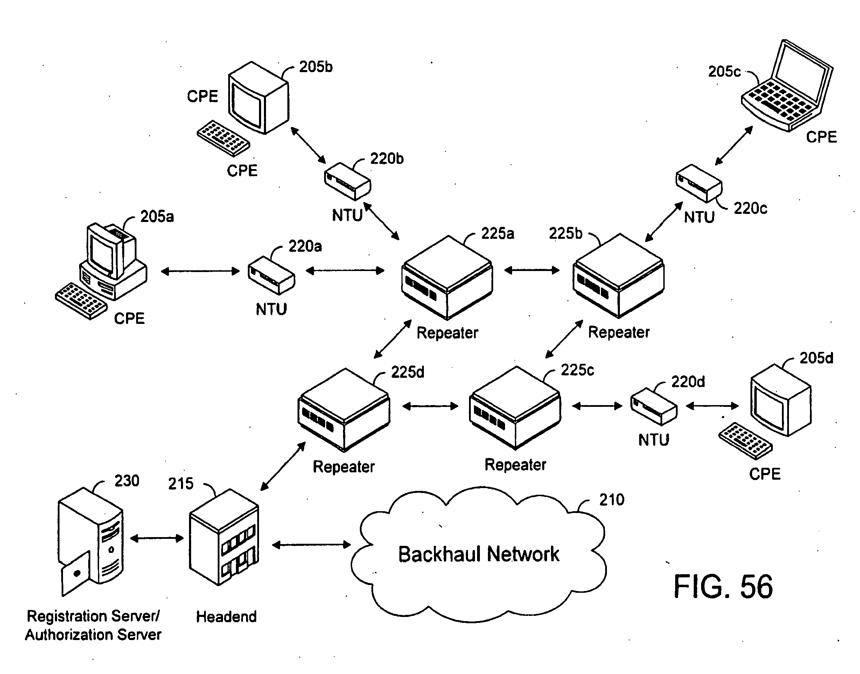

FIG. 56 is a block diagram of a powerline communication network. In various implementations, a powerline communication network can enable customer premises equipment (CPE) devices 205a-d to access a backhaul network 210 through a gateway (e.g., a headend/authentication server 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium. Systems for transmitting and receiving powerline network signals are further described above.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. Another implementation includes the authorization server on the backhaul network 210. The authorization server can be operable to authenticate CPE devices 205a-d for transmission of data over the powerline network. When a CPE device 205a-d is not authorized, in various implementations, the CPE device 205a-d can be provided access to a registration server 230. The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In some implementations the registration server and authorization server can be co-located as shown in FIG. 2. In some implementations, the registration server can be part of the backhaul network 201. In still further implementations, the registration server is not co-located with the authorization server.

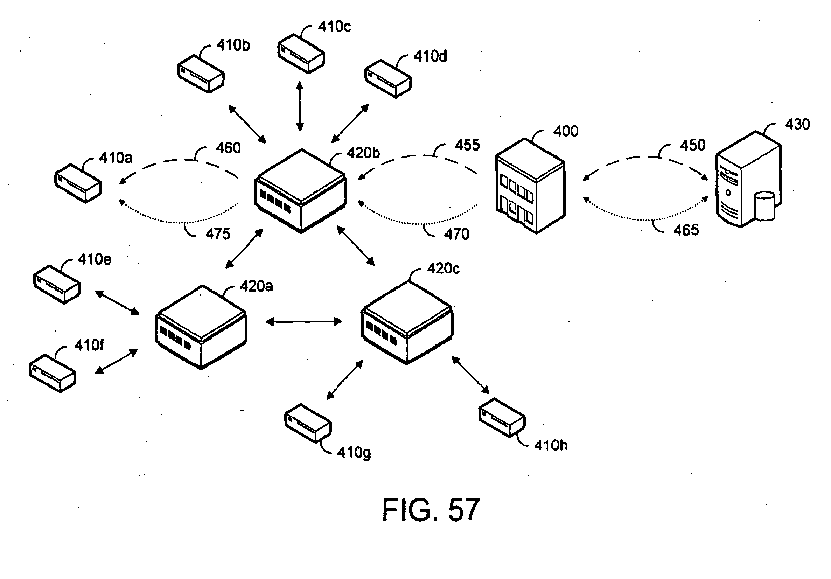

FIG. 57 is a block diagram illustrating a process for rotating network encryption keys in a network. The powerline network, in various implementations, can include a headend 400, number network termination units (NTUs) 410a-h and repeaters 420a-c. The NTUs 410a-h can communicate with a headend 400 through the repeaters 420a-c. The repeaters 420a-c can help to restore losses in the signals over spans in the network prior to the signal reaching a headend 400. The headend 400 can provide a gateway to a backhaul network.

In various implementations, the stations (e.g., repeaters 420a-c and NTUs 410a-h) are provided with a network encryption key (NEK). The NEK can be used to facilitate communications among the stations and provide protection from unauthorized devices joining the network. However, as with any key, the NEK can be cracked if it is used for an extended period of time. In various implementations, the NEK can be rotated periodically to make it more difficult to crack the NEK. In some implementations, the rotated key can be transmitted to the stations (e.g., NTUs 410a-h, repeaters 420a-c, etc.) by a headend 400.

However, it can be difficult to determine whether a new NEK (e.g., rotated NEK) is authentic. For example, a device attempting to compromise the network could send a communication indicating that the network is using a new NEK and compromise one or more network devices. In some implementations, the headend 400 can transmit a key rotation counter to each of the devices in a network (e.g., NTUs 410a-h, repeaters 420a-c, etc.). For example, the transmitted key counter can be an initial n-digit number sent with the NEK during an initial connection to the network. In some implementations, the n-digit number can be identical across all of the devices in the network. In other implementations, each device can be provided with a counter that is specific to the particular device. For example, NTU 410a might receive a key counter of 53045, while NTU 410b might receive a key counter of 20783. When the headend 400 sends a new NEK, the headend 400 can use the particular key counter associated with the specific device to which the NEK is being transmitted to provide authentication for the new NEK.

In some implementations, the key rotation counter can be incremented by a function each time a new NEK is transmitted. In those implementations where the key rotation counter is specific to each of the various devices on the network, a particular key counter associated with a particular device can be incremented by a function each time a new NEK is sent to the particular device. In various implementations, any incrementing function can be used. For example, the counter could be incremented by a period (e.g., by summing with a number), by multiplying by a number, or by any other function.

In some implementations, the function associated with the increment can be transmitted when the initial counter is sent. In other implementations, the function associated with the increment can be transmitted when the new NEK is sent. In still further implementations, network stations (e.g., NTUs 410a-h, repeaters 420a-c, etc.) can have prior knowledge of the function based upon initial setup before deployment. Thus, the station receiving the new NEK with the incremented counter can increment its own counter (e.g., previously received from the headend 400 when the initial NEK was received) using a known function and determine that the key rotation request is authentic.

In the various implementations described above, any or all of the communications between the headend and the stations (e.g., NTUs 410a-h, repeaters 420a-c, etc.) can be encrypted using a network membership key (NMK) associated with the respective station. The NMK associated with the respective device can be retrieved, for example, from a key store 430.

In the example of FIG. 57, a headend 400 can respond to a connection request from the NTU 410a, by retrieving an NMK associated with the NTU 410a from a key store 430, as shown by signal 450. The headend 400 can encrypt a current NEK using the NMK associated with the NTU 410a. The headend 400, in some implementations, can also encrypt a current key rotation counter for inclusion in the response to the connection request received from the NTU 410a. At signal 455 and signal 460, the headend 400 transmits the encrypted NEK and the key rotation counter to the NTU 410a. The NTU 410a can thereafter decrypt the NEK and the key rotation counter using its NMK. The NTU 410a can use the NEK to encrypt communications on the network.

After expiration of a rotation period associated with the current NEK, the headend device 400 can determine to rotate the NEK. To do so, the headend 400 can retrieve an NMK associated with the NTU 410a from the key store 430, as shown by signal 465. The headend 400 can also rotate the key rotation counter using a function and generate a new NEK. The headend 400 can then use the NMK to encrypt the new NEK and the incremented key rotation counter. The encrypted new NEK and incremented key rotation counter can be transmitted to the NTU 410a, as shown by signal 470 and signal 475. The NTU 410a can decrypt the key rotation communication using its NMK. The NTU 410a can locally increment the previously received key rotation counter. If the decrypted key rotation counter matches the locally incremented key rotation counter, the new NEK is determined to be authentic and the previous NEK is discarded in favor of the new NEK. If the decrypted key rotation counter does not match the locally incremented key rotation counter, the new NEK is disregarded and the previous NEK continues to be used.

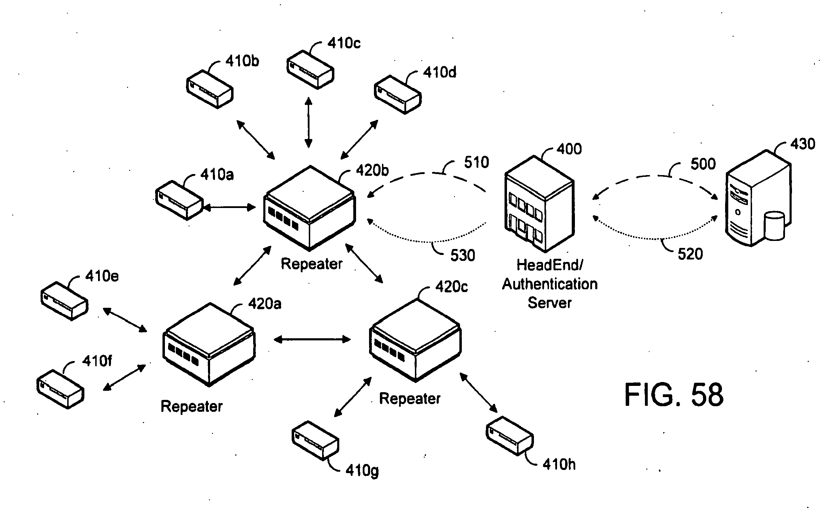

FIG. 58 is a block diagram illustrating a process for rotating network encryption keys in a network. The standard operation of the network of FIG. 58 is substantially similar to the operation of the network shown in FIG. 57. In the example of FIG. 58, a headend 400 can respond to a connection request from the repeater 420b, by retrieving an NMK associated with the repeater 420b from a key store 430, as shown by signal 500. The headend 400 can encrypt a current NEK using the NMK associated with the repeater 420b. The headend 400, in some implementations, can also encrypt a current key rotation counter for inclusion in the response to the connection request received from the repeater 420b. At signal 510, the headend 400 transmits the encrypted NEK and the key rotation counter to the repeater 420b. The repeater 420b can thereafter decrypt the NEK and the key rotation counter using its NMK. The repeater 420b can use the NEK to encrypt communications on the network.

After expiration of a rotation period associated with the current NEK, the headend device 400 can determine to rotate the NEK. To do so, the headend 400 can retrieve an NMK associated with the repeater 420b from the key store 430, as shown by signal 520. The headend 400 can also rotate the key rotation counter using a function and generate a new NEK. The headend 400 can then use the NMK associated with the repeater 420b to encrypt the new NEK and the incremented key rotation counter. The encrypted new NEK and incremented key rotation counter can be transmitted to the repeater 420b, as shown by signal 530. The repeater 420b can decrypt the key rotation communication using its NMK. The repeater 420b can locally increment the previously received key rotation counter. If the decrypted key rotation counter matches the locally incremented key rotation counter, the new NEK is determined to be authentic and the previous NEK is discarded in favor of the new NEK. If the decrypted key rotation counter does not match the locally incremented key rotation counter, the new NEK is disregarded and the previous NEK continues to be used.

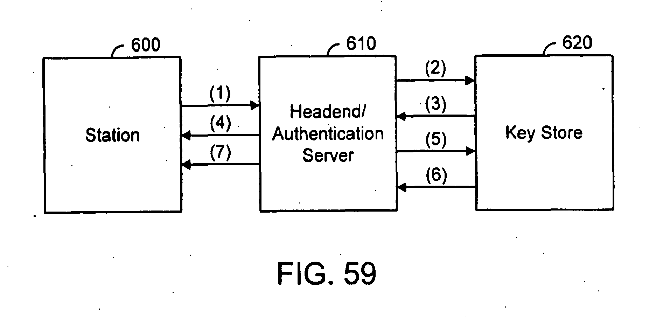

FIG. 59 is a block diagram illustrating the communication flow associated with rotating keys in a network. When a station 600 (e.g., an NTU, repeater, headend, etc.) joins the network, the new station 600 can transmit a network encryption key (NEK) request as shown by signal (1). In various implementations, the NEK can be used to encrypt communications among powerline network devices (e.g., NTUs, repeaters, headend(s), MAC/DAK data store, etc.). The NEK request can be encrypted using the NMK associated with the new station 600.

Upon receiving a request for the NEK, a headend/authentication server 610 can authenticate the request by retrieving the NMK associated with the requesting station 600 from a key store 620, as shown by signals (2) and (3), and attempting to decrypt the NEK request using the NMK associated with the requesting station 600. If the NMK associated with the requesting station 600 is operable to decrypt the NEK request, the headend/authentication server 610 can identify a current key rotation counter and encrypt the NEK and the current key rotation counter using the NMK associated with the requesting station 600 and communicate the encrypted NEK and current key rotation counter to the requesting station 600 as shown by signal (4). The new station 600 can receive the encrypted NEK and current key rotation counter, and use its NMK to decrypt the NEK and current key rotation counter. Upon decrypting the NEK, the new station 600 can encrypt communications to other network devices using the NEK.

After the expiration of the NEK, the headend/authentication server 610 can retrieve the NMK associated with the station 600 from a key store 620 as shown by signals (5) and (6). The headend/authentication server 610 can also increment the current key rotation counter and generate a new NEK. The headend/authentication server 610 can encrypt the incremented key rotation counter and the new NEK using the NMK associated with the station 600, thereby generating a key rotation communication.

The key rotation communication can be transmitted to the station 600 as shown at signal (7). The key rotation communication can be decrypted by the station using the NMK associated with the station. The station can locally increment the current key rotation counter and compare the locally incremented counter with the key rotation counter received in the key rotation communication. If the locally incremented counter matches the counter value received in the key rotation communication, the key rotation communication is authenticated, and the station can begin using the new NEK and can discard the previous NEK. If the locally incremented counter does not match the counter value received in the key rotation communication, the key rotation communication can be disregarded.

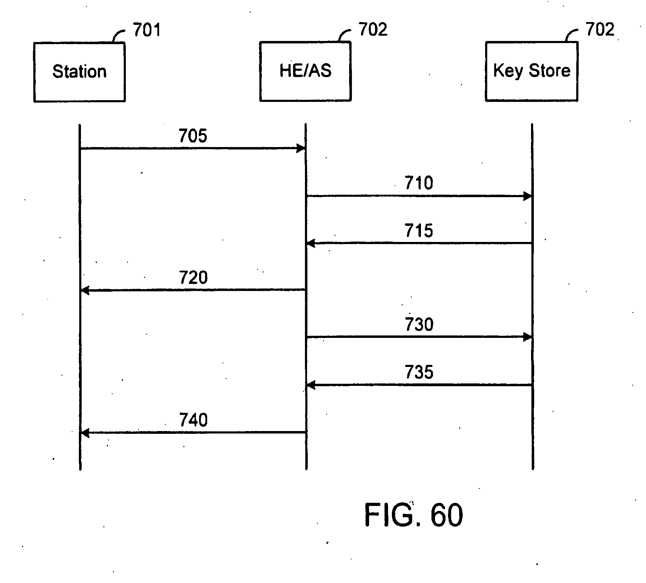

FIG. 60 is a flow diagram depicting an example flow for rotation of keys. In some implementations, the station can use the unique NMK to encrypt a request a network encryption key (NEK) as shown by signal 705. In such implementations, the NEK can be used to encrypt all communications among stations 701 in a core cell (e.g., core cell of FIG. 1). The HE or AS 702 can authenticate the request by decrypting the request by querying a key store 703 for the NMK associated with the requesting station 701 as shown by signal 710. The NMK received from the key store 703, as shown by signal 715, can be used to decrypt the NEK request. If the NMK can decrypt the NEK request, the NEK request is determined to be authentic. The HE or AS 702 can provide the NEK and a key rotation counter based upon authenticating the request as shown by signal 720. In various implementations, the NEK and key rotation counter can be encrypted using the NMK associated with the station 701.

The NEK can thereafter be rotated to protect the network encryption key from cracking using brute force algorithms. In order to protect stations from illegitimate key rotations requests, an authentication server can provide a counter to the stations. In some implementations, the same counter can be provided to all stations. In other implementations, the counter can be a pseudo-random number that may differ between stations. In some implementations, the counter can be provided in an encrypted format, for example, using a network membership key (NMK) associated with the station, or using a device access key associated with the station. In other implementations, the counter can be provided to the station with the first NEK, both the counter and the NEK being encrypted using the NMK associated with that device.

The counter can serve to test that a new NEK is authentic. In some implementations, a rotation message can be sent to the stations. To do so, the HE or AS 702 can query the key store 703 as for the NMK associated with the station 701 as shown by signal 730. The NMK associated with the station is then received by the HE or AS 702, as shown by signal 735. A rotation message can be generated. The rotation message can include the new NEK and an incremented counter. In various implementations, the increment associated with the counter might not be linear, or might not be incremental, but rather the counter may be incremented according to some function known to both the authentication server and the stations. The rotation message can be encrypted using the retrieved NMK associated with the respective station 701 and then transmitted to the station 701 as shown by signal 740.

Upon receiving a rotation message, the station 701 can decrypt the message using the station's NMK. The station 701 can compare the counter value included in the rotation message to its own counter value. If the counter values match, the new NEK is authenticated, and replaces the previous NEK.

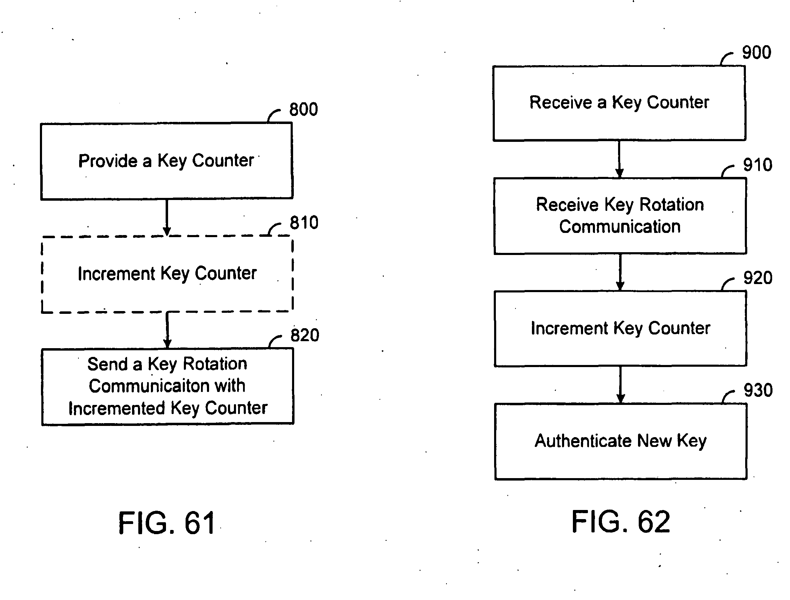

FIG. 61 is a flowchart illustrating an example method to rotate network keys. At stage 800, a key counter is provided. The key counter can be provided, for example, by a headend device (e.g., headend 400 of FIG. 4). In various implementations, the key counter can be randomly generated. In some implementations, a different key counter can be generated for each station on the network. In other implementations, the same key counter can be used for every station on the network.

At optional stage 810, the key counter can be incremented. The key counter can be incremented, for example, by a headend device (e.g., headend 400 of FIG. 57). In various implementations, the key counter can be incremented by a function. The function, for example, can be linear or non-linear: Moreover, the function, in some implementations can be specific to the particular key counter being incremented. Thus, each station can be incremented by a different function, thereby inhibiting hackers from being able to compromise multiple stations.

At stage 820, a key rotation communication can be transmitted. The key rotation communication can be transmitted, for example, by a headend device (e.g., headend 400 of FIG. 57). The key rotation communication, in various implementations, can be encrypted and can include a new NEK and an incremented key counter value. The incremented key counter value can be used by the station to determine the authenticity of the key rotation communication. For example, if the incremented key counter value does not match a locally incremented value, the key rotation communication is considered invalid.

FIG. 62 is a flowchart illustrating an example method to authenticate a key rotation communication. At stage 900, a key counter is received. The key counter can be received, for example, by a station (e.g., NTU 410 or repeater 420 of FIG. 57). In various implementations, the key counter can be stored by the station until a key rotation communication is received.

At stage 910, a key rotation communication is received. The key rotation communication can be received, for example, by a station (e.g., NTU 410 or repeater 420 of FIG. 57). In various implementations, the key rotation communication can be encrypted using an NMK associated with the station. The key rotation communication can be decrypted based upon the station's knowledge of its own NMK. The key rotation communication can include, for example, a new NEK and an incremented key counter.

At stage 920, a local key counter can be incremented. The local key counter can be incremented, for example, by a station (e.g., NTU 410 or repeater 420 of FIG. 57). In various implementations, the incrementing can be done by a previously identified function known to both the station and to an authentic originator of key rotation communications. In additional implementations, the function used to increment the key counter can be any function (linear or non-linear) known to both the station and the originator of authentic key rotation communications. In various implementations, the incrementing can be performed at any time before authentication of the new NEK.

At stage 930, the new key can be authenticated. The new key can be authenticated, for example, by a station (e.g., NTU 410 or repeater 420 of FIG. 57). In various implementations, the new key can be authenticated by comparing a locally incremented key counter with a key counter received as part of a key rotation communication. For example, when the local counter and received counter match, the new key is authentic. When the local counter and received counter do not match, the new key is not authentic.

Some aspects relate establishing a unique end-to-end management key.

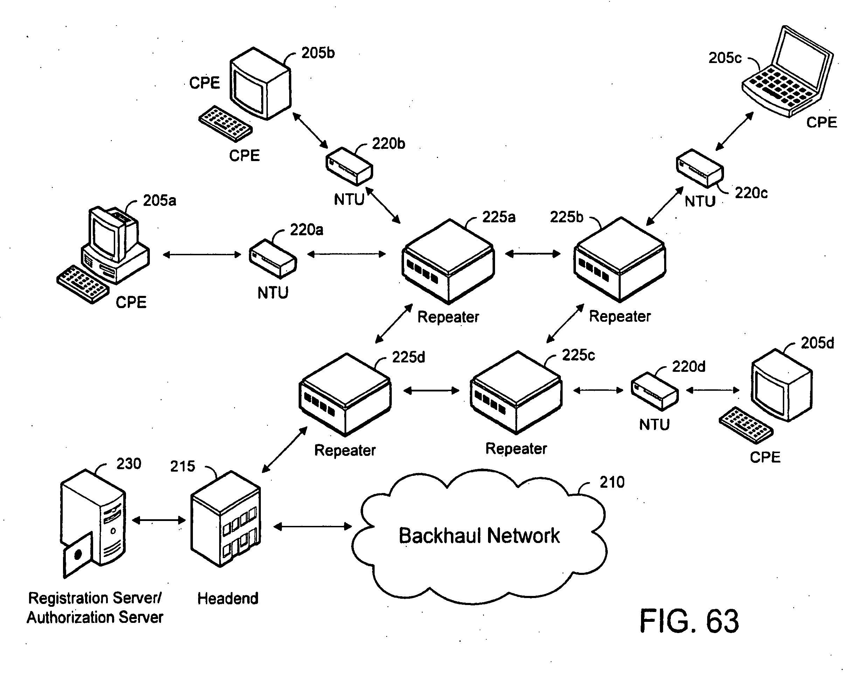

FIG. 63 is a block diagram of a powerline communication network. In various implementations, a powerline communication network can enable customer premises equipment (CPE) devices 205a-d to access a backhaul network 210 through a gateway (e.g., a headend 215). In various implementations, there can be multiple gateways to the backhaul network 210. For example, it can be inefficient for a CPE device in one city to be required to send a signal to another city prior to accessing the backhaul network 210 (e.g., the Internet).

The CPE devices 205a-d can communicate with the headend 215 through a network of network termination units 220a-d and repeaters 225a-d. In some implementations, the network termination units can operate to translate the data signals from the CPE devices in any of a variety of communications protocols onto a powerline network. For example, a CPE 205a-d might communicate with an NTU 220a-d using a IEEE 802.11 wireless protocol, and the NTU 220a-d can convert the wireless signal to a signal suitable for transmission on a powerline medium. Systems for transmitting and receiving powerline network signals are further described above.

In various implementations, repeaters 225a-d can be located throughout the powerline network to provide the ability for a data signal to travel on the powerline carrier medium over long distances. As discussed above, the headend 215 can provide a gateway for the data signal to be transferred to a backhaul network 210. For example, the headend 215 can extract the data signal from the powerline network and convert the signal for transmission on a packet switched network such as the Internet. In various implementations, one or more of the repeaters 225a-d can be equipped to transfer the signal from the powerline network to the backhaul network 210.

In some implementations, the headend 215 can also include an authorization server. In one implementation, the authorization server is included on the backhaul network 210. The authorization server can be operable to authorize CPE devices 205a-d for transmission of data over the powerline network. When a CPE device 205a-d is not authorized, in various implementations, the CPE device 205a-d can be provided access to a registration server 230. The registration server 230, in various implementations, can enable the user of a CPE device 205a-d to register the CPE device 205a-d with the network to obtain access to the powerline network.

In various implementations, the registration server 230 can provide a limited registration to a CPE device 205a-d to try the powerline network. For example, the registration can be limited by a period of time, bandwidth, destination address, or any other limitation that might allow the user to have limited access to the network. In additional implementations, the registration server 230 can require payment prior to using the network. For example, the registration server can provide web pages operable to collect payment information from the user. In various implementations, the registration server can allow the user to pay for any of a variety of different access plans. For example, an access plan might allow a user to purchase access for a specified period of time, at a specified bandwidth, or combinations thereof. In some implementations, the registration server and authorization server can be co-located as shown in FIG. 63. In some implementations, the registration server can be part of the backhaul network 201. In still further implementations, the registration server is not co-located with the authorization server.

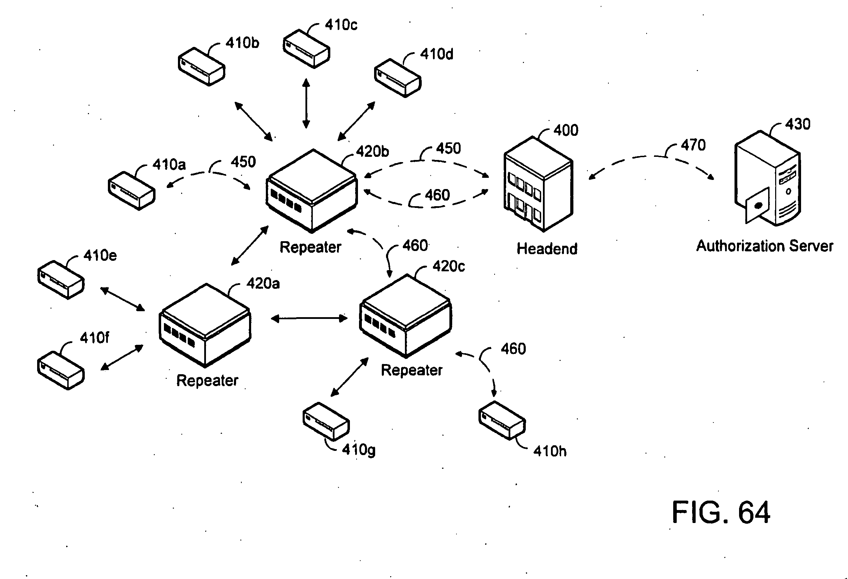

FIG. 64 is a block diagram illustrating a process for providing end-to-end management keys to stations in a network. The powerline network, in various implementations, can include a headend 400, number network termination units (NTUs) 410a-h and repeaters 420a-c. The NTUs 410a-h can communicate with a headend 400 through the repeaters 420a-c. The repeaters 420a-c can help to restore losses in the signals over spans in the network prior to the signal reaching a headend 400. The headend 400 can provide a gateway to a backhaul network such as the internet. The powerline network, in various implementations, can also include an authorization server 430. The authorization server 430 can include information about the stations which are allowed access to the powerline network. In various implementations, the authorization server 430 can be collocated with the headend 400 or it can separate from the headend and be a part of the backhaul network (e.g., the internet).

In various implementations, the stations (e.g., repeaters 420a-c and NTUs 410a-h) can use end-to-end management keys (EMKs) to facilitate private communications between stations (e.g., NTU 410a-h, repeaters 420a-c, headend 400, etc.) on the network. The stations that are to communicate with each other can use an EMK to encrypt the communications. The EMK is unknown to other devices on the network, so the communications are substantially secure. The EMK can be distributed to the communicating stations by the authorization server 430. To maintain security, the authorization server 430 can encrypt the EMK communication to the stations.

In some implementations, the stations can send an EMK request to the authorization server 430. In various implementations, the EMK request can include a pseudo-random number generated by the station. The authorization server 430 can include a nonce in addition to the EMK in the response to the EMK request. In some implementations, the response can be encrypted using a device access key (DAK) or a network membership key (NMK) associated with the respective requesting device. The DAK or NMK can be retrieved, for example, from a key store located at the authorization server 430.

In such implementations, the stations can decrypt the response to the EMK request using a DAK or NMK associated with the respective device. Moreover, the stations can authenticate the response and the EMK based upon the nonce included in the response. If the nonce included in the response matches the pseudo-random number included in the request communicated from the station, the EMK is determined to be authentic. In some implementations, the pseudo-random number can be incremented by a function known to both the headend 400 and the station. If the incremented pseudo-random number matches the nonce included in the response, the EMK is determined to be authentic.

In the example of FIG. 64, a first station 410a and a second station 410h desire to communicate with each other. The first station 410a and the second station 410h can transmit EMK requests to the headend 400 as shown by signals 450 and 460, respectively. The EMK requests can include a pseudo random number generated by the respective stations 410a, 410h. In some implementations, the EMK requests can be encrypted using an NMK or a DAK associated with the device.

Upon receiving the EMK requests, the headend 400 can retrieve key information associated with the requesting devices 410a, 410h, as shown by signal 470. In those implementations where the EMK requests are encrypted, the headend 400 can extract an identifier (e.g., a MAC address) from the requests and can use the extracted identifiers to retrieve an NMK or an EMK to decrypt the EMK requests. The headend 400 can extract the pseudo-random number included in the EMK request and can also generate a new EMK based upon receipt of the requests. The headend 400 can use the pseudo-random numbers included in the requests and the EMK to generate response communications to the first station 410a and second station 410h. The response communications can include a nonce based upon the received pseudo random number and the EMK. In various implementations, the nonce can be identical to the pseudo-random number. In other implementations, the nonce can be the pseudo-random number adjusted by a function known to the headend and to the station. In various implementations, the function can be particular to the specific station. The response communications for each of the first station 410a and the second station 410h can then be encrypted using the retrieved DAK or NMK associated with the respective stations, as shown by the signals 450, 460. The encrypted response communications can be sent to the first station 410a and the second station 410h.

In various implementations, upon receiving the EMK requests, the headend 400 can forward the request to the authorization server 430 as shows by signal 470. The authorization server 430 can retrieve key information associated with the requesting devices 410a, 410h. In those implementations where the EMK requests are encrypted, the authorization server 430 can extract an identifier (e.g., a MAC address) from the requests and can use the extracted identifiers to retrieve an NMK or an EMK to decrypt the EMK requests. The authorization server 430 can extract the pseudo-random number included in the EMK request and can also generate a new EMK based upon receipt of the requests. The authorization server 430 can use the pseudo-random numbers included in the requests and the EMK to generate response communications to the first station 410a and second station 410h. The response communications can include a nonce based upon the received pseudo random number and the EMK. The response communications for each of the first station 410a and the second station 410h can then be encrypted using the retrieved DAK or NMK associated with the respective stations and send to the headend 400, as shown by the signal 470. The headend 400 can then forward the response to the first station 410a and the second station 410h, as shown by signals 450, 460.

While other stations may receive the response communication, the stations cannot decrypt the response communication without knowledge of the DAK or NMK associated with the respective station 410a, 410h to which the communication is addressed. When the stations 410a, 410h decrypt the response communication, the stations 410a, 410h can compare the nonce to the pseudo-random number to authenticate the received EMK. In other implementations, the stations 410a, 410h can compare the nonce to an adjusted pseudo-random number to authenticate the received EMK. For example, when the pseudo-random number is adjusted by the headend 400 using a function to derive the nonce, the pseudo-random number can be adjusted locally by the station(s) 410a, 410h using the same function for authentication purposes.

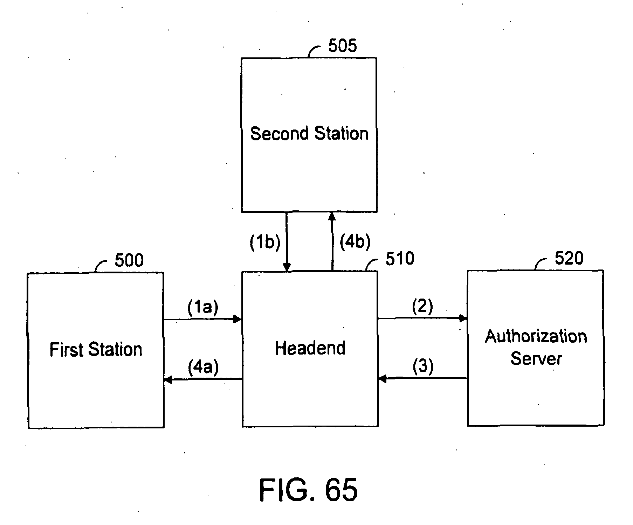

FIG. 65 is a block diagram illustrating the communication flow associated with a first station and a second station requesting an end-to-end management key (EMK). A first station 500 and a second station 505 can determine to obtain an EMK to communicate with each other. In various implementations, the first station 500 and the second station 505 can communicate with each other unencrypted or using a network encryption key (NEK) prior to determining to request an EMK. As shown by signals 1(a) and 1(b), the first station 500 and second station 505, respectively, can transmit EMK requests to a headend 510. In some implementations, a first EMK request can include a first pseudo-random number generated by the first station 500, and a second EMK request can include a second pseudo-random number generated by the second station 505.

In various implementations, the first and second EMK requests can be encrypted to prevent other stations from copying the first or second pseudo-random numbers. The first and second EMK requests can be encrypted, for example, using a network membership key (NMK) or a device access key (DAK) respectively associated with the first and second stations 500, 505.

Upon receiving the first and second EMK requests, the headend 510 can forward the requests to the authorization server 515, as shown by signal 2. In some implementations, the authorization server 515 can extract an identifier (e.g., MAC address) from the first and second EMK requests, and use the identifier to retrieve the keys associated with the requesting stations 500, 505. In those implementations where the first and second EMK requests are encrypted, the authorization server 515 can also use the keys associated with the stations to decrypt the first and second EMK requests.

The authorization server 515 can also generate an EMK based upon receipt of the first and second EMK requests. Authorization server 515 can then generate a first response and a second response to the first and second EMK requests, respectively. The first response and second response can include the generated EMK along with a first nonce and second nonce, respectively. The first nonce can be based upon the first pseudo-random number received in the first EMK request, and the second nonce can be based upon the second pseudo-random number received in the second EMK request.

The first response can be encrypted using an NMK or DAK associated with the first station 500. The second response can be encrypted using an NMK or DAK associated with the second station 505. The authorization server 515 can provide the first response and second response to the headend 510, as shown by signal 3. The headend 510 can transmit the first response to the first station as shown by signal 4(a), and can transmit the second response to the second station as shown by signal 4(b).

Upon receipt of the first response, the first station 500 can decrypt the first response using its NMK or DAK. The first station 500 can then identify the first nonce and the EMK from the communication. The first station 500 can authenticate the EMK based upon the first nonce. Similarly, the second station 505 can decrypt the second response using its NMK or DAK. The second station 505 can then identify the second nonce and the EMK from the communication. The second station 505 can authenticate the EMK based upon the second nonce. In various implementations, the first and second nonces can be authenticated based upon matching the first and second pseudo-random numbers, respectively.

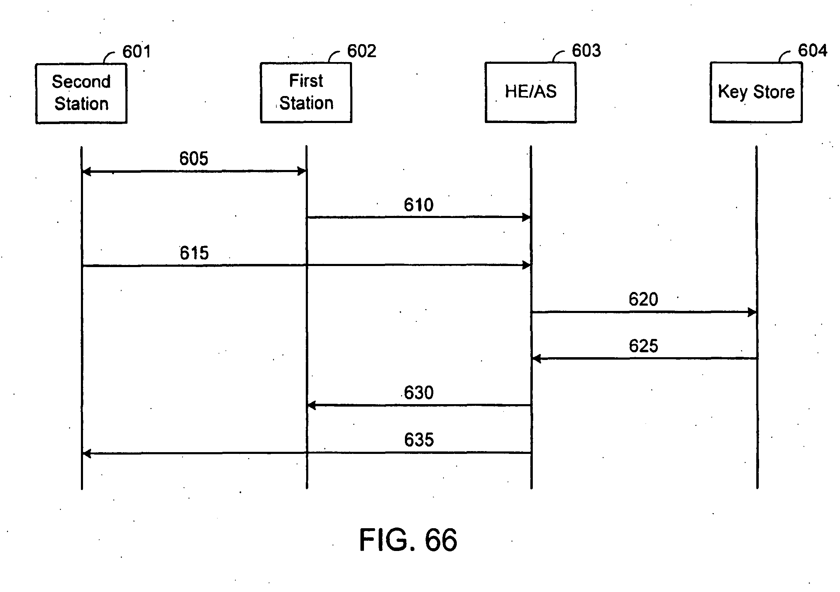

FIG. 66 is a flow diagram depicting an example flow for distribution of end-to-end management keys (EMKs). A first station 602 and a second station 601 can communicate with each other to determine whether to request an EMK, as shown by signal 605. The first station 602 can transmit a first EMK request to the headend or authorization server 603, as shown by signal 610. The first EMK request can include a first pseudo-random number generated by the first station 602 and can be encrypted using a first key associated with the first station 602. The second station 601 can transmit a second EMK request to the headend or authorization server 603, as shown by signal 615. The second EMK request can include a second pseudo-random number generated by the second station 601 and can be encrypted using a second key associated with the second station 601, as shown by signal 615.

In response to the receipt of the first and second EMK requests, the headend or authorization server 603 can submit a query to a key store 604 as shown by signal 620. The query can include identifiers (e.g., MAC addresses) associated with the first and second queries. The key store 604 can provide the first key and the second key to the headend or authorization server 603. In various implementations, the first key can be used to decrypt the first EMK request and the second key can be used to decrypt the second EMK request. The headend or authorization server 603 can also generate an EMK. Upon generation of the EMK, the headend or authorization server 603 can generate a first response including a first nonce and the EMK, and can generate a second response including a second nonce and the EMK. The first and second nonces can be based upon the received first and second pseudo-random numbers, respectively. The headend or authorization server 603 can also encrypt the first and second responses using the retrieved first and second keys, respectively. The first and second responses can be transmitted to the first and second stations 602, 601, as shown by signals 630 and 635, respectively.

Upon receipt of the first response, the first station can decrypt the first response using the first key. The EMK can then be authenticated based upon the first nonce included in the first response. In various implementations, if the first nonce matches the first pseudo-random number, the received EMK is determined to be authentic. Similarly, the second station 601 can decrypt the second response using the second key. The EMK can then be authenticated based upon the second nonce included in the second response. In various implementations, if the second nonce matches the second pseudo-random number, the received EMK is determined to be authentic. The first station 602 and second station 601 can then begin communicating.

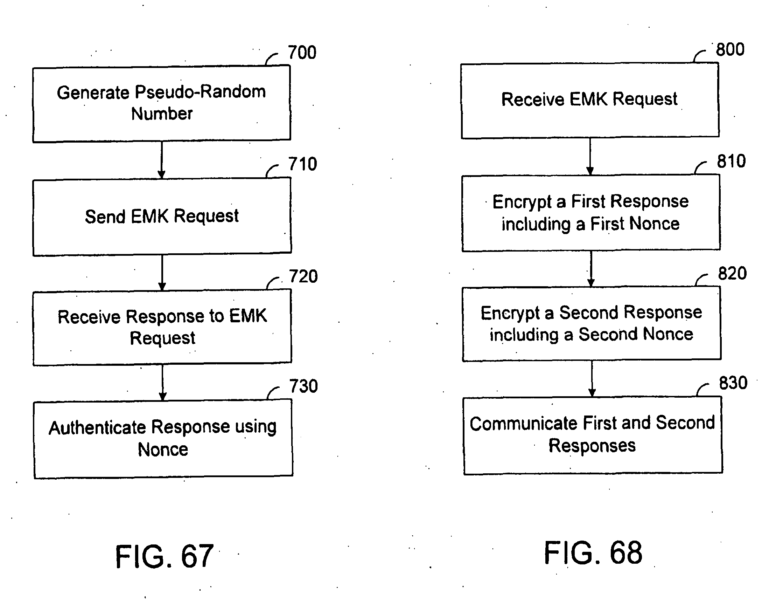

FIG. 67 is a flowchart illustrating an example method to request an end-to-end management key. At stage 700, a pseudo-random number is generated. The pseudo-random number can be generated, for example, by a station (e.g., NTU 410a-h or repeater 410a-c of FIG. 64). The pseudo-random number, in various examples, can be generated according to any of a number of algorithms and can be of any length.

At stage 710, an EMK request is sent. The EMK request can be sent, for example, by a station (e.g., NTU 410a-h or repeater 410a-c of FIG. 64). In various examples, the EMK request can include a standard request for an EMK and the generated pseudo-random number. In some implementations, the EMK request can be encrypted. The EMK request can be encrypted, for example, using a key associated with the station (e.g., a network membership key (NMK), a device access key (DAK), etc.).

At stage 720, a response to the EMK request is received. The response to the EMK request can be received, for example, by a station (e.g., NTU 410a-h or repeater 410a-c of FIG. 64). In various implementations, the response can include an EMK and a nonce. The EMK can be generated by a headend device and transmitted to each device in the network with which the station is attempting to communicate. In various implementations, the response to the EMK can be encrypted. For example, the response can be encrypted using the station's NMK or DAK. In such implementations, the response can be decrypted and parsed by the station to identify the EMK and the nonce.

At stage 730, the response can be authenticated based upon the nonce. The response can be authenticated, for example, by a station (e.g., NTU 410a-h or repeater 410a-c of FIG. 64). In various implementations, the response can be authenticated based upon comparing the nonce to the pseudo-random number generated in step 700. If the nonce matches the pseudo-random number, the response is authentic. In other implementations, the nonce can be compared to an adjusted pseudo-random number. The pseudo-random number can be adjusted, for example, by a function known to both the headend/authorization server and to the station. Thus, if a headend/authorization server device did not properly adjust the transmitted pseudo-random number to produce the nonce, the response can be deemed not to be authentic.

FIG. 68 is a flowchart illustrating an example method to distribute an end-to-end management key (EMK). At stage 800, an EMK request is received. The EMK request can be received, for example, by a headend device (e.g., headend 400 of FIG. 64). In various implementations, the EMK request can be encrypted based upon the station transmitting the request. In such implementations, the headend device can retrieve a key associated with the device and decrypt the EMK request.

At stage 810, a first response is encrypted. The first response can be encrypted, for example, by a headend device (e.g., headend 400 of FIG. 64). In various implementations, the first response can include a first nonce based upon a first pseudo-random number received with the EMK request. The first response, for example, can be encrypted using a key associated with a first station.

At stage 820, a second response is encrypted. The second response can be encrypted, for example, by a headend device (e.g., headend 400 of FIG. 64). In various implementations, the second response can include a second nonce based upon a second pseudo-random number received with the EMK request. The second response, for example, can be encrypted using a key associated with a second station requesting the EMK.

At stage 830, the first and second responses are communicated. The first and second responses can be communicated, for example, by a headend device(e.g., headend 400 of FIG. 64). In various implementations, the communication can be made on a broadband over powerline network.

In various implementations, stations can establish communication links between themselves using an end-to-end management key (EMK). In such implementations, a first station can communicate a connection request to a second station. The connection request can include a first pseudo-random generated by the first station. The second station, upon receiving the request can generate a second pseudo-random number, and an EMK request comprising the first and second pseudo-random numbers. The second station can communicate the EMK request to an authorization server. In some implementations, the EMK request can be encrypted using one or more of a first or second DAK associated with the first or second stations, respectively. In other implementations, the EMK request can be encrypted using one or more of a first or second NMK associated with the first or second stations, respectively.

Upon receiving the EMK request from the second station, the authorization server can generate a first response to the EMK request. The first response can include an EMK and the first pseudo-random number, and can be encrypted using a first DAK associated with the first station. The first DAK or NMK can be retrieved based upon a first unique identifier associated with the EMK request. The authorization server can also generate a second response to the EMK request. The second response can include an EMK and the second pseudo-random number, and can be encrypted using a second DAK associated with the second station. The second DAK or NMK can be retrieved based upon a second unique identifier associated with the EMK request.

The first station can receive the first response based upon its ability to decrypt the first response using its DAK or NMK. The first station can identify the pseudo-random number included in the response to authenticate the first response, and can use the EMK to begin communications with the second station.

The second station can receive the second response based upon its ability to decrypt the second response using its DAK or NMK. The second station can identify the pseudo-random number included in the response to authenticate the second response, and can use the EMK to begin communications with the first station. Thus, communications between the first and second station can be encrypted using a common EMK communicated securely to each of the stations.

The systems and methods disclosed herein may use data signals conveyed using networks (e.g., local area network, wide area network, internet, etc.), fiber optic medium, carrier waves, wireless networks (e.g., wireless local area networks, wireless metropolitan area networks, cellular networks, etc.), etc. for communication with one or more data processing devices (e.g., mobile devices). The data signals can carry any or all of the data disclosed herein that is provided to or from a device.

The methods and systems described herein may be implemented on many different types of processing devices by program code comprising program instructions that are executable by one or more processors. The software program instructions may include source code, object code, machine code, or any other stored data that is operable to cause a processing system to perform methods described herein.

The systems and methods may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that software instructions or a module can be implemented for example as a subroutine unit of code, or as a software function unit of code, or as an object (as in an object-oriented paradigm), or as an applet, or in a computer script language, or as another type of computer code or firmware. The software components and/or functionality may be located on a single device or distributed across multiple devices depending upon the situation at hand.

Many other implementations of the invention other than those described above are within the invention, which is defined by the following claims.

## Claims

**1.** A method for communicating among stations in a network (100), the method comprising:

from each of multiple stations in the network (100), transmitting information indicating which other stations from which that station is able to reliably receive transmissions; and
at least one station in the network (100) receiving the information determining a schedule for communicating among the stations based on the information from the stations and transmitting the schedule over the network (100);
wherein the schedule includes a plurality of time slots (302) during which respective sets of stations are assigned to communicate using a contention-based protocol.

**2.** The method of claim 1, wherein:

each station in a given set is able to reliably receive transmissions from all the other stations in the given set and forms a contention group that does not have any hidden stations and in which all the stations can hear each other thereby eliminating a need for the contention-based protocol to use Request to Send / Clear To Send, RTS/CTS, transmissions among the stations in a given set.

**3.** The method of claim 1, wherein at least some of the sets include one or more stations that are not able to reliably receive transmissions from at least some other stations in the same set, and the contention-based protocol used by at least some of the sets that include one or more stations that are not able to reliably receive transmissions from at least some other stations in the same set use Request to Send / Clear To Send, RTS/CTS, transmissions among the stations in a given set.

**4.** The method of claim 1, wherein at least some of the stations are not able to reliably receive transmissions from at least some of the other stations in the network (100), and each station in a first set of stations assigned to communicate in a given time slot is not able to reliably receive transmissions from any of the stations in a second set of stations assigned to communicate in the given time slot.

**5.** The method of claim 1, wherein the information indicating which other stations from which a station is able to reliably receive transmissions is transmitted to a first station.

**6.** The method of claim 5, wherein the first station determines the schedule.

**7.** The method of claim 5, wherein the first station assigns stations to sets based on the information.

**8.** The method of claim 1, further comprising providing the stations in different sets one or more parameters associated with the contention-based protocol independently.

**9.** The method of claim 8, wherein the one or more parameters include at least one of a contention window size, a backoff parameter, and a defer counter.

**10.** The method of claim 8, wherein the one or more parameters provided to a given set include at least one parameter that is selected based on the number of stations in the given set.

**11.** The method of claim 1, wherein determining the schedule includes:

assigning a first station that can reliably receive a beacon transmission sent by a head end to a first beacon level;
assigning stations not assigned to a preceding beacon level that can reliably receive transmissions from a preceding level to a higher beacon level, the higher beacon level being one higher than the smallest beacon level of all the stations it can reliably hear; and
assigning stations to sets based on the assigned beacon levels.

**12.** The method of claim 11, wherein each station in a given set is able to reliably receive transmissions from all the other stations in the given set, and each station in a first set of stations assigned to communicate in a given time slot is not able to reliably receive transmissions from any of the stations in a second set of stations assigned to communicate in the given time slot.

**13.** The method of claim 12, wherein each given set forms a contention group that does not have any hidden stations and in which all the stations can hear each other thereby eliminating a need for the contention-based protocol to use Request to Send / Clear To Send, RTS/CTS, transmissions among the stations in each given set.

**14.** The method of claim 12, wherein at least some of the sets include one or more stations that are not able to reliably receive transmissions from at least some other stations in the same set, and the contention-based protocol used by at least some of the sets that include one or more stations that are not able to reliably receive transmissions from at least some other stations in the same set use Request to Send / Clear To Send, RTS/CTS, transmissions among the stations in a given set.

**15.** A system for communicating among stations in a network (100) formed according to the method of any preceding claim, the system comprising:

a first set of multiple stations assigned to communicate during a first time slot using a contention-based protocol;
a second set of multiple stations assigned to communicate during a second time slot using a contention-based protocol; and
a third set of multiple stations assigned to communicate during the first time slot using a contention-based protocol;
wherein at least one station in the first set is able to reliably communicate with at least one station in the second set, and none of the stations in the first set is able to reliably communicate with any of the stations in the third set;
wherein each of multiple stations in the network (100) transmits information indicating which other stations from which that
station is able to reliably receive transmissions; and wherein at least one station in the network (100) receives the information and determines a schedule for communicating among the stations based on the information from the stations and transmitting the schedule over the network (100);
wherein the schedule includes a plurality of time slots (302) during which respective sets of stations are assigned to communicate using a contention-based protocol.

**Patentansprüche**

1. Ein Verfahren zur Kommunikation zwischen Stationen in einem Netzwerk (100), wobei das Verfahren aufweist:

   von jeder von mehreren Stationen in dem Netzwerk (100), Übertragen von Informationen, welche anzeigen, von welchen anderen Stationen diese Station fähig ist, zuverlässig Übertragungen zu empfangen; und
   wobei zumindest eine Station in dem Netzwerk (100), welche die Informationen empfängt, eine Zeitplanung festlegt zur Kommunikation zwischen den Stationen, basierend auf den Informationen von den Stationen und die Zeitplanung über das Netzwerk (100) überträgt;
   wobei die Zeitplanung eine Mehrzahl von Zeitschlitzen (302) enthält, während denen entsprechende Mengen von Stationen zugewiesen werden zum Kommunizieren unter Verwendung eines konkurrenzbasierten Protokolls.

2. Das Verfahren nach Anspruch 1, wobei:

   jede Station in einer gegebenen Menge fähig ist, Übertragungen von allen anderen Stationen in der gegebenen Menge zuverlässig zu empfangen und eine Konkurrenzgruppe bildet, welche keine versteckten Stationen hat und in welcher alle Stationen sich gegenseitig hören können, wodurch eine Notwendigkeit eliminiert wird, für das konkurrenzbasierte Protokoll "Request to Send" / "Clear To Send", RTS/CTS, -Übertragungen zwischen den Stationen in einer gegebenen Menge zu verwenden.

3. Das Verfahren nach Anspruch 1, wobei zumindest einige der Mengen eine oder mehrere Stationen enthalten, die nicht fähig sind, von zumindest einigen anderen Stationen in derselben Menge Übertragungen zuverlässig zu empfangen, und wobei das konkurrenzbasierte Protokoll, welches zumindest von einigen der Mengen verwendet wird, die eine oder mehrere Stationen enthalten, die nicht fähig sind, von zumindest einigen anderen Stationen in derselben Menge Übertragungen zuverlässig zu empfangen, "Request to Send" / "Clear To Send", RTS/CTS, - Übertragungen zwischen den Stationen in einer gegebenen Menge verwenden.

4. Das Verfahren nach Anspruch 1, wobei zumindest einige der Stationen nicht fähig sind, von zumindest einigen der anderen Stationen in dem Netzwerk (100) Übertragungen zuverlässig zu empfangen, und wobei jede Station in einer ersten Menge von Stationen, die vorgesehen sind, in einem gegebenen Zeitschlitz zu kommunizieren, nicht fähig ist, Übertragungen von irgendeiner der Stationen in einer zweiten Menge von Stationen zuverlässig zu empfangen, welche vorgesehen sind, in dem gegebenen Zeitschlitz zu kommunizieren.

5. Das Verfahren nach Anspruch 1, wobei die Informationen, welche anzeigen, von welchen anderen Stationen eine Station fähig ist, zuverlässig Übertragungen zu empfangen, zu einer ersten Station übertragen wird.

6. Das Verfahren nach Anspruch 5, wobei die erste Station die Zeitplanung festlegt.

7. Das Verfahren nach Anspruch 5, wobei die erste Station basierend auf den Informationen Stationen zu Mengen zuweist.

8. Das Verfahren nach Anspruch 1, ferner aufweisend: Versehen der Stationen in unterschiedlichen Mengen mit einem oder mehreren Parametern, welche mit dem konkurrenzbasierten Protokoll unabhängig assoziiert sind.

9. Das Verfahren nach Anspruch 8, wobei der eine oder die mehreren Parameter zumindest eines von einer Konkurrenzfenstergröße, einem "Backoff"-Parameter und einem Verschiebungszähler enthalten.

10. Das Verfahren nach Anspruch 8, wobei der eine oder die mehreren Parameter, die einer gegebenen Menge bereitgestellt werden, zumindest einen Parameter enthalten, der ausgewählt ist basierend auf der Anzahl von Stationen in der gegebenen Menge.

11. Das Verfahren nach Anspruch 1, wobei das Festlegen der Zeitplanung enthält:

Zuweisen einer ersten Station, welche eine von einem Kopfende gesendete "Beacon"-Übertragung zuverlässig empfangen kann, zu einem ersten "Beacon"-Pegel;
Zuweisen von Stationen, die nicht zu einem vorangehenden "Beacon"-Pegel zugewiesen sind, welche Übertragungen von einem vorangehenden "Beacon"-Pegel zuverlässig empfangen können, zu einem höheren "Beacon"-Pegel, wobei der höhere "Beacon"-Pegel eines höher ist als der kleinste "Beacon"-Pegel aller Stationen, die ihn zuverlässig hören können; und
Zuweisen von Stationen zu Mengen basierend auf den zugewiesenen "Beacon"-Pegeln.

**12.** Das Verfahren nach Anspruch 11, wobei jede Station in einer gegebenen Menge fähig ist, Übertragungen von allen anderen Stationen in der gegebenen Menge zuverlässig zu empfangen, und wobei jede Station in einer ersten Menge von Stationen, die zugewiesen ist, um in einem gegebenen Zeitschlitz zu kommunizieren, nicht fähig ist Übertragungen von irgendeiner der Stationen in einer zweiten Mengen von Stationen zuverlässig zu empfangen, welche zugewiesen sind, in dem gegebenen Zeitschlitz zu kommunizieren.

**13.** Das Verfahren nach Anspruch 12, wobei jede gegebene Menge eine Konkurrenzgruppe bildet, die keine versteckten Stationen hat und in welcher alle Stationen sich gegenseitig hören können, wodurch eine Notwendigkeit eliminiert wird, für das konkurrenzbasierte Protokoll "Request to Send" / "Clear To Send", RTS/CTS, - Übertragungen zwischen den Stationen in einer gegebenen Menge zu verwenden.

**14.** Das Verfahren nach Anspruch 12, wobei zumindest einige der Mengen eine oder mehrere Stationen enthalten, die nicht fähig sind, von zumindest einigen anderen Stationen in derselben Menge Übertragungen zuverlässig zu empfangen, und wobei das konkurrenzbasierte Protokoll, welches zumindest von einigen der Mengen verwendet wird, welche eine oder mehrere Stationen enthalten, die nicht fähig sind, von zumindest einigen anderen Stationen in derselben Menge Übertragungen zuverlässig zu empfangen, "Request to Send" / "Clear To Send", RTS/CTS, - Übertragungen zwischen den Stationen in einer gegebenen Menge verwenden.

**15.** Ein System zur Kommunikation zwischen Stationen in einem Netzwerk (100), das nach dem Verfahren nach einem der vorangehenden Ansprüche gebildet wird, wobei das System aufweist:

eine erste Menge von mehreren Stationen, zugewiesen zum Kommunizieren während eines ersten Zeitschlitzes unter Verwendung eines konkurrenzbasierten Protokolls;
eine zweite Menge von mehreren Stationen, zugewiesen zum Kommunizieren während eines zweiten Zeitschlitzes unter Verwendung eines konkurrenzbasierten Protokolls; und
eine dritte Menge von mehreren Stationen, zugewiesen zum Kommunizieren während des ersten Zeitschlitzes unter Verwendung eines konkurrenzbasierten Protokolls;
wobei zumindest eine Station in der ersten Menge fähig ist, mit zumindest einer Station in der zweiten Menge zuverlässig zu kommunizieren, und wobei keine der Stationen in der ersten Menge fähig ist, mit einer der Stationen in der dritten Menge zuverlässig zu kommunizieren;
wobei jede der mehreren Stationen in dem Netzwerk (100) Informationen überträgt, welche anzeigen, von welchen anderen Stationen diese Station fähig ist, zuverlässig Übertragungen zu empfangen; und
wobei zumindest eine Station in dem Netzwerk (100) die Informationen empfängt und eine Zeitplanung festlegt zur Kommunikation zwischen den Stationen, basierend auf den Informationen von den Stationen und die Zeitplanung über das Netzwerk (100) überträgt;
wobei die Zeitplanung eine Mehrzahl von Zeitschlitzen (302) enthält, während denen entsprechende Mengen von Stationen zugewiesen werden zum Kommunizieren unter Verwendung eines konkurrenzbasierten Protokolls.

**Revendications**

**1.** Procédé pour communiquer entre des stations dans un réseau (100), le procédé comportant les étapes consistant à :

à partir de chacune des multiples stations dans le réseau (100), transmettre des informations indiquant quelles sont les autres stations à partir desquelles cette station est en mesure de recevoir de manière fiable des transmissions ; et
au moins une station dans le réseau (100) recevant les informations déterminant un programme pour communiquer entre les stations sur la base des informations en provenance des stations et transmettant le programme sur le réseau (100) ; dans lequel le programme inclut une pluralité de créneaux temporels (302) pendant lesquels des ensembles respectifs de stations sont attribués pour communiquer en utilisant un protocole basé sur une contention.

2. Procédé selon la revendication 1, dans lequel :

chaque station dans un ensemble donné est en mesure de recevoir de manière fiable des transmissions en provenance de toutes les autres stations dans l'ensemble donné et forme un groupe de contentions qui n'a pas de stations cachées quelconques et dans lequel toutes les stations peuvent s'entendre les unes les autres de manière à éliminer le besoin du protocole basé sur une contention pour utiliser des transmissions RTS (demande pour émettre) / CTS (prêt à émettre) entre les stations dans un ensemble donné.

3. Procédé selon la revendication 1, dans lequel au moins certains des ensembles incluent une ou plusieurs stations qui ne sont pas en mesure de recevoir de manière fiable des transmissions en provenance d'au moins certaines autres stations dans le même ensemble, et le protocole basé sur une contention utilisé par au moins certains des ensembles qui incluent une ou plusieurs stations qui ne sont pas en mesure de recevoir de manière fiable des transmissions en provenance d'au moins certaines autres stations dans le même ensemble utilise des transmissions RTS (demande pour émettre) / CTS (prêt à émettre) entre les stations dans un ensemble donné.

4. Procédé selon la revendication 1, dans lequel au moins certaines des stations ne sont pas en mesure de recevoir de manière fiable des transmissions en provenance d'au moins certaines des autres stations dans le réseau (100), et chaque station dans un premier ensemble de stations attribué pour communiquer dans un créneau temporel donné n'est pas en mesure de recevoir de manière fiable des transmissions en provenance de l'une quelconque des stations dans un second ensemble de stations attribué pour communiquer dans le créneau temporel donné.

5. Procédé selon la revendication 1, dans lequel les informations indiquant quelles sont les autres stations à partir desquelles une station est en mesure de recevoir de manière fiable des transmissions sont transmises à une première station.

6. Procédé selon la revendication 5, dans lequel la première station détermine le programme.

7. Procédé selon la revendication 5, dans lequel la première station attribue des stations à des ensembles sur la base des informations.

8. Procédé selon la revendication 1, comportant en outre de fournir aux stations dans différents ensembles un ou plusieurs paramètres associés au protocole basé sur une contention de manière indépendante.

9. Procédé selon la revendication 8, dans lequel le ou les paramètres incluent au moins l'un parmi une taille de fenêtre de contention, un paramètre de réduction de puissance, et un compteur de retard.

10. Procédé selon la revendication 8, dans lequel le ou les paramètres fournis à un ensemble donné incluent au moins un paramètre qui est sélectionné sur la base du nombre de stations dans l'ensemble donné.

11. Procédé selon la revendication 1, dans lequel la détermination du programme inclut les étapes consistant à :

attribuer une première station qui peut recevoir de manière fiable une transmission par balise envoyée par une extrémité d'en-tête à un premier niveau de balise ;
attribuer des stations n'étant pas attribuées à un niveau de balise précédent qui peuvent recevoir de manière fiable des transmissions depuis un niveau précédent jusqu'à un niveau de balise supérieur, le niveau de balise supérieur étant un niveau supérieur au niveau de balise le plus petit de toutes les stations qu'elle peut entendre de manière fiable ; et
attribuer des stations à des ensembles sur la base des niveaux de balise attribués.

12. Procédé selon la revendication 11, dans lequel chaque station dans un ensemble donné est en mesure de recevoir de manière fiable des transmissions en provenance de toutes les autres stations dans l'ensemble donné, et chaque station dans un premier ensemble de stations attribué pour communiquer dans un créneau temporel donné n'est pas en mesure de recevoir de manière fiable des transmissions en provenance de l'une quelconque des stations dans un second ensemble de stations attribué pour communiquer dans le créneau temporel donné.

**13.** Procédé selon la revendication 12, dans lequel chaque ensemble donné forme un groupe de contentions qui n'a pas de stations cachées quelconques et dans lequel toutes les stations peuvent s'entendre les unes les autres de manière à éliminer le besoin du protocole basé sur une contention pour utiliser des transmissions RTS (demande pour émettre) / CTS (prêt à émettre) entre les stations dans chaque ensemble donné.

**14.** Procédé selon la revendication 12, dans lequel au moins certains des ensembles incluent une ou plusieurs stations qui ne sont pas en mesure de recevoir de manière fiable des transmissions en provenance d'au moins certaines autres stations dans le même ensemble, et le protocole basé sur une contention utilisé par au moins certains des ensembles qui incluent une plusieurs stations qui ne sont pas en mesure de recevoir de manière fiable des transmissions en provenance d'au moins certaines autres stations dans le même ensemble utilise des transmissions RTS (demande pour émettre) /CTS (prêt à émettre) entre les stations dans un ensemble donné.

**15.** Système pour communiquer entre des stations dans un réseau (100) formé conformément au procédé selon l'une quelconque des revendications précédentes, le système comportant :

un premier ensemble de multiples stations attribué pour communiquer pendant un premier créneau temporel en utilisant un protocole basé sur une contention ;
un deuxième ensemble de multiples stations attribué pour communiquer pendant un deuxième créneau temporel en utilisant un protocole basé sur une contention ; et
un troisième ensemble de multiples stations attribué pour communiquer pendant le premier créneau temporel en utilisant un protocole basé sur une contention ;
dans lequel au moins une station dans le premier ensemble est en mesure de communiquer de manière fiable avec au moins une station dans le deuxième ensemble, et aucune des stations dans le premier ensemble n'est en mesure de communiquer de manière fiable avec l'une quelconque des stations dans le troisième ensemble ;
dans lequel chacune parmi de multiples stations dans le réseau (100) transmet des informations indiquant quelles sont les autres stations à partir desquelles cette station est en mesure de recevoir de manière fiable des transmissions ; et
dans lequel au moins une station dans le réseau (100) reçoit les informations et détermine un programme pour communiquer entre les stations sur la base des informations en provenance des stations et transmettre le programme sur le réseau (100) ; dans lequel le programme inclut une pluralité de créneaux temporels (302) pendant lesquels des ensembles respectifs de stations sont attribués pour communiquer en utilisant un protocole basé sur une contention.

**FIG. 1**

200

TRANSMITTER                                          202

220

222 → 224 → 226 → 228

204

RECEIVER                          206

230

232

234

236 → 238

FIG. 2

EP 2 165 487 B1

TDMA Schedule Period

Δ

AC Line Cycle

Δ

300

320

| 302 | 304 | 306 |
|---|---|---|
| | | |
| Contention Period | Stay-out Period | Contention Free Period # 1 |

FIG. 3A

TDMA Schedule Period

AC Line Cycle

Δ

Δ

EP 2 165 487 B1

300

320

| 302 | 304 | 316A | 316B |
|---|---|---|---|
| Contention Period | Stay-out Period | Contention Period for Group A | Contention Period for Group B |

FIG. 3B

FIG. 4A

FIG. 4B

FIG. 4C

HE

Group A

R1

R2

Group B

R3

R4

R5

Group A

R7

Group A

R6

R8

EP 2 165 487 B1

FIG. 5

FIG. 6

FIG. 7

EP 2 165 487 B1

FIG. 8

FIG. 9

FIG. 10

205b

CPE

CPE

205c

CPE

220b

NTU

205a

220a

NTU

CPE

225a

Repeater

225b

Repeater

220c

NTU

225d

Repeater

225c

Repeater

220d

NTU

205d

CPE

230

215

210

Backhaul Network

Registration Server/
Authorization Server

Headend

68

FIG. 11

EP 2 165 487 B1

FIG. 12

648

┌─────────────────────────────────────┐
│   Establish End-to-End Connections   │
└─────────────────────────────────────┘
                    │
                    ▼          650
┌─────────────────────────────────────┐
│      Receive Data Units at a Station │
└─────────────────────────────────────┘
                    │
                    ▼          652
┌─────────────────────────────────────┐
│  Determine the Traffic Class and a Next │
│   Hop Destination for the Data Units │
└─────────────────────────────────────┘
                    │
                    ▼          654
┌─────────────────────────────────────┐
│           Combine Data Units         │
└─────────────────────────────────────┘
                    │
                    ▼          656
┌─────────────────────────────────────┐
│  Provide a Link to Transmit the Traffic │
│           Class Data Unit            │
└─────────────────────────────────────┘

FIG. 13

```
                                              ┌ 700
┌──────────────────────────────────────────┐
│                                            │
│            Receive Data Units              │
│                                            │
└──────────────────────────────────────────┘
                      │
                      ▼          ┌ 710
┌──────────────────────────────────────────┐
│   Divide data units into groups based on a │
│             next hop destination           │
└──────────────────────────────────────────┘
                      │
                      ▼          ┌ 720
┌──────────────────────────────────────────┐
│     Divide groups into classes based on    │
│  traffic classification of the data units in │
│                 the group                  │
└──────────────────────────────────────────┘
                      │
                      ▼          ┌ 730
┌──────────────────────────────────────────┐
│   Provide a communications link for the    │
│                  classes                   │
└──────────────────────────────────────────┘
```

# FIG. 14

200

202

Measure Cost to Reach
Head End

204

Select Low Cost Path

206

Transmit Cost Data

FIG. 15

FIG. 16

FIG. 17

FIG. 18

FIG. 19A

2000

Receive 1

A — 2002

2004 — B   2006 — C   Receive 1 Transmit 1

Receive 1

D — 2008   E — 2010

Receive 1 Transmit 1

Transmit 1

FIG. 19B

FIG. 19C

EP 2 165 487 B1

MSDU 3000 {

| OSA | ODA | VLAN Tag | Eth Type/ Length | Payload |

3002  3004  3006  3008  3010

Sub-Frame 3012 {

| Sub-Frame Header | ATS/Confounder (Optional) | MSDU Payload or Management Message | ICV |

3014  3016  3018  3020

Sub-Frame Queue 3022 {

- - - - | Sub-Frame # i | Sub-Frame # i+1 | - - - - - - - - - - - | Sub-Frame # j | Sub-Frame # j+1 | - - - -

FIG. 20A

FIG. 20B

EP 2 165 487 B1

4000

MSDU
(high level data unit)

MSDU

4004

4002

4000

4006

Sub-Frame

| Sub-Frame Header | MSDU | Sub-Frame Trailer |

4010

MPDU
(low level data unit)

| MPDU Header | Sub-Frame # 1 | Sub-Frame # 2 | ... | Sub-Frame # n |

MPDU Payload —— 4008

FIG. 21

5000

Transmit
1,2,3

A ⟍ 2002

Receive
1, 2
Retransmit
1,2

2004

2006

B

Receive
2,3
Retransmit
2,3

C

F ⟍ 5002

D ⟍ 2008

E ⟍ 2010

Receive
1, 2 from B
Receive
2,3 from C
Discard
the second
copy of 2

# FIG. 22

FIG. 23

205b
CPE
CPE

205c
CPE

220b
NTU

205a
CPE

220a
NTU

220c
NTU

225a
Repeater

225b
Repeater

225d
Repeater

225c
Repeater

220d
NTU

205d
CPE

230
215
210

Registration Server/
Authorization Server

Headend

Backhaul Network

EP 2 165 487 B1

84

FIG. 24

EP 2 165 487 B1

FIG. 25

FIG. 26

EP 2 165 487 B1

700

Receive Network Connection
Request

710

Authorize Limited Service
based on Network
Connection Request

720

Receive Registration
Information

730

Provide Unique Network
Membership Key

FIG. 27

FIG. 28

FIG. 29

FIG. 30

FIG. 31

FIG. 32

EP 2 165 487 B1

Communicate a Network
Membership Key Request to an
Authorization Server 800

Receive an Encrypted Network
Membership Key 810

Decrypt the Encrypted Network
Membership Key 820

**FIG. 33**

Receive an Encrypted NMK
request 900

Receive MAC Address Associated
with Requesting Station 910

Authorize the NMK Request 920

Encrypt the NMK based on
Authorization 930

Communicate the Encrypted NMK
to Requesting Station 940

**FIG. 34**

FIG. 35

EP 2 165 487 B1

FIG. 36

500

510

520

New CPE

(1)

(4)

NTU

(2)

(3)

Authorization
Server

(5)

(6)

530

Backhaul Network

FIG. 37

FIG. 38

EP 2 165 487 B1

FIG. 39

```
                                              ┌─ 800
         ┌─────────────────────────┐
         │    Receive Forwarded    │
         │  Encrypted Connection   │
         │        Request          │
         └─────────────────────────┘
                      │
                      ▼              ┌─ 805
         ┌─────────────────────────┐
         │  Identify a First Unique│
         │ Identifier associated   │
         │  with the               │
         │  Connection Request     │
         └─────────────────────────┘
                      │
                      ▼              ┌─ 810
         ┌─────────────────────────┐
         │  Locate an NMK associated│
         │  with the First Unique  │
         │        Identifier       │
         └─────────────────────────┘
                      │
                      ▼              ┌─ 815
         ┌─────────────────────────┐
         │    Authorize Forwarded  │
         │  Encrypted Connection   │
         │        Request          │
         └─────────────────────────┘
                      │
                      ▼              ┌─ 820
         ┌─────────────────────────┐
         │       Encrypt NMK       │
         └─────────────────────────┘
                      │
                      ▼              ┌─ 825
         ┌─────────────────────────┐
         │   Communicate Encrypted │
         │        NMK to NTU       │
         └─────────────────────────┘
```

## FIG. 40

FIG. 41

FIG. 42

# FIG. 43

TDMA Period Start Time
( TPST) of the Access
Network

TDMA Period

510

B

TPST Offset

520

TPST Offset

B

530

540

TPST Offset from
Local Zero Cross

550

TPST Offset from
Local Zero Cross

215

Head
End

Beacon
Level=0

225a

RP-1

Beacon
Level=1

225b

RP-2

Beacon
Level=2

EP 2 165 487 B1

FIG. 44

EP 2 165 487 B1

|  | | Local Start Time 715 = Guaranteed Start Time | Local End Time 720 = Guaranteed End Time |
|---|---|---|---|
| 700 Access | Stay-out 725 | Reserved 730 | |
| 705 In- home #1 | Other Regions 735 | Stay-out 740 | |
| 710 In- home #2 | Other Regions 745 | Stay-out 750 | |

FIG. 45

830 ⌐
⌐ Local
Start
Time

715 ⌐
⌐ Guaranteed
StartTime

720 ⌐
⌐ Local End Time
= Guaranteed
End Time

810 ⌐

700 ⌐

| Access | Stay- out | Reserved |
|---|---|---|
| | ⌐800 | 815 |
| In- home #1 | Other Regions | Stay- out |
| | ⌐805 | 820 |
| In- home #2 | Other Regions | Stay- out |
| | | 825 |

705 ⌐

710 ⌐

## FIG. 46

715 ⌐

Guaranteed
Start
Time

905 ⌐
Local
Start
Time

720 ⌐
Local End Time
= Guaranteed
End Ttime

910 ⌐

700 ⌐

| Access | Stay- out | Reserved |
|---|---|---|
| | 915 ⌐ | 900 |
| In- home #1 | Other Regions | Stay- out |
| | 925 ⌐ | 920 |
| In - home #2 | Other Regions | Stay- out |
| | | 930 |

705 ⌐

710 ⌐

## FIG. 47

```
                                                              ┌ 1030
   ┌─────────────────────────────────────────────────────┐
   │                                                     │
   │  Determine a Guaranteed Interval Period Based on a   │
   │   Policy at One or More Stations in an Access Network│
   │                                                     │
   └─────────────────────────────────────────────────────┘
                              │
                              │             ┌ 1032
                              ▼
   ┌─────────────────────────────────────────────────────┐
   │  Determine at the One or More Stations in the Access │
   │  Network a First Interval Start Time and a First     │
   │  Interval End Time Within a Periodic Interval of Time│
   └─────────────────────────────────────────────────────┘
                              │
                              │             ┌ 1034
                              ▼
   ┌─────────────────────────────────────────────────────┐
   │  Provide the First Interval Start Time and the First │
   │  Interval End Time of the One or More Stations to One│
   │           or More In-Home Networks                   │
   └─────────────────────────────────────────────────────┘
                              │
                              │             ┌ 1036
                              ▼
   ┌─────────────────────────────────────────────────────┐
   │  Determine an In-Home Interval Period Based on the   │
   │ First Interval Start Time and the First Interval End Time│
   │  of the One or More Stations in the Access Network   │
   └─────────────────────────────────────────────────────┘
```

# FIG. 48

FIG. 49

TDMA Schedule Period

Δ

AC Line Cycle

Δ

400

420

| 402 | 404 | 406 |
|-----|-----|-----|
|     |     |     |
| Contention Period | Stay-out Period | Contention Free Period # 1 |

FIG. 50

FIG. 51

TDMA Period Start Time
( TPST) of the Access
Network

TDMA Period

510

B

TPST Offset

520

TPST Offset

B

530

TPST Offset from
Local Zero Cross

540

550

TPST Offset from
Local Zero Cross

Head
End

215

Beacon
Level=0

RP-1

225a

Beacon
Level=1

RP-2

225b

Beacon
Level=2

EP 2 165 487 B1

FIG. 52

FIG. 53

FIG. 54

EP 2 165 487 B1

900

910

Receive foreign requests for allocation of bandwidth

920

Generate coexistence frame requesting allocation of bandwidth for a local network

930

Transmit coexistence frame to foreign networks

940

Delay utilization of the requested allocation of bandwidth by reservation period

# FIG. 55

FIG. 56

205b

CPE

CPE

220b

NTU

205a

220a

NTU

CPE

205c

CPE

220c

NTU

225a

Repeater

225b

Repeater

225d

Repeater

225c

Repeater

220d

NTU

205d

CPE

230

Registration Server/
Authorization Server

215

Headend

210

Backhaul Network

EP 2 165 487 B1

FIG. 57

FIG. 58

FIG. 59

FIG. 60

EP 2 165 487 B1

EP 2 165 487 B1

```
┌─────────────────────────────┐ ⌐ 800
│                             │
│     Provide a Key Counter   │
│                             │
└─────────────────────────────┘
              │
              ▼
┌ ─ ─ ─ ─ ─ ─ ─ ─ ─ ─ ─ ─ ─ ─ ┐ ⌐ 810
│                             │
│     Increment Key Counter   │
│                             │
└ ─ ─ ─ ─ ─ ─ ─ ─ ─ ─ ─ ─ ─ ─ ┘
              │
              ▼
┌─────────────────────────────┐ ⌐ 820
│     Send a Key Rotation      │
│    Communicaiton with       │
│   Incremented Key Counter   │
└─────────────────────────────┘
```

**FIG. 61**

```
┌─────────────────────────────┐ ⌐ 900
│                             │
│     Receive a Key Counter   │
│                             │
└─────────────────────────────┘
              │
              ▼
┌─────────────────────────────┐ ⌐ 910
│     Receive Key Rotation     │
│        Communication        │
│                             │
└─────────────────────────────┘
              │
              ▼
┌─────────────────────────────┐ ⌐ 920
│                             │
│     Increment Key Counter   │
│                             │
└─────────────────────────────┘
              │
              ▼
┌─────────────────────────────┐ ⌐ 930
│                             │
│     Authenticate New Key    │
│                             │
└─────────────────────────────┘
```

**FIG. 62**

FIG. 63

FIG. 64

410b
410c
410d
410a
450
420b
450
400
470
430
460
Repeater
Headend
Authorization Server
410e
460
420a
420c
410f
460
Repeater
Repeater
410g
410h

EP 2 165 487 B1

122

EP 2 165 487 B1

FIG. 65

FIG. 66

EP 2 165 487 B1

FIG. 67

```
                                    ┌─ 700
┌─────────────────────────┐
│  Generate Pseudo-Random │
│         Number          │
└─────────────────────────┘
            │
            ▼               ┌─ 710
┌─────────────────────────┐
│     Send EMK Request     │
│                         │
└─────────────────────────┘
            │
            ▼               ┌─ 720
┌─────────────────────────┐
│  Receive Response to EMK │
│        Request          │
└─────────────────────────┘
            │
            ▼               ┌─ 730
┌─────────────────────────┐
│  Authenticate Response using │
│          Nonce          │
└─────────────────────────┘
```

FIG. 67

```
                                    ┌─ 800
┌─────────────────────────┐
│    Receive EMK Request   │
│                         │
└─────────────────────────┘
            │
            ▼               ┌─ 810
┌─────────────────────────┐
│  Encrypt a First Response│
│   including a First Nonce│
└─────────────────────────┘
            │
            ▼               ┌─ 820
┌─────────────────────────┐
│ Encrypt a Second Response│
│  including a Second Nonce│
└─────────────────────────┘
            │
            ▼               ┌─ 830
┌─────────────────────────┐
│ Communicate First and Second │
│         Responses        │
└─────────────────────────┘
```

FIG. 68

EP 2 165 487 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030048183 A1
- US 20030137993 A1
- EP 1748597 A1

- US 720742 A
- US 20050114489 A